(19) **Europäisches Patentamt / European Patent Office / Office européen des brevets**

(11) **EP 4 654 502 A1**

(12) **EUROPEAN PATENT APPLICATION**
published in accordance with Art. 153(4) EPC

(43) Date of publication:
**26.11.2025 Bulletin 2025/48**

(21) Application number: **24752802.9**

(22) Date of filing: **02.02.2024**

(51) International Patent Classification (IPC):
**H04L 1/00** (2006.01)

(52) Cooperative Patent Classification (CPC):
**H04L 1/00; H04L 1/06; H04W 28/06**

(86) International application number:
**PCT/CN2024/075449**

(87) International publication number:
**WO 2024/164946 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 CN 202310128738**

(71) Applicant: **Huawei Technologies Co., Ltd.**
**Shenzhen, Guangdong 518129 (CN)**

(72) Inventors:
- **CHEN, Jiaxuan**
  **Shenzhen, Guangdong 518129 (CN)**
- **PANG, Jiyong**
  **Shenzhen, Guangdong 518129 (CN)**
- **JIN, Huangping**
  **Shenzhen, Guangdong 518129 (CN)**
- **SUN, Yan**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **INFORMATION INTERACTION METHOD AND APPARATUS, AND READABLE STORAGE MEDIUM**

(57) This application relates to the mobile communication field, and may be applied to a protocol framework such as LTE, NR, or 6G, and in particular, relates to an information exchange method, an apparatus, and a readable storage medium. The method includes: When uplink feedback information fails to be transmitted, a base station sends first information to UE, to determine historical state information of the UE. The UE inputs the historical state information determined based on the first information and channel information that is currently measured or predicted into an encoder for processing, to obtain feedback information, and sends the feedback information to the base station. According to embodiments of this application, state information on a UE side (or input by the encoder) can keep consistent with state information on a base station side (or input by a decoder), thereby improving decoding performance of the base station side (or the decoder), reducing a communication performance loss, and improving communication quality.

FIG. 7

## Description

This application claims priority to Chinese Patent Application No. 202310128738.5, filed with the China National Intellectual Property Administration on February 6, 2023 and entitled "INFORMATION EXCHANGE METHOD, APPARATUS, AND READABLE STORAGE MEDIUM", which is incorporated herein by reference in its entirety.

## TECHNICAL FIELD

This application relates to the field of communication technologies, and in particular, to an information exchange method, an apparatus, and a readable storage medium.

## BACKGROUND

With development of wireless communication technologies, to support more services and meet higher requirements on indicators such as a system capacity and a communication delay, scales of antenna arrays are continuously growing, and there are increasingly more supported frequency bands. As a result, a communication system becomes more complex. Therefore, improving performance of a complex communication system by using artificial intelligence (artificial intelligence, AI), for example, deep learning (deep learning, DL), becomes an important research direction. For example, application values of artificial intelligence (AI) in many wireless communication technologies such as channel state information (channel state information, CSI) feedback, beam management, and pilot design management are continuously disclosed with in-depth research in the academic field. On this basis, the combination of AI and wireless communication has gradually shifted from academic research to practical application.

In a wireless communication link, channels of medium- and low-speed users change continuously in time. Therefore, communication performance may be improved by mining a channel time-domain correlation. For example, channel prediction is implemented by mining a channel time-domain correlation, to counteract a channel aging problem; or channel information is compressed by mining a channel time-domain correlation, to reduce overheads of feeding back channel information. For example, when both user equipment (user equipment, UE) and a base station (base station, BS) perform data processing by using a channel time-domain correlation, the UE may input current channel information and state information output last time by an encoder (encoder) into the encoder for processing, and output feedback information and new state information. Correspondingly, the base station may input currently received feedback information and state information output last time by a decoder (decoder) into the decoder for processing, and output restored (or predicted) channel information and new state information.

At present, the mining of the channel time-domain correlation benefits from synchronous update of the state information output by the encoder on the UE side and the state information output by the decoder on the base station side. When a piece of feedback information of the UE fails to be transmitted due to reasons such as poor instantaneous channel quality, the base station (base station, BS) cannot update state information on the base station side, and consequently decoding performance of the base station side may be degraded.

## SUMMARY

Embodiments of this application provide an information exchange method, an apparatus, and a readable storage medium, so that state information on a UE side (or input by an encoder) can keep consistent with state information on a base station side (or input by a decoder), thereby improving decoding performance of the base station side (or the decoder), reducing a communication performance loss, and improving communication quality.

The following describes this application from different aspects. It should be understood that the following implementations and beneficial effects of different aspects may be mutually referenced.

According to a first aspect, this application provides an information exchange method. The method includes: An encoding apparatus (for example, UE) receives first information sent by a decoding apparatus (for example, a base station), where the first information is for determining historical state information $e_{his}$ of the encoding apparatus. The encoding apparatus determines the historical state information $e_{his}$ based on the first information, and may input the historical state information $e_{his}$ and first channel information into an encoder for processing, to obtain first feedback information. Then, the encoding apparatus sends the first feedback information to the decoding apparatus, where the first feedback information includes encoding information of the first channel information or encoding information of predicted channel information. The historical state information $e_{his}$ reflects one or more pieces of historical channel information obtained before the first channel information is obtained.

In some scenarios, the first channel information may be channel information obtained through measurement, for example, channel information obtained by the encoding apparatus by measuring a currently received reference signal. In this case, the first feedback information may be encoding information (for example, compression information) of the first channel information, or may be encoding information (for example, compression information) of channel information predicted based on the first channel information. In other words, when the first channel information is channel information obtained through actual measurement, the encoder may be configured to perform prediction and compression, or may be configured to perform compression. In some other scenarios, the first channel information may be predicted channel information. In this case, the first feedback information may be the encoding information (for example, compression information) of the first channel information. In other words, when the first channel information itself is predicted channel information, the encoder may be configured to compress the first channel information.

After receiving the first information, the encoding apparatus in this application may no longer use state information obtained last time as an input of the encoder during a current time of running, but may use the historical state information $e_{his}$ as the input of the current running of the encoder, to generate and send the first feedback information. Therefore, the decoding apparatus can control state information input by the encoder in the encoding apparatus, so that the state information input by the encoder can keep consistent with state information input by a decoder, thereby improving decoding performance, reducing a communication performance loss, and improving communication quality.

With reference to the first aspect, in a possible implementation, first state information may be obtained by inputting the historical state information $e_{his}$ and the first channel information into the encoder for processing. The first state information may reflect one or more pieces of historical channel information including the first channel information.

With reference to the first aspect, in a possible implementation, the first channel information may be determined based on CSI.

The channel information in this application may be for representing a channel, and may be understood as an expression of a channel status. Details are not further described below. For example, the channel information in this application may be CSI. The CSI may be a channel response matrix, an eigenvector obtained by performing singular value decomposition on a channel response matrix, a matrix including a plurality of eigenvectors, or a projection coefficient obtained by projecting an eigenvector to a space-frequency domain. This is not limited in this application.

With reference to the first aspect, in a possible implementation, the encoder may be an AI model.

With reference to the first aspect, in a possible implementation, before the encoding apparatus receives the first information sent by the decoding apparatus, the method further includes: The encoding apparatus inputs second channel information and state information $e_{t-1}$ into the encoder for processing, to obtain second feedback information; and the encoding apparatus sends the second feedback information to the decoding apparatus. The state information $e_{t-1}$ may reflect one or more pieces of historical channel information obtained before the second channel information is obtained.

Optionally, after the second channel information and the state information $e_{t-1}$ are input into the encoder for processing, second state information is further output. The second state information reflects one or more pieces of historical channel information including the second channel information.

Optionally, the first feedback information is a $k^{th}$ piece of feedback information after the second feedback information is sent, where k is a positive integer.

With reference to the first aspect, in a possible implementation, before the encoding apparatus receives the first information sent by the decoding apparatus, the method further includes: The encoding apparatus receives second information sent by the decoding apparatus, where the second information indicates one or more of the following: whether the encoding apparatus performs periodic storage, a storage periodicity, or a start moment of the storage periodicity; and if the second information indicates the encoding apparatus to perform periodic storage, the encoding apparatus periodically stores, based on an indication of the second information, state information output by the encoder.

Optionally, that the encoding apparatus periodically stores, based on the indication of the second information, the state information output by the encoder includes: The encoding apparatus temporarily stores (in an $n^{th}$ storage periodicity) state information $e_{n(T/S)-k}$ obtained by the encoding apparatus in an $(n(T/S)-k)^{th}$ feedback time period; the encoding apparatus receives, in an $(n(T/S))^{th}$ feedback time period, third information sent by the decoding apparatus, where the third information indicates the encoding apparatus to store state information stored by the encoding apparatus in an $((n-1)*(T/S))^{th}$ feedback time period, or the third information indicates the encoding apparatus to store the state information $e_{n(T/S)-k}$ obtained in the $(n(T/S)-k)^{th}$ feedback time period; and the encoding apparatus stores corresponding state information based on an indication of the third information. For specific implementation, refer to descriptions of the following method embodiment 3, and only brief descriptions are provided herein.

For example, different meanings may be represented by using values of the third information. When a value of the third information is a first value, the encoding apparatus stores, in the $(n(T/S))^{th}$ feedback time period, the state information stored in the $((n-1)*(T/S))^{th}$ feedback time period. When the value of the third information is a second value, the encoding apparatus stores, in the $(n(T/S))^{th}$ feedback time period, the state information $e_{n(T/S)-k}$ obtained in the $(n(T/S)-k)^{th}$ feedback time period.

For example, if an $(n(T/S)-k)^{th}$ feedback of the encoding apparatus succeeds, the third information may be set to the second value; and if the $(n(T/S)-k)^{th}$ feedback of the encoding apparatus fails, the third information may be set to the first value. The first value is 0, and the second value is 1; or the first value is 1, and the second value is 0. This is not limited in this application.

n, k, S, and T are all positive integers, T represents a storage periodicity, and S represents a feedback periodicity. One storage periodicity T is an integer multiple of one feedback periodicity S, and one feedback periodicity is for describing a sending time interval between two adjacent pieces of feedback information.

The "feedback time period" mentioned in this application may be a short period of time, and feedback information needs to be fed back once in a feedback time period. Details are not described below. The "feedback time period" mentioned in this application may be understood as being periodic, and a time interval between two adjacent feedback time periods may be understood as one feedback periodicity. Details are not described below again. For example, an interval between an end time point of a $1^{st}$ feedback time period in two adjacent feedback time periods and a start time point of a $2^{nd}$ feedback time period may be understood as one feedback periodicity. Alternatively, an interval between sending time points or receiving time points of two adjacent pieces of feedback information may be understood as one feedback periodicity. The feedback periodicity in this application may be flexibly set, and is not limited to the foregoing descriptions.

Optionally, after the encoding apparatus receives the first information sent by the decoding apparatus, the method further includes: The encoding apparatus determines that the historical state information $e_{his}$ is state information stored in a previous storage periodicity before the encoding apparatus receives the first information.

The encoding apparatus in this application periodically stores state information based on an indication of the decoding apparatus, so that the encoding apparatus rolls back state information, and running complexity of the encoding apparatus can be reduced. In addition, for a same feedback, state information input by the encoder is consistent with state information input by the decoder, thereby improving decoding performance, reducing a communication performance loss, and improving communication quality.

With reference to the first aspect, in a possible implementation, before the encoding apparatus receives the first information sent by the decoding apparatus (which may be specifically before the encoding apparatus sends the second feedback information), the method further includes: The encoding apparatus receives, in a $t^{th}$ feedback time period, fourth information sent by the decoding apparatus, where the fourth information indicates the encoding apparatus to store state information obtained in a feedback time period previous to the $t^{th}$ feedback time period, where t is a positive integer; and the encoding apparatus stores, based on an indication of the fourth information, the state information $e_{t-1}$ obtained by the encoding apparatus in the feedback time period (that is, a $(t-1)^{th}$ feedback time period) previous to the $t^{th}$ feedback time period. For example, after the encoding apparatus receives the first information sent by the decoding apparatus, the method further includes: The encoding apparatus determines that the historical state information $e_{his}$ is the state information $e_{t-1}$ stored after the encoding apparatus receives the fourth information. For specific implementation, refer to descriptions of the following method embodiment 5, and only brief descriptions are provided herein. For another example, after receiving the first information sent by the decoding apparatus, the encoding apparatus may input the state information $e_{t-1}$ and the first channel information that are stored after the encoding apparatus receives the fourth information into the encoder for processing, to obtain the first feedback information, without an operation or a step of determining that the historical state information $e_{his}$ is the state information $e_{t-1}$.

The encoding apparatus in this application stores state information that is at a specific moment based on an indication (that is, the fourth information) of the decoding apparatus, so that the encoding apparatus can roll back the state information when feedback information fails to be transmitted, and further, running complexity of the encoding apparatus can be reduced. In addition, the encoding apparatus determines the historical state information based on the indication of the decoding apparatus. In this way, for a same feedback, state information input by the encoder can be consistent with state information input by the decoder, thereby improving decoding performance, reducing a communication performance loss, and improving communication quality.

With reference to the first aspect, in a possible implementation, before the encoding apparatus receives the first information sent by the decoding apparatus (which may be specifically after the encoding apparatus sends the second feedback information), the method further includes: The encoding apparatus receives, in a $t^{th}$ feedback time period, fourth information sent by the decoding apparatus, where the fourth information indicates the encoding apparatus to store state information obtained in a feedback time period previous to the $t^{th}$ feedback time period, where t is a positive integer; the encoding apparatus temporarily stores, based on an indication of the fourth information, the state information $e_{t-1}$ obtained by the encoding apparatus in the feedback time period (that is, a $(t-1)^{th}$ feedback time period) previous to the $t^{th}$ feedback time period; the encoding apparatus receives, in a $(t+k-1)^{th}$ feedback time period, third information sent by the decoding apparatus, where the third information indicates the encoding apparatus to store the state information $e_{t-1}$ temporarily stored after the fourth information is received in the $t^{th}$ feedback time period, or the third information indicates the encoding apparatus to store state information stored when a previous piece of third information is received; and the encoding apparatus stores corresponding state information based on an indication of the third information. For specific implementation, refer to descriptions of the following method embodiment 6, and only brief descriptions are provided herein.

For example, different meanings may be represented by using values of the third information. When a value of the third information is a first value, the encoding apparatus stores the state information stored when the previous piece of third information is received. When the value of the third information is a second value, the encoding apparatus stores the state information $e_{t-1}$ temporarily stored after the fourth information is received in the $t^{th}$ feedback time period. k is a positive integer.

Optionally, after the encoding apparatus receives the first information sent by the decoding apparatus, the method further includes: The encoding apparatus determines that the historical state information $e_{his}$ is the state information stored after the third information is received. Optionally, after receiving the first information sent by the decoding apparatus, the encoding apparatus may input the first channel information and the state information that is stored after the encoding apparatus receives the third information into the encoder for processing, to obtain the first feedback information, without an operation or a step of determining that the historical state information $e_{his}$ is the state information stored after the encoding apparatus receives the third information.

The encoding apparatus in this application stores state information that is at a specific moment based on an indication (the fourth information) of the decoding apparatus, so that the encoding apparatus can roll back the state information when feedback information fails to be transmitted, and further, running complexity of the encoding apparatus can be reduced. Moreover, the encoding apparatus in this application can temporarily store the state information, so that impact of a delay in sensing and delivering the first information by the decoding apparatus on the state information rollback can be processed. In addition, the encoding apparatus further determines, based on the indication (that is, the first information) of the decoding apparatus, whether to use the historical state information as an input of the encoder. In this way, for a same feedback, state information input by the encoder can be consistent with state information input by the decoder, thereby improving decoding performance, reducing a communication performance loss, and improving communication quality.

With reference to the first aspect, in a possible implementation, before the encoding apparatus receives the first information sent by the decoding apparatus, the method further includes: The encoding apparatus inputs second channel information and the historical state information $e_{his}$ into the encoder for processing, to obtain second feedback information; and the encoding apparatus sends the second feedback information to the decoding apparatus. Optionally, after the second channel information and the historical state information $e_{his}$ are input into the encoder for processing, second state information is further output. The historical state information $e_{his}$ is historical state information output by the encoder during a specific time of running; and in a next feedback, whether to replace the historical state information $e_{his}$ with the second state information is indicated by the decoding apparatus. The historical state information $e_{his}$ may reflect one or more pieces of historical channel information obtained before the second channel information is obtained, and the second state information may reflect one or more pieces of historical channel information including the second channel information.

Optionally, after the encoding apparatus receives the first information sent by the decoding apparatus, the method further includes: The encoding apparatus updates the historical state information $e_{his}$ to state information output by the encoder in a feedback time period previous to current time. For specific implementation, refer to descriptions of the following method embodiment 4. Details are not described herein.

The encoding apparatus in this application always uses the stored historical state information $e_{his}$ as the input of the encoder. In this way, the encoding apparatus does not use mismatched state information as the input of the encoder when feedback information of the encoding apparatus is not successfully transmitted to the decoding apparatus. Therefore, state information input by the encoder is consistent with state information input by the decoder, thereby improving decoding performance, reducing a communication performance loss, and improving communication quality. In addition, the encoding apparatus updates the historical state information $e_{his}$ based on the indication (that is, the first information) of the decoding apparatus, so that the historical state information $e_{his}$ includes recent historical channel information, to implement mining of a channel time-domain correlation.

With reference to the first aspect, in a possible implementation, the encoding apparatus receives the first information in a $q^{th}$ feedback time period (or after a $(q-1)^{th}$ feedback time period), where the first information includes or indicates a step size m of state information rollback, where m is a positive integer. The historical state information $e_{his}$ may be state information $e_{q-m-1}$ input by the encoder at a $(q-m)^{th}$ time, that is, $e_{his}=e_{q-m-1}$. For a specific implementation of the historical state information $e_{his}$, refer to descriptions in the following method embodiment 2. Details are not described herein. State information input by the encoder at a $q^{th}$ time is the historical state information $e_{his}$. q is a positive integer greater than m.

The decoding apparatus in this application indicates the encoder of the encoding apparatus to roll back state information to a specific piece of historical state information $e_{his}$. In this way, for a same feedback, state information input by the encoder is consistent with state information input by the decoder, thereby improving decoding performance, reducing a communication performance loss, and improving communication quality.

With reference to the first aspect, in a possible implementation, before the encoding apparatus receives the first information sent by the decoding apparatus, the method further includes: The encoding apparatus receives fifth information sent by the decoding apparatus, where the fifth information indicates the encoding apparatus to receive the first information with a delay of k feedback periodicities after sending feedback information. k is a positive integer.

Optionally, k is greater than or equal to the step size (or an amount) m of the state information rollback.

In this application, the fifth information indicates latest time at which the first information can be received, so that the encoding apparatus subsequently determines a feedback success or failure.

According to a second aspect, this application provides an information exchange method. The method includes: A decoding apparatus (for example, a base station) sends first information to an encoding apparatus (for example, UE), where the first information is for determining historical state information $e_{his}$ of the encoding apparatus; and the decoding apparatus receives first feedback information sent by the encoding apparatus, where the first feedback information is determined based on first channel information and the historical state information $e_{his}$ of the encoding apparatus (for example, output after the first channel information and the historical state information $e_{his}$ of the encoding apparatus are input into an encoder). The first feedback information and historical state information $d_{his}$ of the decoding apparatus are input together into a decoder for processing, to obtain third channel information. In other words, the decoding apparatus may input the first feedback information and the historical state information $d_{his}$ of the decoding apparatus into the decoder for processing, to obtain the third channel information. The historical state information $e_{his}$ reflects one or more pieces of historical channel information obtained before the first channel information is obtained, and the historical state information $d_{his}$ reflects one or more pieces of historical feedback information obtained before the first feedback information is obtained. The first feedback information includes encoding information of the first channel information or encoding information of predicted channel information.

For example, when the feedback information fails to be transmitted, the decoding apparatus sends the first information to the encoding apparatus. Certainly, when the feedback information is successfully transmitted, the decoding apparatus may also send the first information to the encoding apparatus. A scenario in which the decoding apparatus sends the first information is not limited in this application.

The decoding apparatus in this application controls an input of the encoder in the encoding apparatus by delivering information (the foregoing first information), so that state information input by the encoder can keep consistent with state information input by the decoder, thereby improving decoding performance, reducing a communication performance loss, and improving communication quality.

With reference to the second aspect, in a possible implementation, the first feedback information and the historical state information $d_{his}$ are input into the decoder for processing, to obtain third state information. The third state information may reflect one or more pieces of historical feedback information including the first feedback information.

With reference to the second aspect, in a possible implementation, the first channel information may be determined based on CSI.

With reference to the second aspect, in a possible implementation, the encoder may be a first AI model, and the decoder may be a second AI model.

With reference to the second aspect, in a possible implementation, before the decoding apparatus sends the first information to the encoding apparatus, the method further includes: The decoding apparatus sends second information to the encoding apparatus, where the second information indicates one or more of the following: whether the encoding apparatus performs periodic storage, a storage periodicity, or a start moment of the storage periodicity. If the second information indicates the encoding apparatus to perform periodic storage, the decoding apparatus periodically stores, based on the storage periodicity and/or the start moment of the storage periodicity, state information output by the decoder.

Optionally, that the decoding apparatus periodically stores, based on the storage periodicity and/or the start moment of the storage periodicity, state information output by the decoder includes: The decoding apparatus temporarily stores (in an $n^{th}$ storage periodicity), state information $d_{n(T/S)-k}$ obtained by the decoding apparatus in an $(n(T/S)-k)^{th}$ feedback time period. The decoding apparatus sends third information to the encoding apparatus before an $(n(T/S))^{th}$ feedback time period, where the third information indicates the encoding apparatus to store state information stored in an $((n-1)*(T/S))^{th}$ feedback time period, or the third information indicates the encoding apparatus to store state information $e_{n(T/S)-k}$ obtained in the $(n(T/S)-k)^{th}$ feedback time period. The decoding apparatus stores, based on the third information, state information stored by the decoding apparatus in the $((n-1)*(T/S))^{th}$ feedback time period, or stores the state information $d_{n(T/S)-k}$ obtained by the decoding apparatus in the $(n(T/S)-k)^{th}$ feedback time period. For specific implementation, refer to descriptions of the following method embodiment 3, and only brief descriptions are provided herein.

For example, if the decoding apparatus successfully receives an $(n(T/S)-k)^{th}$ piece of feedback information (or an $(n(T/S)-k)^{th}$ feedback), the decoding apparatus sets the third information to the second value and sends the third information to the encoding apparatus, and may store state information, that is, $d_{n(T/S)-k}$, output by the decoder at an $(n(T/S)-k)^{th}$ time. If the decoding apparatus does not receive the $(n(T/S)-k)^{th}$ piece of feedback information, the decoding apparatus sets the third information to the first value and sends the third information to the encoding apparatus, and stores state information stored in an $((n-1)*(T/S))^{th}$ feedback time period. For example, the first value is 0, and the second value is 1; or the first value is 1, and the second value is 0. This is not limited in this application.

n, k, S, and T are all positive integers, T represents a storage periodicity, and S represents a feedback periodicity. One storage periodicity T is an integer multiple of one feedback periodicity S, and one feedback periodicity is for describing a sending time interval between two adjacent pieces of feedback information.

Optionally, after the decoding apparatus sends the first information to the encoding apparatus, the method further includes: The decoding apparatus determines that the historical state information $d_{his}$ is state information stored in a previous storage periodicity before the decoding apparatus sends the first information. Optionally, after sending the first information, the decoding apparatus may alternatively input the first feedback information and the state information that is stored in the previous storage periodicity before the decoding apparatus sends the first information into the decoder for processing, to obtain the third channel information, without an operation or a step of determining that the historical state information $d_{his}$ is the state information stored in the previous storage periodicity before the decoding apparatus sends the first information.

After the decoding apparatus in this application indicates (that is, the second information) the encoding apparatus to periodically store the state information, the decoding apparatus also periodically stores the state information, so that the decoding apparatus rolls back state information.

With reference to the second aspect, in a possible implementation, before the decoding apparatus sends the first information to the encoding apparatus, the method further includes: The decoding apparatus sends fourth information to the encoding apparatus before the $t^{th}$ feedback time period, where the fourth information indicates the encoding apparatus to store state information obtained in a feedback time period previous to the $t^{th}$ feedback time period, where t is a positive integer. The decoding apparatus stores state information $d_{t-1}$ obtained by the decoding apparatus in the feedback time period (that is, a $(t-1)^{th}$ feedback time period) previous to the $t^{th}$ feedback time period. For example, after the decoding apparatus sends the first information to the encoding apparatus, the method further includes: The decoding apparatus determines that the historical state information $d_{his}$ is the state information $d_{t-1}$ stored after the decoding apparatus sends the fourth information. For specific implementation, refer to descriptions of the following method embodiment 5, and only brief descriptions are provided herein. For another example, after sending the first information to the encoding apparatus, the decoding apparatus may alternatively input the first feedback information and the state information $d_{t-1}$ that is stored after the decoding apparatus sends the fourth information into the decoder for processing, to obtain the third channel information, without an operation or a step of determining that the historical state information $d_{his}$ is the state information $d_{t-1}$.

With reference to the second aspect, in a possible implementation, before the decoding apparatus sends the first information to the encoding apparatus, the method further includes: The decoding apparatus sends fourth information to the encoding apparatus before the $t^{th}$ feedback time period, where the fourth information indicates the encoding apparatus to store state information obtained in a feedback time period previous to the $t^{th}$ feedback time period, where t is a positive integer. The decoding apparatus temporarily stores state information $d_{t-1}$ obtained by the decoding apparatus in the feedback time period previous to the $t^{th}$ feedback time period. The decoding apparatus sends third information to the encoding apparatus before a $(t+k-1)^{th}$ feedback time period, where the third information indicates the encoding apparatus to store state information $e_{t-1}$ temporarily stored after the fourth information is received in the $t^{th}$ feedback time period, or the third information indicates the encoding apparatus to store state information stored when a previous piece of third information is received. The decoding apparatus based on the third information stores the state information $d_{t-1}$ temporarily stored after the decoding apparatus sends the fourth information, or storing state information that is stored when the decoding apparatus sends the previous piece of third information. k is a positive integer. For specific implementation, refer to descriptions of the following method embodiment 6, and only brief descriptions are provided herein.

For example, if the second feedback information is successfully transmitted, the decoding apparatus sets a value of the third information to the second value, sends the third information to the encoding apparatus, and stores the state information $d_{t-1}$ temporarily stored in the $t^{th}$ feedback time period. If the second feedback information fails to be transmitted, the decoding apparatus sets the value of the third information to the first value, sends the third information to the encoding apparatus, and stores the state information stored when the previous piece of third information is sent. k is a positive integer.

Optionally, after the decoding apparatus sends the first information to the encoding apparatus, the method further includes: The decoding apparatus determines that the historical state information $d_{his}$ is the state information stored after the third information is sent. Optionally, after sending the first information to the encoding apparatus, the decoding apparatus may alternatively input the first feedback information and the state information that is stored after the decoding apparatus sends the third information into the decoder for processing, to obtain the third channel information, without an operation or a step of determining that the historical state information $d_{his}$ is the state information stored after the decoding apparatus sends the third information.

With reference to the second aspect, in a possible implementation, after the decoding apparatus sends the first information to the encoding apparatus, the method further includes: The decoding apparatus updates the historical state information $d_{his}$ to state information output by the decoder in a feedback time period previous to current time. For specific implementation, refer to descriptions of the following method embodiment 4. Details are not described herein.

With reference to the second aspect, in a possible implementation, the decoding apparatus sends the first information before a $q^{th}$ feedback time period, where the first information includes or indicates a step size m of state information rollback, where m is a positive integer. The historical state information $d_{his}$ may be state information $d_{q-m-1}$ input by the decoder at a $(q-m)^{th}$ time, that is, $d_{his}=d_{q-m-1}$. For a specific implementation of the historical state information $d_{his}$, refer to descriptions in the following method embodiment 2. Details are not described herein. State information input by the decoder at a $q^{th}$ time is the historical state information $d_{his}$, where q is a positive integer greater than m.

With reference to the second aspect, in a possible implementation, before the decoding apparatus sends the first information to the encoding apparatus, the method further includes: The decoding apparatus sends fifth information to the encoding apparatus, where the fifth information indicates the encoding apparatus to receive first information with a delay of k feedback periodicities after sending feedback information. k is a positive integer.

Optionally, k is greater than or equal to the step size (or an amount) m of the state information rollback.

According to a third aspect, this application provides an encoding apparatus, where the encoding apparatus includes a transceiver unit and a processing unit. The transceiver unit is configured to receive first information sent by a decoding apparatus, where the first information is for determining historical state information $e_{his}$ of the encoding apparatus. The processing unit is configured to input, based on the first information, the historical state information $e_{his}$ and first channel information into the encoder for processing, to obtain first feedback information, where the historical state information $e_{his}$ reflects one or more pieces of historical channel information obtained before the first channel information is obtained. The transceiver unit is further configured to send the first feedback information to the decoding apparatus, where the first feedback information includes encoding information of the first channel information or encoding information of predicted channel information.

With reference to the third aspect, in a possible implementation, first state information may be obtained by inputting the historical state information $e_{his}$ and the first channel information into the encoder for processing. The first state information may reflect one or more pieces of historical channel information including the first channel information.

With reference to the third aspect, in a possible implementation, the first channel information may be determined based on CSI.

With reference to the third aspect, in a possible implementation, the encoder may be an AI model.

With reference to the third aspect, in a possible implementation, the transceiver unit is further configured to send second feedback information to the decoding apparatus, where the second feedback information is feedback information that is output after second channel information and state information $e_{t-1}$ are input into the encoder for processing, and the state information $e_{t-1}$ reflects one or more pieces of historical channel information obtained before the second channel information is obtained. The encoder further outputs second state information based on the second channel information and the state information $e_{t-1}$ that are input, and the second state information reflects one or more pieces of historical channel information including the second channel information.

Optionally, the first feedback information is a $k^{th}$ piece of feedback information after the second feedback information is sent, where k is a positive integer.

With reference to the third aspect, in a possible implementation, the transceiver unit is further configured to receive second information sent by the decoding apparatus, where the second information indicates one or more of the following: whether the encoding apparatus performs periodic storage, a storage periodicity, or a start moment of the storage periodicity. The processing unit is further configured to periodically store, based on an indication of the second information, state information output by the encoder.

Optionally, the processing unit is specifically configured to temporarily store state information $e_{n(T/S)-k}$ obtained by the encoding apparatus in an $(n(T/S)-k)^{th}$ feedback time period, where n, k, S, and T are all positive integers, T represents a storage periodicity, S represents a feedback periodicity, one storage periodicity T is an integer multiple of one feedback periodicity S, and one feedback periodicity is for describing a sending time interval between two adjacent pieces of feedback information. The transceiver unit is further configured to receive, in an $(n(T/S))^{th}$ feedback time period, third information sent by the decoding apparatus, where the third information indicates the encoding apparatus to store state information stored in an $((n-1)*(T/S))^{th}$ feedback time period, or the third information indicates the encoding apparatus to store the state information $e_{n(T/S)-k}$ obtained in the $(n(T/S)-k)^{th}$ feedback time period. The processing unit is further specifically configured to store corresponding state information based on an indication of the third information. For example, the processing unit is specifically configured to: when a value of the third information is a first value, store, in the $(n(T/S))^{th}$ feedback time period, the state information stored in the $((n-1)*(T/S))^{th}$ feedback time period; and when the value of the third information is a second value, store, in the $(n(T/S))^{th}$ feedback time period, the state information $e_{n(T/S)-k}$ obtained in the $(n(T/S)-k)^{th}$ feedback time period.

Optionally, the processing unit is further configured to determine that the historical state information $e_{his}$ is state information stored in a previous storage periodicity before the transceiver unit receives the first information.

With reference to the third aspect, in a possible implementation, the transceiver unit is further configured to receive, in a $t^{th}$ feedback time period, fourth information sent by the decoding apparatus, where the fourth information indicates the encoding apparatus to store state information obtained in a feedback time period previous to the $t^{th}$ feedback time period, where t is a positive integer. The processing unit is further configured to store, based on an indication of the fourth information, the state information $e_{t-1}$ obtained by the encoding apparatus in the feedback time period (that is, a $(t-1)^{th}$ feedback time period) previous to the $t^{th}$ feedback time period. The processing unit is further configured to determine that the historical state information $e_{his}$ is the state information $e_{t-1}$ stored after the encoding apparatus receives the fourth information.

With reference to the third aspect, in a possible implementation, the transceiver unit is further configured to receive, in a $t^{th}$ feedback time period, fourth information sent by the decoding apparatus, where the fourth information indicates the encoding apparatus to store state information obtained in a feedback time period previous to the $t^{th}$ feedback time period, where t is a positive integer. The processing unit is further configured to temporarily store, based on an indication of the fourth information, the state information $e_{t-1}$ obtained by the encoding apparatus in the feedback time period (that is, a $(t-1)^{th}$ feedback time period) previous to the $t^{th}$ feedback time period. The transceiver unit is further configured to receive, in a $(t+k-1)^{th}$ feedback time period, third information sent by the decoding apparatus, where the third information indicates the encoding apparatus to store the state information $e_{t-1}$ temporarily stored after the fourth information is received in the $t^{th}$ feedback time period, or the third information indicates the encoding apparatus to store state information stored when a previous piece of third information is received, where k is a positive integer. The processing unit is further configured to store corresponding state information based on an indication of the third information.

Optionally, the processing unit is further configured to determine that the historical state information $e_{his}$ is the state information stored after the third information is received.

With reference to the third aspect, in a possible implementation, the processing unit is further configured to update the historical state information $e_{his}$ to state information output by the encoder in a feedback time period previous to current time.

With reference to the third aspect, in a possible implementation, the first information includes or indicates a step size m of state information rollback, where m is a positive integer. The historical state information $e_{his}$ is the same as state information $e_{q-m-1}$ input by the encoder at a $(q-m)^{th}$ time, and state information input by the encoder at a $q^{th}$ time is the historical state information $e_{his}$, where q is a positive integer greater than m.

With reference to the third aspect, in a possible implementation, the transceiver unit is further configured to receive fifth information sent by the decoding apparatus, where the fifth information indicates the encoding apparatus to receive the first information with a delay of k feedback periodicities after sending feedback information, where k is a positive integer.

Optionally, k is greater than or equal to the step size (or an amount) m of the state information rollback.

According to a fourth aspect, this application provides a decoding apparatus, where the decoding apparatus includes a transceiver unit and a processing unit. The transceiver unit is configured to send first information to an encoding apparatus, where the first information is for determining historical state information $e_{his}$ of the encoding apparatus. The transceiver unit is further configured to receive first feedback information sent by the encoding apparatus, where the first feedback information is determined based on first channel information and the historical state information $e_{his}$ of the encoding apparatus (for example, the first feedback information is output after the first channel information and the historical state information $e_{his}$ of the encoding apparatus are input into an encoder for processing), where the historical state information $e_{his}$ reflects one or more pieces of historical channel information obtained before the first channel information is obtained, and the first feedback information includes encoding information of the first channel information or encoding information of predicted channel information. The first feedback information and historical state information $d_{his}$ of the decoding apparatus are input together into a decoder for processing, to obtain third channel information. In other words, the processing unit is configured to input the first feedback information and the historical state information $d_{his}$ of the decoding apparatus into the decoder for processing, to obtain the third channel information. The historical state information $d_{his}$ reflects one or more pieces of historical feedback information obtained before the first feedback information is obtained.

With reference to the fourth aspect, in a possible implementation, the first feedback information and the historical state information $d_{his}$ are input into the decoder for processing, to obtain third state information. The third state information may reflect one or more pieces of historical feedback information including the first feedback information.

With reference to the fourth aspect, in a possible implementation, the first channel information may be determined based on CSI.

With reference to the fourth aspect, in a possible implementation, the encoder may be a first AI model, and the decoder may be a second AI model.

With reference to the fourth aspect, in a possible implementation, the transceiver unit is further configured to send second information to the encoding apparatus, where the second information indicates one or more of the following: whether the encoding apparatus performs periodic storage, a storage periodicity, or a start moment of the storage periodicity. The processing unit is configured to periodically store based on the storage periodicity and/or the start moment of the storage periodicity, state information output by the decoder.

Optionally, the processing unit is specifically configured to temporarily store state information $d_{n(T/S)-k}$ obtained by the decoding apparatus in an $(n(T/S)-k)^{th}$ feedback time period, where n, k, S, and T are all positive integers, T represents a storage periodicity, S represents a feedback periodicity, one storage periodicity T is an integer multiple of one feedback periodicity S, and one feedback periodicity is for describing a sending time interval between two adjacent pieces of feedback information. The transceiver unit is further configured to send third information to the encoding apparatus before an $(n(T/S))^{th}$ feedback time period, where the third information indicates the encoding apparatus to store state information stored in an $((n-1)*(T/S))^{th}$ feedback time period, or the third information indicates the encoding apparatus to store state information $e_{n(T/S)-k}$ obtained in the $(n(T/S)-k)^{th}$ feedback time period. The processing unit is further configured to store, based on the third information, state information stored by the decoding apparatus in the $((n-1)*(T/S))^{th}$ feedback time period, or store the state information $d_{n(T/S)-k}$ obtained by the decoding apparatus in the $(n(T/S)-k)^{th}$ feedback time period.

For example, the processing unit is specifically configured to: when the transceiver unit successfully receives an $(n(T/S)-k)^{th}$ piece of feedback information (or an $(n(T/S)-k)^{th}$ feedback), set the third information to a second value, send the third information by using the transceiver unit, and store state information, that is, $d_{n(T/S)-k}$, output by the decoder at an $(n(T/S)-k)^{th}$ time; and when the transceiver unit does not receive the $(n(T/S)-k)^{th}$ piece of feedback information (or the $(n(T/S)-k)^{th}$ feedback), set the third information to the first value, send the third information by using the transceiver unit, and store the state information stored in the $((n-1)*(T/S))^{th}$ feedback time period.

Optionally, the processing unit is further configured to determine that the historical state information $d_{his}$ is state information stored in a previous storage periodicity before the decoding apparatus sends the first information.

With reference to the fourth aspect, in a possible implementation, the transceiver unit is further configured to send fourth information to the encoding apparatus before the $t^{th}$ feedback time period, where the fourth information indicates the encoding apparatus to store state information obtained in a feedback time period previous to the $t^{th}$ feedback time period, where t is a positive integer. The processing unit is further configured to store state information $d_{t-1}$ obtained by the decoding apparatus in the feedback time period previous to the $t^{th}$ feedback time period. The processing unit is further configured to determine that the historical state information $d_{his}$ is the state information $d_{t-1}$ stored after the decoding apparatus sends the fourth information.

With reference to the fourth aspect, in a possible implementation, the transceiver unit is further configured to send fourth information to the encoding apparatus before the $t^{th}$ feedback time period, where the fourth information indicates the encoding apparatus to store state information obtained in a feedback time period previous to the $t^{th}$ feedback time period, where t is a positive integer. The processing unit is further configured to temporarily store state information $d_{t-1}$ obtained by the decoding apparatus in the feedback time period previous to the $t^{th}$ feedback time period. The transceiver unit is further configured to send third information to the encoding apparatus before a $(t+k-1)^{th}$ feedback time period, where the third information indicates the encoding apparatus to store state information $e_{t-1}$ temporarily stored after the fourth information is received in the $t^{th}$ feedback time period, or the third information indicates the encoding apparatus to store state information stored when a previous piece of third information is received, where k is a positive integer. The processing unit is further configured to store, based on the third information, the state information $d_{t-1}$ temporarily stored after the decoding apparatus sends the fourth information, or storing state information that is stored when the decoding apparatus sends the previous piece of third information.

Optionally, the processing unit is further configured to determine that the historical state information $d_{his}$ is the state information stored after the third information is sent.

With reference to the fourth aspect, in a possible implementation, the processing unit is further configured to update the historical state information $d_{his}$ to state information output by the decoder in a feedback time period previous to current time.

With reference to the fourth aspect, in a possible implementation, the first information includes or indicates a step size m of state information rollback, where m is a positive integer. The historical state information $d_{his}$ is the same as state information $d_{q-m-1}$ input by the decoder at a $(q-m)^{th}$ time, and state information input by the decoder at a $q^{th}$ time is the historical state information $d_{his}$, where q is a positive integer greater than m.

With reference to the fourth aspect, in a possible implementation, the transceiver unit is further configured to send fifth information to the encoding apparatus, where the fifth information indicates the encoding apparatus to receive the first information with a delay of k feedback periodicities after sending feedback information, where k is a positive integer.

Optionally, k is greater than or equal to the step size (or an amount) m of the state information rollback.

According to a fifth aspect, this application provides an encoding apparatus. The encoding apparatus may include a processor, a transceiver, and a memory. The memory is configured to store a computer program, the transceiver is configured to receive/send various information, and the computer program includes program instructions. When the processor runs the program instructions, the encoding apparatus is enabled to perform the method according to any one of the first aspect or the possible implementations of the first aspect. The transceiver may be a radio frequency module in the communication apparatus, a combination of a radio frequency module and an antenna, or an input/output interface of a chip or a circuit.

According to a sixth aspect, this application provides a decoding apparatus. The decoding apparatus may include a processor, a transceiver, and a memory. The memory is configured to store a computer program, the transceiver is configured to receive/send various information, and the computer program includes program instructions. When the processor runs the program instructions, the decoding apparatus is enabled to perform the method according to any one of the second aspect or the possible implementations of the second aspect. The transceiver may be a radio frequency module in the communication apparatus, a combination of a radio frequency module and an antenna, or an input/output interface of a chip or a circuit.

According to a seventh aspect, this application provides a readable storage medium, where the readable storage medium stores program instructions. When the program instructions are run on a computer, the computer is enabled to perform the method according to any one of the first aspect, the second aspect, or the possible implementations of the first aspect or the second aspect.

According to an eighth aspect, this application provides a program product including program instructions. When the program product runs, the method according to any one of the first aspect, the second aspect, or the possible implementations of the first aspect or the second aspect is performed.

According to a ninth aspect, this application provides an apparatus. The apparatus may be implemented in a form of a chip, or may be implemented in a form of a device. The apparatus includes a processor. The processor is configured to: read a program stored in a memory and execute the program, to perform the timeout packet dropping method according to any one or more of the first aspect, the second aspect, or the possible implementations of the first aspect or the second aspect. Optionally, the apparatus further includes a memory, and the memory is connected to the processor by using a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

Optionally, the processor and the memory may be physically independent units, or the memory may be integrated with the processor.

According to a tenth aspect, this application provides a wireless communication system. The wireless communication system includes an encoding apparatus and a decoding apparatus. The encoding apparatus is configured to perform the method according to any one of the first aspect or the possible implementations of the first aspect. The decoding apparatus is configured to perform the method according to any one of the second aspect or the possible implementations of the second aspect.

For technical effect achieved in the foregoing aspects, refer to each other or refer to beneficial effect in the following method embodiments. Details are not described herein.

## BRIEF DESCRIPTION OF DRAWINGS

To describe technical solutions in embodiments of this application more clearly, the following briefly describes accompanying drawings for describing embodiments.

FIG. 1 is a simplified diagram of a wireless communication system according to an embodiment of this application;

FIG. 2 is a simplified diagram of a structure of UE and a base station according to an embodiment of this application;

FIG. 3 is a diagram of a neural network according to an embodiment of this application;

FIG. 4 is a diagram of a structure of a neuron according to an embodiment of this application;

FIG. 5 is a schematic flowchart of processing of a time-domain correlation based two-sided AI model according to an embodiment of this application;

FIG. 6 is a schematic flowchart of processing of a two-sided AI model after uplink transmission fails according to an embodiment of this application;

FIG. 7 is a first schematic flowchart of an information exchange method according to an embodiment of this application;

FIG. 8 is a second schematic flowchart of an information exchange method according to an embodiment of this application;

FIG. 9a is a first schematic flowchart of processing of an encoding apparatus and a decoding apparatus according to an embodiment of this application;

FIG. 9b is a second schematic flowchart of processing of an encoding apparatus and a decoding apparatus according to an embodiment of this application;

FIG. 10 is a third schematic flowchart of an information exchange method according to an embodiment of this application;

FIG. 11a is a third schematic flowchart of processing of an encoding apparatus and a decoding apparatus according to an embodiment of this application;

FIG. 11b is a fourth schematic flowchart of processing of an encoding apparatus and a decoding apparatus according to an embodiment of this application;

FIG. 12 is a fourth schematic flowchart of an information exchange method according to an embodiment of this application;

FIG. 13 is a fifth schematic flowchart of processing of an encoding apparatus and a decoding apparatus according to an embodiment of this application;

FIG. 14 is a fifth schematic flowchart of an information exchange method according to an embodiment of this application;

FIG. 15 is a sixth schematic flowchart of processing of an encoding apparatus and a decoding apparatus according to an embodiment of this application;

FIG. 16 is a sixth schematic flowchart of an information exchange method according to an embodiment of this application;

FIG. 17 is a seventh schematic flowchart of processing of an encoding apparatus and a decoding apparatus according to an embodiment of this application;

FIG. 18 is a diagram of a structure of an encoding apparatus or a decoding apparatus according to an embodiment of this application;

FIG. 19 is a diagram of a structure of a communication apparatus according to an embodiment of this application; and

FIG. 20 is another diagram of a structure of a communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, the terms "first", "second", and the like are merely intended to distinguish between different objects, but do not limit a quantity or an execution sequence, and the terms "first", "second", and the like do not indicate a definite difference either. For example, first channel information and second channel information, first feedback information and second feedback information, and the like are merely used to distinguish between different information, and a sequence of the first channel information and the second channel information and a sequence of the first feedback information and the second feedback information are not limited. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, "/" indicates "or", unless otherwise specified. For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one (item)", "one or more of the following items" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, words such as "example" or "for example" are used to give an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective case, are not intended to limit time, and do not require a determining action during implementation of the apparatus, or do not mean that there is another limitation.

"Simultaneously" in this application may be understood as being at a same time point, may be understood as being in a period of time, or may be understood as being in a same periodicity, and may be specifically understood with reference to a context.

In this application, an element represented in a singular form is intended to represent "one or more", but does not represent "one and only one", unless otherwise specified.

In addition, the terms "system" and "network" may be used interchangeably in this specification.

It may be understood that, in embodiments of this application, determining B based on A does not mean that B is determined based only on A. B may alternatively be determined based on A and/or other information.

The technical solutions in embodiments of this application may be applied to various communication systems such as a long term evolution (long term evolution, LTE) system, a worldwide interoperability for microwave access (worldwide interoperability for microwave access, WiMAX) communication system, a 5th generation (5th Generation, 5G) system, for example, a new radio access technology (new radio access technology, NR) system, a network that integrates a plurality of systems, an internet of things system, an internet of vehicles system, and a future communication system such as a 6G system.

It should be understood that the network architecture described in embodiments of this application is intended to describe the technical solutions in embodiments of this application more clearly, and does not constitute a limitation on the technical solutions provided in embodiments of this application. A person of ordinary skill in the art may know that, as a network architecture evolves, the technical solutions provided in embodiments of this application are also applicable to a similar technical problem.

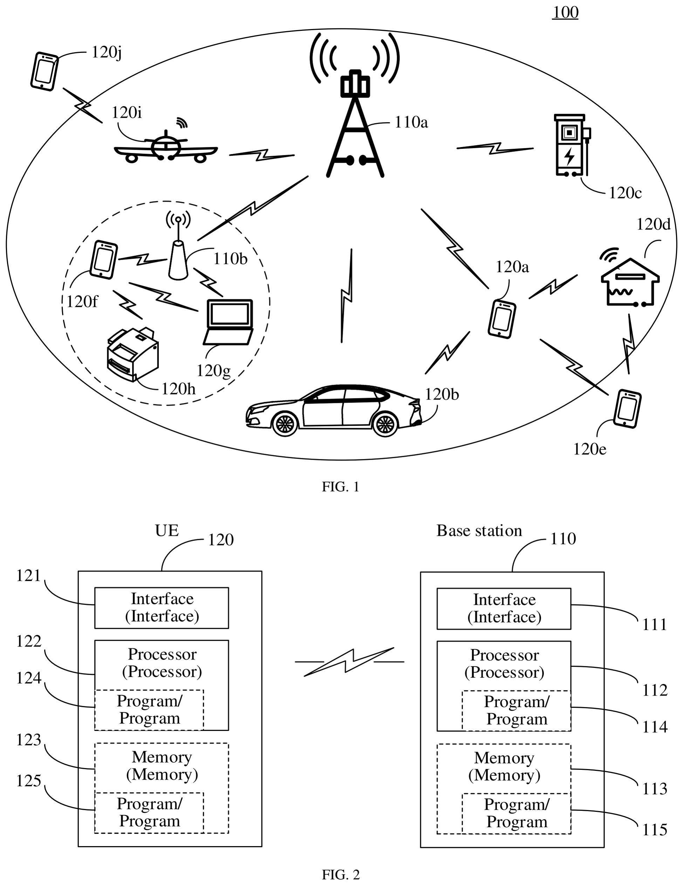

Refer to FIG. 1. FIG. 1 is a simplified diagram of a wireless communication system according to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 1 is only a diagram. The wireless communication system may further include another device, for example, may further include a core network device, a wireless relay device, and/or a wireless backhaul device, which are not shown in FIG. 1.

Optionally, in actual application, the wireless communication system may include a plurality of network devices (also referred to as access network devices), or may include a plurality of terminal devices. One network device may serve one or more terminal devices. One terminal device may also access one or more network devices. A quantity of terminal devices and a quantity of network devices included in the wireless communication system are not limited in embodiments of this application.

The network device may be an entity configured to transmit or receive a signal on a network side, for example, a base station (base station, BS). The network device is also a device that is deployed in a radio access network and that can perform wireless communication with a terminal. The base station may have various forms, such as a macro base station, a micro base station, a relay station, and an access point. For example, the base station in embodiments of this application may be a base station in 5G or an evolved NodeB (Evolved NodeB, eNB) in LTE. The base station in 5G may also be referred to as a transmission reception point (transmission reception point, TRP) or a 5G base station (Next-Generation NodeB, gNB). The base station may also be replaced with the following names: a radio access point, a NodeB (nodeB), a transmission point (transmitting point, TP), a master station MeNB, a secondary station SeNB, a multi-standard radio (MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (AAU), a remote radio head (RRH), a central unit (central unit, CU), a distributed unit (distributed unit, DU), a positioning node, an IAB donor (IAB donor), and the like.

The base station (BS) may be fixed or mobile. For example, the base stations 110a and 110b are stationary and are responsible for wireless transmission and reception in one or more cells from the terminal device 120. A helicopter or an uncrewed aerial vehicle 120i shown in FIG. 1 may be configured to serve as a mobile base station, and one or more cells may move based on a location of the mobile base station 120i. In another example, the helicopter or the uncrewed aerial vehicle (120i) may be configured to serve as a terminal device communicating with the base station 110a.

The network device in embodiments of this application may be an integrated base station, or may be a base station including a central unit (central unit, CU) and a distributed unit (distributed unit, DU). The base station including the CU and the DU may also be referred to as a base station in which a CU and a DU are separated. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU. Alternatively, the network device in embodiments of this application may be a radio unit (radio unit, RU). Alternatively, the network device in embodiments of this application may be of an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a module in the access network device, or the like. In an ORAN system, a CU may also be referred to as an open (open, O)-CU, a CU-CP may also be referred to as an O-CU-CP, a CU-UP may also be referred to as an O-CU-UP, and an RU may also be referred to as an O-RU.

In embodiments of this application, an apparatus configured to implement a network device function may be a network device, or may be an apparatus that can support the network device in implementing the function, for example, a chip system, a communication module, or a modem. The apparatus may be installed in the network device. In the technical solutions provided in embodiments of this application, the technical solutions provided in embodiments of this application are described by using an example in which the apparatus configured to implement a network device function is a network device and the network device is a base station. The base station may support networks using a same access technology or different access technologies. A specific technology and a specific device form that are used for the network device are not limited in embodiments of this application.

The terminal device may be referred to as a terminal, user equipment (user equipment, UE), a mobile station (mobile station, MS), a mobile terminal (mobile terminal, MT), or the like, and may be an entity that is configured to receive or transmit a signal on a user side, for example, a mobile phone (mobile phone). The terminal device may be deployed on land, including an indoor, outdoor, handheld, or vehicle-mounted device, may be deployed on a water surface (for example, a ship), or may be deployed in the air (for example, an airplane, a balloon, or a satellite). The terminal device may be configured to connect to a person, an object, and a machine. The terminal device 120 may be widely used in various scenarios, for example, cellular communication, device-to-device (device-to-device, D2D), vehicle-to-everything (vehicle-to-everything, V2X), peer-to-peer (peer-to-peer, P2P), machine-to-machine (machine to machine, M2M), machine type communication (machine type communication, MTC), internet of things (Internet of Things, IoT), virtual reality (virtual reality, VR), augmented reality (augmented reality, AR), industrial control, autonomous driving, telemedicine, a smart grid, smart furniture, smart office, smart wearable, smart transportation, a smart city (smart city), smart home (smart home), an uncrewed aerial vehicle, a robot, remote sensing, passive sensing, positioning, navigation and tracking, and self-delivery and mobility. The terminal device 120 may be user equipment (UE) in the 3rd generation partnership project (3rd generation partnership project, 3GPP) standard, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, a flight, a ship, a remote control device, a smart home device, or an industrial device. The terminal device may alternatively be a communication device in a future wireless communication system.

In embodiments of this application, an apparatus configured to implement a terminal function may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement a terminal function is a terminal and the terminal is UE. A specific technology and a specific device form that are used by the terminal device are not limited in embodiments of this application.

Optionally, the UE may be configured to serve as a base station. For example, the UE may serve as a scheduling entity that provides sidelink signals between UE in V2X, D2D, or P2P. As shown in FIG. 1, a cellular phone 120a and a car 120b communicate with each other by using sidelink signals. The cellular phone 120a communicates with a smart home device 120d without relaying a communication signal by using the base station 110a.

Optionally, the UE may also be configured to serve as a relay node. For example, the UE may serve as a relay device (a relay) or an integrated access and backhaul (integrated access and backhaul, IAB) node, and is configured to provide a wireless backhaul service for the terminal device.

Optionally, to support a machine learning function in a wireless network, an AI network element or module may be further introduced in the network. If an AI network element is introduced, the AI network element corresponds to an independent network element. If an AI module is introduced, the AI module may be located inside a network element, for example, located inside a terminal device and/or a network device.

In embodiments of this application, the term "wireless communication" may also be referred to as "communication" for short, and the term "communication" may also be described as "data transmission", "information transmission", or "transmission".

Refer to FIG. 2. FIG. 2 is a simplified diagram of a structure of UE and a base station according to an embodiment of this application. For simplicity, FIG. 2 shows only main components of a base station 110 and UE 120. In actual application, structures of the base station and the UE may include more or fewer components that those shown in FIG. 2, or may include only the components shown in FIG. 2. It should be understood that the base station shown in FIG. 2 may use a CU-DU split architecture, may use a non CU-DU split architecture, or may use an ORAN architecture. The following briefly describes each component in FIG. 2.

The base station 110 includes an interface 111 and a processor 112. The processor 112 may optionally store a program 114. The base station 110 optionally includes a memory 113. The memory 113 may optionally store a program 115. The UE 120 includes an interface 121 and a processor 122. The processor 122 may optionally store a program 124. The UE 120 optionally includes a memory 123. The memory 123 may optionally store a program 125. These components operate together to provide various functions described in this application. For example, the processor 112 and the interface 111 operate together to provide a wireless connection between the base station 110 and the UE 120. The processor 122 and the interface 121 operate together to implement downlink transmission and/or uplink transmission of the UE 120.

A processor (for example, the processor 112 and/or the processor 122) may include one or more processors and is implemented as a combination of a computing device. The processor (for example, the processor 112 and/or the processor 122) may separately include one or more of the following: a microprocessor, a microcontroller, a digital signal processor (digital signal processor, DSP), a digital signal processing device (DSP device, DSPD), an application-specific integrated circuit (application specific integrated circuit, ASIC), a field programmable gate array (field programmable gate array, FPGA), a programmable logic device (programmable logic device, PLD), gating logic, transistor logic, a discrete hardware circuit, a processing circuit, or another proper combination of hardware and firmware and/or hardware and software, and is configured to perform various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or 121) may include an interface for implementing communication with one or more computer devices (for example, UE, BSs, and/or network nodes). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (for example, the 3rd generation partnership project (3rd Generation Partnership Project, 3GPP) standard).

The program in this application represents software in a broad sense. A non-limiting example of the software is program code, a program, a subprogram, instructions, an instruction set, code, a code segment, a software module, an application program, or a software application program. The program may run in a processor and/or a computer, so that the base station 110 and/or the UE 120 perform various functions and/or processes described in this application.

The memory (for example, the memory 113 and/or the memory 123) may store data manipulated by the processors 112 and 122 when executing the software. The memories 113 and 123 may be implemented by using any storage technology. For example, the memory may be any available storage medium that can be accessed by the processor and/or the computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can carry or store software, data, or information and accessible by a processor/computer.

The memory (for example, the memory 113 and/or the memory 123) and the processor (for example, the processor 112 and/or the processor 122) may be separately disposed or integrated. The memory may be configured to be connected to the processor, so that the processor can read information from the memory, and store information in and/or write information into the memory. The memory 113 may be integrated into the processor 112. The memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in the UE, the base station, or another network node).

The foregoing describes the system architecture in embodiments of this application. To better understand the technical solutions in embodiments of this application, the following briefly describes several terms or nouns related to this application.

1. Artificial intelligence (artificial intelligence, AI), machine learning, and neural network

Artificial intelligence (artificial intelligence, AI) enables machines to have learning capabilities, accumulate experience, and resolve problems such as natural language understanding, image recognition, and chess playing that can be resolved by humans through experience. Usually, artificial intelligence is a technology that presents human intelligence by using an ordinary computer program. Artificial intelligence may be defined as a machine or a computer that mimics humans and has cognitive functions related to human thinking, such as learning and solving problems. Artificial intelligence can learn from past experience, to make reasonable decisions, and respond quickly. An objective of artificial intelligence is to understand intelligence by building symbolic reasoning or computer programs for reasoning.

Machine learning is an implementation of artificial intelligence. To be specific, machine learning is used as a means to resolve problems in artificial intelligence. Machine learning is a method that can give a machine "learning" capabilities to enable the machine to perform functions that cannot be implemented by direct programming. In practice, machine learning is a method for training a model by using data, and then using the model for prediction.

An AI model is an algorithm or a computer program that can implement an AI function. The AI model represents a mapping relationship between an input and an output of the model. The AI model may be a neural network or another machine learning model.

A neural network (neural network, NN) is a specific implementation form of machine learning, and is a neural network that simulates a human brain to implement a machine learning technology similar to artificial intelligence. According to the general approximation theorem, the neural network can approximate any continuous function in theory, so that the neural network has the capability of learning any mapping. Therefore, the neural network can accurately perform abstract modeling for a complex high-dimension problem.

The neural network usually includes an input layer, a hidden layer, and an output layer. Each layer has one or more logical determining units. The logical determining units are referred to as neurons (neurons). Common neural network structures include a feedforward neural network (feedforward neural network, FNN), a convolutional neural network (convolutional neural network, CNN), a recurrent neural network (recurrent neural network, RNN), and the like.

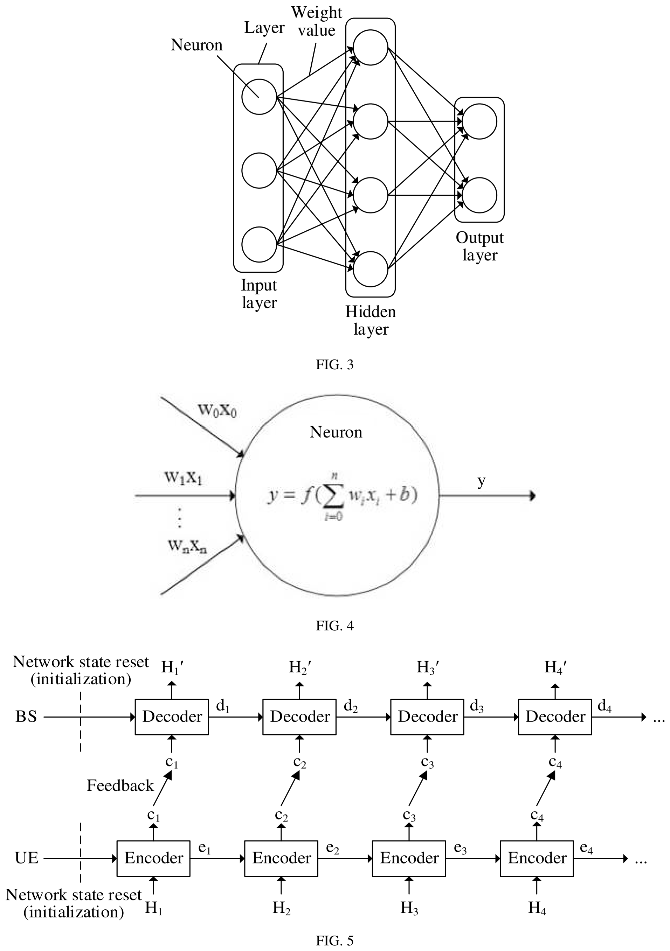

These network structures are formed based on neurons. The input layer of the neural network performs neuron processing on a received input, and then transfers a result to the intermediate hidden layer. The hidden layer transfers a calculation result to the output layer or an adjacent hidden layer. Finally, the output layer obtains an output result of the neural network. One neural network may include one or more sequentially connected hidden layers. A quantity of hidden layers in the neural network is not limited in this application. Refer to FIG. 3. FIG. 3 is a diagram of a neural network according to an embodiment of this application. As shown in FIG. 3, the neural network includes one input layer, one hidden layer, and one output layer. The input layer has three neurons, the hidden layer has four neurons, and the output layer has two neurons. It may be understood that a quantity of layers of the neural network and a quantity of neural network elements included by each layer shown in FIG. 3 are merely examples.

Each connection line between neurons corresponds to a weight (a value is referred to as a weight value), and the weight value may be updated through training. Each neuron may further correspond to an offset, and the offset may be updated through training. Updating the neural network refers to updating these weight values and offsets. After the structure of the neural network is known, that is, how an output of a previous neuron is input into a subsequent neuron, and the weight values and the offsets are known, all information of the neural network is known.

It can be learned from FIG. 3 that each neuron may have a plurality of input connection lines, and each neuron calculates an output based on an input. For example, each neuron performs a weighted summation operation on input values of the neuron, and generates an output by using an activation function (for example, a non-linear activation function) based on a result of the weighted summation. Each neuron may have a plurality of output connection lines, and an output of one neuron is used as an input of a next neuron. It should be understood that the input layer has only an output connection line, each neuron at the input layer is a value that is input into a neural network, and a value of each neuron is used as an input of all output connection lines. The output layer has only an input connection line.

Refer to FIG. 4. FIG. 4 is a diagram of a structure of a neuron according to an embodiment of this application. As shown in FIG. 4, it is assumed that inputs of a neuron are $x=[x_0, x_1, ..., x_n]$, weights corresponding to inputs are $w=[w_0, w_1, ..., w_n]$, and an offset corresponding to the neuron is b. Assuming that an activation function is represented by f(z), an output y of the neuron shown in FIG. 4 is:

$$y = f(\sum_{i=0}^{n} w_i x_i + b) \quad\text{................................................................................................ (1-1)}$$

The offset b may be various values such as a decimal, an integer (0, a positive integer, or a negative integer), or a complex number. Activation functions of different neurons in the neural network may be the same or may be different.

Forms of the activation function f(z) may be diversified. Assuming that an activation function f(z) of a neuron is max(0, z), an output of the neuron is $y = f(\sum_{i=0}^{i=n} w_i * x_i + b) = \max(0, \sum_{i=0}^{i=n} w_i * x_i + b)$. For another example, if an activation function f(z) of a neuron is z, an output of the neuron is $y = f(\sum_{i=0}^{i=n} w_i * x_i + b) = \sum_{i=0}^{i=n} w_i * x_i + b$.

Details are not listed herein. A form of the activation function is not limited in this application.

A loss function may be defined in a training process of the neural network. The loss function describes a difference between an output of the neural network and target data. A smaller loss function indicates that the output of the neural network better fits the target data. An example in which a mean square error is used as the loss function is as follows:

$$\text{loss} = (y_{out} - y_{target})^2 \quad\text{.............................................................................................. (1-2)}$$

$y_{out}$ represents the output of the neural network, $y_{target}$ represents the target data, and a minimization loss function (that is, loss in formula (1-2)) is to minimize a difference between the two values (namely, $y_{out}$ and $y_{target}$). It should be understood that, in addition to the mean square error loss function, the loss function may alternatively be a cross entropy loss function or an absolute value loss function. A type of the loss function is not limited in this application. The training process of the neural network is a process of adjusting neural network parameters such as a quantity of layers and a width of the neural network, a weight of a neuron, or a parameter in an activation function of a neuron so that a value of the loss function is less than a threshold or meets a target requirement.

A deep neural network (deep neural network) is a neural network having a plurality of hidden layers.

Deep learning (deep learning) is machine learning performed based on a deep neural network.

2. Time-domain correlation based two-sided (transmitting end and receiving end) AI model

In a wireless communication link, channels of medium- and low-speed users change continuously in time. Therefore, communication performance may be improved by mining a channel time-domain correlation. When both a base station and UE perform data processing based on a channel time-domain correlation, a processing procedure is shown in FIG. 5. FIG. 5 is a schematic flowchart of processing of a time-domain correlation based two-sided AI model according to an embodiment of this application. As shown in FIG. 5, the UE may input channel information $H_t$ (for example, CSI) at a current moment and state information $e_{t-1}$ obtained by the UE last time into an encoder (encoder) for processing, and output corresponding feedback information $c_t$. Optionally, the UE further outputs new state information et, and then may feed back the feedback information $c_t$ to the base station. For example, when the channel information $H_t$ is CSI, the feedback information $c_t$ may be compression information of the CSI. For example, each time the encoder runs, there may be two outputs: One is feedback information, and the other is state information obtained during this time of running. For example, the channel information $H_t$ and the state information $e_{t-1}$ are input into the encoder for processing, and two outputs may be obtained: One is the feedback information $c_t$, and the other is the state information et. Therefore, the state information $e_{t-1}$ obtained by the UE last time may refer to a real number matrix (that is, a 2nd output) other than feedback information $e_{t-1}$ (that is, a 1st output) output by the encoder during last time of running. Alternatively, the state information $e_{t-1}$ obtained by the UE last time may be obtained by inputting a plurality of pieces of historical channel information into a computation module, instead of being used as a 2nd output of the encoder during last time of running. The state information $e_{t-1}$ (that is, the state information obtained by the UE last time) input by the encoder this time may be determined by channel information (namely, $H_1$, $H_2$, $H_3$, ..., and $H_{t-1}$) at past moments. Therefore, a channel information time-domain correlation may be mined based on the state information $e_{t-1}$ and the channel information $H_t$ that is at the current moment. The encoder may be implemented by using an AI model.

The base station may input the feedback information $c_t$ received at the current moment and state information $d_{t-1}$ obtained by the base station last time into a decoder (decoder) for processing, output channel information $H_t$', and optionally, further output new state information $d_t$. Optionally, the channel information $H_t$' output by the decoder and the channel information $H_t$ input into the encoder are the same or have specific (or subtle) differences (these differences may be ignored in some scenarios). For example, when the feedback information $c_t$ is compression information of the CSI, the channel information $H_t$' output by the decoder is CSI restored based on the feedback information $c_t$ or predicted CSI. For example, each time the decoder runs, there may be two outputs: One is channel information, and the other is state information obtained during this time of running. For example, the feedback information $c_t$ and the state information $d_{t-1}$ are input into the decoder for processing, and two outputs may be obtained: One is the channel information Ht', and the other is the state information $d_t$. Therefore, the state information $d_{t-1}$ obtained by the base station last time may refer to a real number matrix (that is, a 2nd output) other than channel information $H_{t-1}$' (that is, a 1st output) output by the decoder during the last time of running. Alternatively, the state information $d_{t-1}$ obtained by the base station last time may be obtained by inputting, into a computation module, a plurality of pieces of historical channel information obtained by the base station through decoding, or obtained by inputting a plurality of historical feedback information into a computation module. The state information $d_{t-1}$ (that is, the state information obtained by the base station last time) input by the decoder this time may be determined based on feedback information (namely, $c_1$, $c_2$, $c_3$, ..., and $c_{t-1}$) received at past moments. Therefore, a feedback information time-domain correlation may be mined based on the state information $d_{t-1}$ and the feedback information $c_t$ that is received at the current moment. The decoder may also be implemented by using an AI model.

Optionally, t may represent a quantity of feedbacks or a feedback time period. It may be understood that the "feedback time period" mentioned in this application may be a short period of time and feedback information needs to be fed back once in a feedback time period. t is a positive integer. When t is equal to 1, $e_{t-1}=e_0$, and $d_{t-1}=d_0$, where $e_0$ may represent initial state information of the encoder on the UE side, and $d_0$ may represent initial state information of the decoder on the base station side. For example, $e_0$ and $d_0$ may be predefined.

It can be learned from FIG. 5 that, when generating the feedback information $c_t$, the encoder on the UE side also updates state information that is on the UE side, for example, changes the state information from $e_{t-1}$ to et. Similarly, when processing received information, the decoder on the base station side also synchronously updates state information that is on the base station side, for example, changes the state information from $d_{t-1}$ to $d_t$.

In the two-sided AI model shown in FIG. 5, the channel time-domain correlation is mined by synchronously updating the state information $e_{t-1}$ on the UE side and the state information $d_{t-1}$ on the base station side. However, when the feedback information $c_t$ fails to be transmitted due to reasons such as poor instantaneous channel quality, the base station cannot synchronously update the state information on the base station side, which may cause a mismatch in a subsequent two-sided (that is, a transmitting end and a receiving end) processing process and deterioration of decoding performance of the base station side, causing a communication performance loss. For example, channel information compression is implemented by using the channel time-domain correlation. The feedback information $c_t$ is obtained based on the channel information $H_t$ and the state information $e_{t-1}$, and the feedback information $c_t$ may be understood as incremental information of the channel information $H_t$ relative to the state information $e_{t-1}$. Correspondingly, the base station restores the channel information $H_t$ based on the feedback information $c_t$ and the state information $d_{t-1}$. In this case, if the feedback information $c_t$ fails to be transmitted, the base station cannot update the state information $d_{t-1}$ to $d_t$ so that the state information includes channel information at a tth time, and therefore cannot restore channel information $H_{t+1}$ based on received feedback information $c_{t+1}$. In this case, the base station cannot obtain latest channel information, and cannot allocate a resource to the UE based on the latest channel information, which may affect subsequent data transmission and cause deterioration of communication performance.

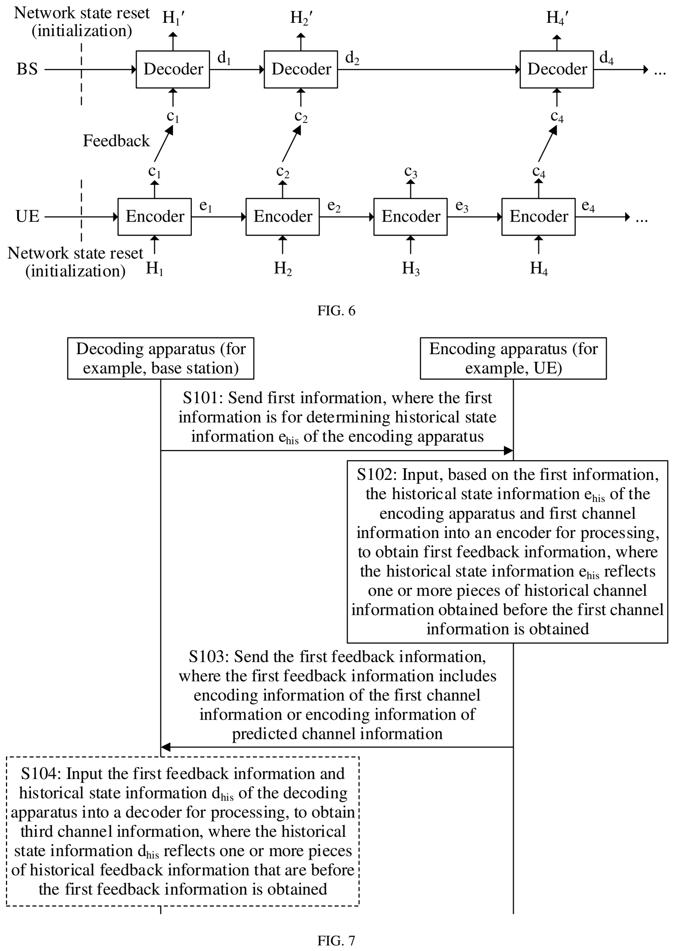

In a possible implementation, when a piece of feedback information of the UE fails to be transmitted due to instantaneous channel quality deterioration, the base station may input state information that is not updated into the decoder (decoder) for processing. For example, refer to FIG. 6. FIG. 6 is a schematic flowchart of processing of a two-sided AI model after uplink transmission fails according to an embodiment of this application. As shown in FIG. 6, assuming that feedback information $c_3$ of a 3rd feedback (or a 3rd feedback time period) is not successfully transmitted to the base station, the base station cannot update state information based on the 3rd feedback. Therefore, in a 4th feedback (or a 4th feedback time period), the encoder on the UE side uses state information $e_3$ output at a 3rd time as an input, and the decoder on the base station side uses state information $d_2$ output at a 2nd time as an input. Because channels of medium- and low-speed users change slightly within short time, and state information also changes slightly within short time, the state information (for example, the state information $d_2$) that is not updated may be used as an input of the decoder.

Although a mismatch between the transmitting end and the receiving end (for example, the UE uses the state information $e_3$ output by the encoder at the 3rd time as the input of the encoder, and the base station uses the state information $d_2$ output by the decoder at the 2nd time as the input of the decoder) may have small impact within short time, errors caused by mismatches between the transmitting end and the receiving end are accumulated over time. This may cause significant deterioration of decoding performance of the base station side and communication performance. For example, channel information compression is implemented by using the channel time-domain correlation. When the feedback information $c_3$ fed back by the UE at the 3rd time is not successfully transmitted to the base station, feedback information $c_4$ fed back by the UE at a 4th time is obtained based on channel information $H_4$ and the state information $e_3$ output by the encoder at the 3rd time. Therefore, $c_4$ may be understood as incremental information of the channel information $H_4$ relative to the state information $e_3$, that is, $c_4$ is incremental information of the channel information $H_4$ relative to historical channel information $H_3$ and earlier historical channel information. In addition, because the decoder on the base station side uses the feedback information $c_4$ and the state information $d_2$ output by the decoder at the 2nd time as an input, and information related to the historical channel information $H_3$ is lacked, channel information $H_4'$ restored by the base station is not accurate compared with the channel information $H_4$ measured by the UE. Therefore, a resource (for example, a modulation and coding scheme (modulation and coding scheme, MCS)) allocated by the base station to the UE may not comply with an actual channel condition. As a result, performance deteriorates, and communication performance deteriorates significantly over time. Therefore, an effective receiving-end and transmitting-end alignment solution needs to be studied, to cope with problems such as a receiving-end and transmitting-end mismatch, deterioration of decoding performance of the base station side, and significant deterioration of communication performance that are caused by a feedback information transmission failure.

In view of this, embodiments of this application provide an information exchange method, an apparatus, and a readable storage medium, so that state information on a UE side (or input by an encoder) can keep consistent with state information on a base station side (or input by a decoder), thereby improving decoding performance of the base station side (or the decoder), reducing a communication performance loss, and improving communication quality.

The following describes in detail the technical solutions provided in this application with reference to more accompanying drawings.

The technical solutions provided in this application are described in detail by using a plurality of embodiments. For details, refer to descriptions of the following embodiments. It should be understood that the technical solutions described in the following embodiments of this application may be randomly combined to form a new embodiment, and parts that are related to a same or similar concept or solution may be mutually referenced or combined. The following describes each embodiment in detail.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

The encoding apparatus in this application may be a terminal device (for example, UE), or may be a network device (for example, a base station). Correspondingly, the decoding apparatus may be a network device (for example, a base station), or may be a terminal device (for example, UE). It may be understood that the encoding apparatus and the decoding apparatus are for both communication parties. In a communication process, one communication party is the encoding apparatus, and the other communication party is the decoding apparatus. For example, in one data transmission process, the encoding apparatus is UE, and the decoding apparatus is a base station; and in another data transmission process, the encoding apparatus is a base station, and the decoding apparatus is UE.

For example, for ease of description, the following uses an example in which the encoding apparatus is UE and the decoding apparatus is a base station.

Optionally, the encoder in this application may be a module or a chip in the encoding apparatus, for example, an AI module or an AI chip; the decoder in this application may be a module or a chip in the decoding apparatus, for example, an AI module or an AI chip. When both the encoder and the decoder are implemented by using an AI model, the encoder and the decoder are usually jointly trained and may be used in a matching manner.

Embodiment 1

Refer to FIG. 7. FIG. 7 is a first schematic flowchart of an information exchange method according to an embodiment of this application. As shown in FIG. 7, the information exchange method includes but is not limited to the following steps.

S101: A decoding apparatus (for example, a base station) sends first information to an encoding apparatus (for example, UE), where the first information is for determining historical state information $e_{his}$ of the encoding apparatus.

Correspondingly, the encoding apparatus (for example, the UE) receives the first information.

It may be understood that the base station may configure a reference signal resource for the UE, and the reference signal resource may be periodic. For example, the reference signal resource may include a time-frequency resource of a reference signal and a time-frequency resource of feedback information. The base station may send a reference signal (for example, a CSI reference signal) on a time-frequency resource of the reference signal. The UE may perform channel measurement based on the received reference signal to obtain channel information (for example, downlink channel information), and then feed back the obtained channel information to the base station by using a time-frequency resource, configured by the base station, of feedback information.

Therefore, the encoding apparatus (the UE) may periodically send feedback information to the decoding apparatus (the base station). If the decoding apparatus (the base station) does not receive (or does not demodulate) specific feedback information on a time-frequency resource of the feedback information, it indicates that the feedback information fails to be transmitted. In this case, the decoding apparatus (the base station) may send the first information to the encoding apparatus (the UE). The first information may be for determining the historical state information $e_{his}$ of the encoding apparatus (the UE), or the first information may be for determining state information that is input into an encoder after the first information is received. The first information may be further for notifying that the feedback information fails to be transmitted, the first information may further indicate a mismatch between a transmitting end and a receiving end, or the like.

S102: The encoding apparatus (for example, the UE) inputs, based on the first information, the historical state information $e_{his}$ of the encoding apparatus and first channel information into the encoder for processing, to obtain first feedback information, where the historical state information $e_{his}$ reflects one or more pieces of historical channel information obtained before the first channel information is obtained.

S103: The encoding apparatus (for example, the UE) sends the first feedback information to the decoding apparatus (for example, the base station), where the first feedback information includes encoding information of the first channel information or encoding information of predicted channel information.

Correspondingly, the decoding apparatus (for example, the base station) receives the first feedback information.

Optionally, after receiving the first information, the encoding apparatus (the UE) may determine the historical state information $e_{his}$ of the encoding apparatus based on the first information. The encoding apparatus (the UE) may perform channel measurement based on a received reference signal to obtain the first channel information. The encoding apparatus (the UE) may then input the historical state information $e_{his}$ and the first channel information into the encoder of the encoding apparatus for processing, to obtain the first feedback information. The historical state information $e_{his}$ may reflect one or more pieces of historical channel information obtained before the first channel information is obtained. Optionally, after the historical state information $e_{his}$ and the first channel information are input into the encoder for processing, new state information (denoted as first state information for ease of description) is further output. The new state information (namely, the first state information) may reflect one or more pieces of historical channel information including the first channel information. The encoding apparatus (the UE) may further send the first feedback information to the decoding apparatus (the base station). For example, the encoding apparatus (the UE) may perform operations such as quantization and modulation on the first feedback information output by the encoder, and then send the first feedback information.

It may be understood that the encoding apparatus (the UE) may send the first feedback information when a feedback time period arrives, or the encoding apparatus (the UE) may generate and send the first feedback information in a feedback time period. In other words, step S102 may be completed before the feedback time period arrives, and step S103 is performed when the feedback time period arrives; or step S102 and step S103 are completed in the feedback time period.

The "feedback time period" mentioned in this application may be a short period of time, and feedback information needs to be fed back once in a feedback time period. Details are not described below. The "feedback time period" mentioned in this application may be understood as being periodic, and a time interval between two adjacent feedback time periods may be understood as one feedback periodicity. Details are not described below again. For example, an interval between an end time point of a 1st feedback time period in two adjacent feedback time periods and a start time point of a 2nd feedback time period may be understood as one feedback periodicity. Alternatively, an interval between sending time points or receiving time points of two adjacent pieces of feedback information may be understood as one feedback periodicity. The feedback periodicity in this application may be flexibly set, and is not limited to the foregoing descriptions.

In a possible implementation, the first information includes or indicates a step size (or a quantity) m (m is a positive integer) of state information rollback. It is assumed that the encoding apparatus (the UE) receives the first information in a $q^{th}$ feedback time period, indicating that the historical state information $e_{his}$ of the encoding apparatus is state information $e_{q-m-1}$ input by the encoder at a $(q-m)^{th}$ time, where q is a positive integer greater than m. Specifically, for the first information and an implementation of determining the historical state information $e_{his}$ of the encoding apparatus based on the first information, refer to the following descriptions in Embodiment 2. Details are not described herein.

In another possible implementation, the encoding apparatus (the UE) periodically stores state information e output by the encoder, and the decoding apparatus (the base station) also periodically stores state information d output by a decoder. The historical state information $e_{his}$ of the encoding apparatus may be state information stored last time by the encoding apparatus (the UE). Specifically, for the first information and an implementation of determining the historical state information $e_{his}$ of the encoding apparatus based on the first information, refer to the following descriptions in Embodiment 3. Details are not described herein.

In still another possible implementation, the encoder of the encoding apparatus (the UE) and a decoder of the decoding apparatus (the base station) always use historical state information output in a specific running process as an input, and the encoding apparatus (the UE) updates, based on an indication (that is, the first information) of the decoding apparatus (the base station), the historical state information input into the encoder. In other words, the historical state information $e_{his}$ of the encoding apparatus may be state information updated last time by the encoding apparatus. Specifically, for the first information and an implementation of determining the historical state information $e_{his}$ of the encoding apparatus based on the first information, refer to the following descriptions in Embodiment 4. Details are not described herein.

In yet another possible implementation, the encoding apparatus (the UE) stores, based on an indication of the decoding apparatus (the base station), state information output by the encoder at a specific time moment. The historical state information $e_{his}$ of the encoding apparatus may be state information stored by the encoding apparatus (the UE) before the first information is received. Specifically, for signaling exchange between the encoding apparatus (the UE) and the decoding apparatus (the base station), the first information, and an implementation of determining the historical state information $e_{his}$ of the encoding apparatus based on the first information, refer to the following descriptions in Embodiment 5 or Embodiment 6. Details are not described herein.

The channel information in this application may be for representing a channel, and may be understood as an expression of a channel status. Details are not further described below. For example, the channel information in this application may be CSI. The CSI may be a channel response matrix, an eigenvector obtained by performing singular value decomposition on a channel response matrix, a matrix including a plurality of eigenvectors, or a projection coefficient obtained by projecting an eigenvector to a space-frequency domain. This is not limited in this application.

In some scenarios, the first channel information may be channel information obtained through measurement, for example, channel information obtained by the encoding apparatus (the UE) by measuring a currently received reference signal. In this case, the first feedback information may be encoding information (for example, compression information) of the first channel information, or may be encoding information (for example, compression information) of channel information predicted based on the first channel information. In other words, when the first channel information is channel information obtained through actual measurement, the encoder may be configured to perform prediction and compression, or may be configured to perform compression. In some other scenarios, the first channel information may be predicted channel information. In this case, the first feedback information may be encoding information (for example, compression information) of the first channel information. In other words, when the first channel information itself is predicted channel information, the encoder may be configured to compress the first channel information.

Optionally, after step S103, the information exchange method may further include the following step.

S104: The decoding apparatus (for example, the base station) inputs the first feedback information and historical state information $d_{his}$ of the decoding apparatus into the decoder for processing, to obtain third channel information, where the historical state information $d_{his}$ reflects one or more pieces of historical feedback information obtained before the first feedback information is obtained.

Optionally, the decoding apparatus (the base station) determines the historical state information $d_{his}$, and inputs, after receiving the first feedback information, the first feedback information and the historical state information $d_{his}$ into the decoder for processing (for example, restoration), to obtain the third channel information. The historical state information $d_{his}$ may reflect one or more pieces of historical feedback information obtained before the first feedback information is obtained. Optionally, after the first feedback information and the historical state information $d_{his}$ are input into the decoder for processing, new state information (denoted as third state information for ease of description) is further output. The new state information (namely, the third state information) may reflect one or more pieces of historical feedback information including the first feedback information.

The historical state information $d_{his}$ may be determined based on the first information, and the historical state information $d_{his}$ of the decoding apparatus is consistent with the historical state information $e_{his}$ of the encoding apparatus. For example, if the historical state information $e_{his}$ of the encoding apparatus is the state information $e_{q-m-1}$ input by the encoder at the $(q-m)^{th}$ time, the historical state information $d_{his}$ of the decoding apparatus is state information $d_{q-m-1}$ input by the decoder at the $(q-m)^{th}$ time. For another example, if the historical state information $e_{his}$ of the encoding apparatus is state information stored last time by the encoding apparatus, the historical state information $d_{his}$ of the decoding apparatus is also state information stored last time by the decoding apparatus; or if the historical state information $e_{his}$ of the encoding apparatus is state information updated last time by the encoding apparatus, the historical state information $d_{his}$ of the decoding apparatus is also state information updated last time by the decoding apparatus. For another example, if the historical state information $e_{his}$ of the encoding apparatus is state information stored by the encoding apparatus before the first information is received, the historical state information $d_{his}$ of the decoding apparatus is state information stored by the decoding apparatus before the first information is sent. Examples are not listed one by one herein. For specific implementation, refer to related descriptions in the following Embodiment 2 to Embodiment 6.

The decoding apparatus in this embodiment of this application controls an input of the encoder in the encoding apparatus by delivering information (the foregoing first information), so that state information on a UE side (or input by the encoder) can keep consistent with state information on a base station side (or input by the decoder), thereby improving decoding performance of the base station side (or the decoder), reducing a communication performance loss, and improving communication quality.

In an optional embodiment, a decoding apparatus (for example, a base station) may send first information to an encoding apparatus (for example, UE), where the first information is for determining historical state information $e_{his}$ of the encoding apparatus. After receiving the first information, the encoding apparatus (for example, the UE) may determine the historical state information $e_{his}$ of the encoding apparatus based on the first information. The encoding apparatus (for example, the UE) determines first feedback information based on the historical state information $e_{his}$. The first feedback information may be for determining third channel information. The historical state information $e_{his}$ may reflect one or more pieces of historical channel information. For example, the encoding apparatus inputs the historical state information $e_{his}$ into an encoder of the encoding apparatus for processing, to obtain the first feedback information. The encoder may be an AI model. For example, the first feedback information may be channel information predicted based on the historical state information $e_{his}$, or encoding information (for example, compression information) of the predicted channel information. The encoding apparatus (for example, the UE) sends the first feedback information to the decoding apparatus (for example, the base station). The decoding apparatus (for example, the base station) determines historical state information $d_{his}$, and determines the third channel information based on the first feedback information and the historical state information $d_{his}$ after receiving the first feedback information. For example, the decoding apparatus (for example, the base station) may input the first feedback information and the historical state information $d_{his}$ into a decoder for processing (for example, restoration), to obtain the third channel information. The historical state information $d_{his}$ may reflect one or more pieces of historical feedback information. The third channel information may be used by the decoding apparatus (for example, the base station) to allocate a resource to the encoding apparatus (for example, the UE).

The decoding apparatus in this embodiment of this application controls an input of the encoder in the encoding apparatus by delivering information (the foregoing first information), so that state information on a UE side (or input by the encoder) can keep consistent with state information on a base station side (or input by the decoder), thereby improving decoding performance of the base station side (or the decoder), reducing a communication performance loss, and improving communication quality.

The information exchange method provided in this application is briefly described in the foregoing Embodiment 1. The following Embodiment 2 to Embodiment 6 describe in detail information exchange methods provided in this application in different cases (for example, a base station sends different indications).

Embodiment 2

Embodiment 2 of this application mainly describes a case in which a decoding apparatus (for example, a base station) indicates an encoding apparatus (for example, UE) to use state information that is before a feedback information transmission failure as an input of an encoder (namely, a first AI model). Correspondingly, the decoding apparatus (for example, the base station) also uses the state information that is before the feedback information transmission failure as an input of a decoder (namely, a second AI model). Therefore, time-domain correlation mining can be implemented by using historical channel information included in historical state information, and impact of a mismatch between a receiving end and a transmitting end on communication performance can be reduced.

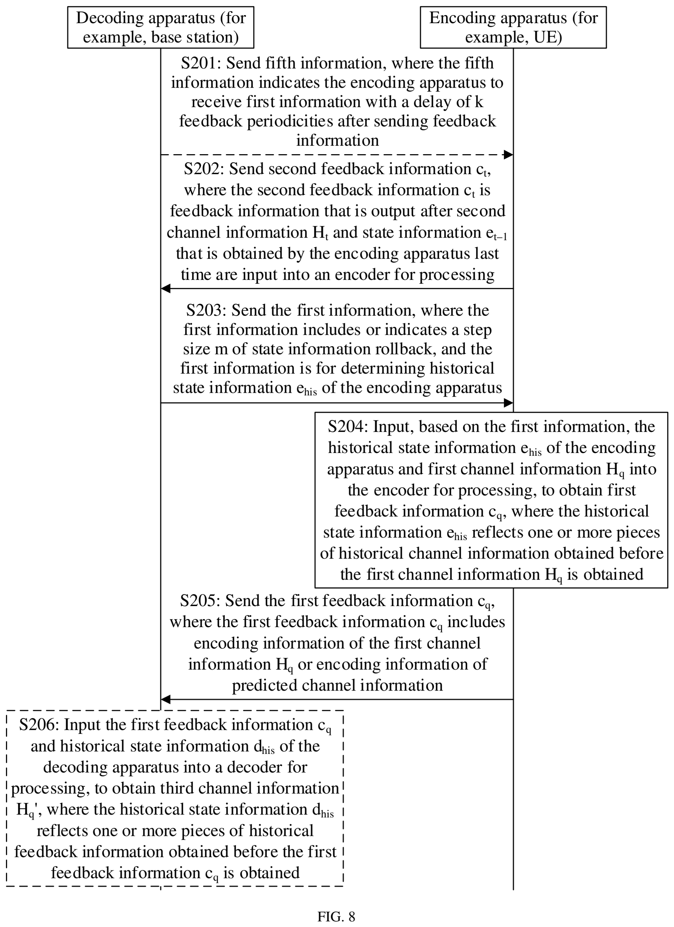

Refer to FIG. 8. FIG. 8 is a second schematic flowchart of an information exchange method according to an embodiment of this application. As shown in FIG. 8, the information exchange method includes but is not limited to the following steps.

S201: A decoding apparatus (for example, a base station) sends fifth information to an encoding apparatus (for example, UE), where the fifth information indicates the encoding apparatus to receive first information with a delay of k feedback periodicities after sending feedback information.

Correspondingly, the encoding apparatus (for example, the UE) receives the fifth information.

Optionally, the fifth information includes a quantity k of delayed feedback periodicities, where k is a positive integer. Alternatively, the fifth information includes a delay (delay), where a unit of the delay is a time unit such as second, microsecond, millisecond, or nanosecond, and $k = \lceil delay/S \rceil$, where S represents time of one feedback periodicity, and $\lceil \ \rceil$ represents rounding up, for example, $\lceil 2.1 \rceil = 3$, $\lceil 2.9 \rceil = 3$, and $\lceil 3 \rceil = 3$. In this case, the fifth information may indicate that the encoding apparatus may receive the first information with a delay of k feedback periodicities after sending any feedback information, indicate that the encoding apparatus may receive the first information at latest with a delay of k feedback periodicities after sending any feedback information, or indicate that the encoding apparatus may receive the first information with a delay of k feedback periodicities after a moment of sending any feedback information. For example, when feedback information $c_t$ of a $t^{th}$ (t is a positive integer) feedback time period (or a $t^{th}$ feedback) is not successfully transmitted to the decoding apparatus, the fifth information indicates that the encoding apparatus may receive, at latest with a delay of k feedback periodicities after sending the feedback information $c_t$, the first information delivered by the decoding apparatus. In other words, when the feedback information $c_t$ of the $t^{th}$ feedback time period (or the $t^{th}$ feedback) fails to be transmitted, the fifth information indicates that the encoding apparatus may receive, at latest in a $(t+k)^{th}$ feedback time period after sending the feedback information $c_t$, the first information delivered by the decoding apparatus. For example, k is equal to 1. The fifth information indicates that the encoding apparatus may receive, at latest with a delay of one feedback periodicity after sending the feedback information, the first information delivered by the decoding apparatus. In other words, if feedback information of a previous feedback fails to be transmitted, the encoding apparatus may receive, before a next feedback, the first information delivered by the decoding apparatus, to determine that the previous feedback fails. On the contrary, if the encoding apparatus does not receive the first information before a next feedback, it indicates that a previous feedback succeeds. For another example, k is equal to 2. The fifth information indicates that the encoding apparatus may receive, at latest with a delay of two feedback periodicities after sending the feedback information, the first information delivered by the decoding apparatus. In other words, if the feedback information $c_t$ of the $t^{th}$ feedback fails to be transmitted, the encoding apparatus may receive, before a $(t+2)^{th}$ feedback, the first information delivered by the decoding apparatus, to determine that the $t^{th}$ feedback fails. On the contrary, if the encoding apparatus does not receive the first information before the $(t+2)^{th}$ feedback, it indicates that the $t^{th}$ feedback succeeds.

Optionally, the encoding apparatus may develop a storage space for storing one or more pieces of historical state information, so that after feedback information fails to be transmitted, state information input into the encoder may be rolled back to historical state information output by the encoder at a specific time. For example, the encoding apparatus may store, by using the developed storage space, state information output by the encoder each time. For example, in a $t^{th}$ (t is a positive integer) feedback time period (or a $t^{th}$ feedback), state information stored by the encoding apparatus includes $\{e_0, e_1, e_2, ..., e_{t-1}\}$. For another example, after receiving the fifth information, the encoding apparatus may determine a value of k, and may store at least k pieces of latest historical state information by using the developed storage space. In this way, the storage space can be saved, and complexity of the encoding apparatus can be reduced. For example, in a $t^{th}$ (t is a positive integer) feedback time period (or a $t^{th}$ feedback), an input of the encoder includes state information $e_{t-1}$ obtained last time, and at least k pieces of state information stored in the encoding apparatus in this case include $\{e_{t-1-k}, e_{t-k}, ..., e_{t-2}\}$. When the encoder has finished running, new state information $e_t$ is output. In other words, the state information is updated to et. In this case, the at least k pieces of state information stored in the encoding apparatus are updated to $\{e_{t-k}, e_{t-k+1}, ..., e_{t-1}\}$.

For example, k is equal to 1, and t is equal to 3. In this case, in a $3^{rd}$ feedback time period (or a $3^{rd}$ feedback), an input of the encoder includes state information $e_2$ obtained last time, and state information stored in the encoding apparatus is $\{e_1\}$. When new state information $e_3$ is output after the encoder has finished running, the state information stored in the encoding apparatus also needs to be updated to $\{e_2\}$. For another example, k is equal to 2, and t is equal to 4. In this case, in a $4^{th}$ feedback time period (or a $4^{th}$ feedback), an input of the encoder includes state information $e_3$ obtained last time, and at least two pieces of state information stored in the encoding apparatus are $\{e_1, e_2\}$. When new state information $e_4$ is output after the encoder has finished running, the at least two pieces of state information stored in the encoding apparatus also need to be updated to $\{e_2, e_3\}$.

The encoder in this embodiment of this application may be a first AI model.

In an optional embodiment, the quantity k of delayed feedback periodicities or the delay (delay) may be predefined. In this case, step S201 may not exist. In other words, the information exchange method in this embodiment of this application may not include step S201. However, in this case, the encoding apparatus still needs to store at least k pieces of latest historical state information. For details, refer to the foregoing descriptions. Details are not described herein again.

Predefining in this application may be understood as setting, pre-setting, defining in advance, storing, pre-storing, pre-negotiating, preconfiguring, solidifying, or pre-burning.

S202: The encoding apparatus (for example, the UE) sends second feedback information $c_t$ to the decoding apparatus (for example, the base station), where the second feedback information $c_t$ is feedback information that is output after second channel information $H_t$ and the state information $e_{t-1}$ obtained by the encoding apparatus last time are input into the encoder for processing.

Optionally, the encoding apparatus may perform channel measurement based on a received reference signal, to obtain channel information, where the channel information is denoted as the second channel information $H_t$ for ease of description. Then, the encoding apparatus may input the second channel information $H_t$ and the state information $e_{t-1}$ obtained by the encoding apparatus last time into the encoder for processing, to obtain feedback information, where the feedback information is denoted as the second feedback information $c_t$ for ease of description. The encoding apparatus may send the second feedback information $c_t$ to the decoding apparatus when a feedback time period arrives. For example, the encoding apparatus may perform operations such as quantization and modulation on the second feedback information $c_t$ and then send the second feedback information $c_t$. Optionally, the encoder further outputs the new state information $e_t$ (denoted as second state information for ease of description) based on the second channel information $H_t$ and the state information $e_{t-1}$ obtained by the encoding apparatus last time that are input. The state information obtained by the encoding apparatus last time may be understood as state information output by the encoder last time. The state information $e_{t-1}$ obtained by the encoding apparatus last time reflects one or more pieces of historical channel information obtained before the second channel information $H_t$ is obtained, and the new state information $e_t$ (that is, the second state information) reflects one or more pieces of historical channel information including the second channel information $H_t$. Herein, t is a positive integer, $H_t$ may be understood as a $t^{th}$ piece of channel information, $c_t$ may be understood as a $t^{th}$ piece of feedback information, $e_{t-1}$ may be understood as state information output by the encoder in a $(t-1)^{th}$ feedback time period (or a $(t-1)^{th}$ feedback), and $e_t$ may be understood as state information output by the encoder in the $t^{th}$ feedback time period (or the $t^{th}$ feedback).

For example, assuming that t is equal to 3, as shown in FIG. 6, the encoding apparatus (the UE) inputs second channel information $H_3$ and state information $e_2$ obtained by the encoding apparatus (the UE) last time into the encoder for processing, and outputs second feedback information $c_3$ and new state information $e_3$ (that is, the second state information). The new state information $e_3$ (that is, the second state information) may also be used as an input of the encoder in a next feedback. In other words, the new state information $e_3$ (that is, the second state information) may be used as an input for the encoder to generate a next piece of feedback information.

S203: The decoding apparatus (for example, the base station) sends the first information to the encoding apparatus (for example, the UE), where the first information includes or indicates a step size m of state information rollback, and the first information is for determining historical state information $e_{his}$ of the encoding apparatus, where m is a positive integer.

Correspondingly, the encoding apparatus (for example, the UE) receives the first information.

S204: The encoding apparatus (for example, the UE) inputs, based on the first information, the historical state information $e_{his}$ of the encoding apparatus and first channel information $H_q$ into the encoder for processing, to obtain first feedback information $c_q$, where the historical state information $e_{his}$ reflects one or more pieces of historical channel information obtained before the first channel information $H_q$ is obtained.

Optionally, after the encoding apparatus sends the second feedback information $c_t$ to the decoding apparatus, if the decoding apparatus receives (or demodulates) the second feedback information $c_t$ on a time-frequency resource of the second feedback information $c_t$, it indicates that the second feedback information $c_t$ is successfully transmitted. In this case, the decoding apparatus may not send the first information, and may input the second feedback information $c_t$ and state information $d_{t-1}$ obtained by the decoding apparatus last time into a decoder for processing, to obtain channel information Ht'.

If the decoding apparatus does not receive (or does not demodulate) the second feedback information $c_t$ on the time-frequency resource of the second feedback information $c_t$, it indicates that the second feedback information $c_t$ fails to be transmitted. In this case, the decoding apparatus may send the first information to the encoding apparatus. Certainly, if the second feedback information $c_t$ fails to be transmitted, it can be learned from the foregoing step S201 that the encoding apparatus may receive, at latest with the delay of k feedback periodicities (that is, a $(t+k)^{th}$ feedback time period), the first information delivered by the decoding apparatus. Therefore, the decoding apparatus needs to send the first information to the encoding apparatus before the $(t+k)^{th}$ feedback time period. The first information may be for determining the historical state information $e_{his}$ of the encoding apparatus, or the first information may be for determining state information that is input into the encoder after the first information is received. The first information may be further for notifying that the second feedback information $c_t$ fails to be transmitted, the first information may further indicate a mismatch between a transmitting end and a receiving end, or the like. The first information may include or indicate the step size (or a quantity) m of state information rollback, where m is a positive integer.

It is assumed that the decoding apparatus sends the first information to the encoding apparatus before a $q^{th}$ feedback time period, so that the encoding apparatus can receive the first information in the $q^{th}$ feedback time period (or after a $(q-1)^{th}$ feedback time period), where q is a positive integer greater than t and less than or equal to t+k. Correspondingly, the encoding apparatus receives the first information in the $q^{th}$ feedback time period or before the $q^{th}$ feedback time period (that is, before a $q^{th}$ feedback). After receiving the first information, the encoding apparatus may determine the historical state information $e_{his}$ based on the first information. For example, the historical state information $e_{his}$ of the encoding apparatus may be state information $e_{q-m-1}$ that is input by the encoder at a $(q-m)^{th}$ time, that is, $e_{his}=e_{q-m-1}$. In other words, the historical state information $e_{his}$ is state information, that is, $e_{q-1-m}$, after current state information $e_{q-1}$ is rolled back m times, where q is further greater than m, and m is less than or equal to k. It may be understood that, in the $q^{th}$ feedback time period (that is, the $q^{th}$ feedback) or before the $q^{th}$ feedback time period (that is, before the $q^{th}$ feedback), the at least k pieces of state information stored by the encoding apparatus are $\{e_{q-1-k}, e_{q-k}, ..., e_{q-2}\}$. Because m is less than or equal to k, the encoding apparatus stores the historical state information $e_{his}=e_{q-m-1}$. Therefore, after the second feedback information $c_t$ fails to be transmitted, the encoding apparatus may perform state information rollback based on an indication (for example, the first information) of the decoding apparatus, so that state information input by the encoder is consistent with state information input by the decoder.

In some scenarios, even if the second feedback information $c_t$ is successfully transmitted, the decoding apparatus may send the first information to the encoding apparatus, so that the encoding apparatus rolls back state information. In other words, the state information rollback may be controllable by the decoding apparatus. The decoding apparatus may also send the first information if the decoding apparatus expects to enable the encoding apparatus to perform state information rollback, but is not limited to sending the first information only when the feedback information fails to be transmitted.

Optionally, after receiving the first information sent by the decoding apparatus, the encoding apparatus may perform channel measurement based on a received reference signal, to obtain the first channel information $H_q$, and may input the state information $e_{q-m-1}$ and the first channel information $H_q$ into the encoder for processing, without an operation or a step of determining the historical state information $e_{his}$.

Optionally, the encoding apparatus may perform channel measurement based on a received reference signal, to obtain the first channel information $H_q$, and then may input the historical state information $e_{his}$ and the first channel information $H_q$ into the encoder for processing, to obtain the first feedback information $c_q$. The historical state information $e_{his}$ reflects one or more pieces of historical channel information obtained before the first channel information $H_q$ is obtained. For example, the historical state information $e_{his}$ reflects historical channel information that is before a $(q-m)^{th}$ feedback. Optionally, after the historical state information $e_{his}$ and the first channel information $H_q$ are input into the encoder for processing, new state information $e_q$ (that is, first state information) is further output. The new state information $e_q$ (that is, the first state information) may reflect one or more pieces of historical channel information including the first channel information $H_q$. For example, the new state information $e_q$ (that is, the first state information) reflects the first channel information $H_q$ and the historical channel information that is before the $(q-m)^{th}$ feedback.

For example, k is equal to 1, and m is also equal to 1. To be specific, after the encoding apparatus performs this time of feedback, the encoding apparatus may determine, at latest in a next feedback, whether the previous feedback succeeds. For example, after the encoding apparatus sends the second feedback information $c_t$ in the $t^{th}$ feedback time period (or the $t^{th}$ feedback), the encoding apparatus may determine, at latest in a $(t+1)^{th}$ feedback time period (or a $(t+1)^{th}$ feedback), whether the second feedback information $c_t$ is successfully transmitted. In this case, q=t+k=t+1. In other words, the first feedback information $c_q=c_{t+1}$ is a next piece of feedback information of the second feedback information $c_t$. In addition, in the $(t+1)^{th}$ feedback time period (or the $(t+1)^{th}$ feedback), state information stored in the encoding apparatus is $\{e_{t-1}\}$.

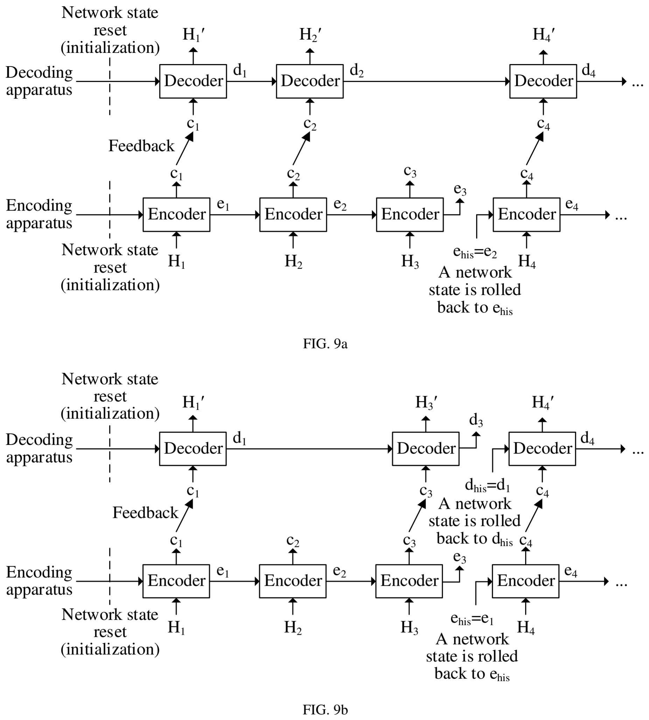

Refer to FIG. 9a. FIG. 9a is a first schematic flowchart of processing of an encoding apparatus and a decoding apparatus according to an embodiment of this application. As shown in FIG. 9a, t is equal to 3. If second feedback information $c_3$ fails to be transmitted, and the decoding apparatus notifies, by using the first information, the encoding apparatus that the step size (or the quantity) m of the state information rollback is equal to 1, the historical state information of the encoding apparatus is $e_{his}=e_{q-m-1}=e_{t-1}=e_2$. In a $4^{th}$ feedback time period (or a $4^{th}$ feedback), an input of the encoder includes $e_{his}=e_2$ and first channel information $H_4$, and an output of the encoder is new state information $e_4$ (that is, the first state information) and first feedback information $c_4$. It may be understood that, because the second feedback information $c_3$ fails to be transmitted, and the encoding apparatus receives the first information before the $4^{th}$ feedback, in the $4^{th}$ feedback, the encoder no longer uses state information $e_3$ obtained last time as an input, but rolls back state information to $e_2$, and uses the state information $e_2$ output by the encoder in a $2^{nd}$ feedback as an input of the encoder in the $4^{th}$ feedback. In this way, for the $4^{th}$ feedback, the state information $e_2$ input by the encoder is consistent with state information $d_2$ input by the decoder. This not only improves decoding performance of a base station side (or the decoder), but also reduces a communication performance loss and improves communication quality.

For another example, k is equal to 3, and m is equal to 2. To be specific, after the encoding apparatus sends the

second feedback information $c_t$ in the $t^{th}$ feedback time period (or the $t^{th}$ feedback), the encoding apparatus may determine, at latest in a $(t+3)^{th}$ feedback time period (or a $(t+3)^{th}$ feedback), whether the second feedback information $c_t$ is successfully transmitted, where $t<q\leq t+k=t+3$. To be specific, the first feedback information $c_q$ is a $(q-t)^{th}$ piece of feedback information that is after the second feedback information $c_t$. Assuming that q is equal to t+2, the encoding apparatus receives the first information in a $(t+2)^{th}$ feedback time period (or a $(t+2)^{th}$ feedback). In addition, in the (t+2) feedback time period (or the $(t+2)^{th}$ feedback), three pieces of state information stored in the encoding apparatus are $\{e_{t-2}, e_{t-1}, e_t\}$.

Refer to FIG. 9b. FIG. 9b is a second schematic flowchart of processing of an encoding apparatus and a decoding apparatus according to an embodiment of this application. As shown in FIG. 9b, t is equal to 2. If second feedback information $c_2$ fails to be transmitted, and the decoding apparatus notifies, by using the first information in a $4^{th}$ feedback time period (or a $4^{th}$ feedback), the encoding apparatus that the step size m of the state information rollback is equal to 2, the historical state information of the encoding apparatus is $e_{his}=e_{q-m-1}=e_{t-1}=e_1$. In the $4^{th}$ feedback time period (or the $4^{th}$ feedback), an input of the encoder includes $e_{his}=e_1$ and first channel information $H_4$, and an output of the encoder is new state information $e_4$ (that is, the first state information) and first feedback information $c_4$. It may be understood that, in a $3^{rd}$ feedback, an input of the encoder includes state information $e_2$ obtained last time, and an output of the encoder includes state information $e_3$. However, in the $4^{th}$ feedback, when the encoding apparatus receives the first information, the encoder does not use the state information $e_3$ obtained last time as an input, but rolls back state information to $e_1$, and uses the state information $e_1$ output by the encoder in a $1^{st}$ feedback as an input of the encoder in the $4^{th}$ feedback. In this way, for the $4^{th}$ feedback, the state information $e_1$ input by the encoder is consistent with state information $d_1$ input by the decoder.

S205: The encoding apparatus (for example, the UE) sends the first feedback information $c_q$ to the decoding apparatus (for example, the base station), where the first feedback information $c_q$ includes encoding information of the first channel information $H_q$ or encoding information of predicted channel information.

Correspondingly, the decoding apparatus (for example, the base station) receives the first feedback information $c_q$.

Optionally, after obtaining the first feedback information $c_q$, the encoding apparatus may perform operations such as quantization and modulation on the first feedback information $c_q$, and then send the first feedback information $c_q$.

Optionally, the encoding apparatus may send the first feedback information $c_q$ when the $q^{th}$ feedback time period arrives, or the encoding apparatus may generate and send the first feedback information $c_q$ in the $q^{th}$ feedback time period. This is not limited in this embodiment of this application.

Optionally, for a relationship between the first channel information $H_q$ and the first feedback information $c_q$, refer to related descriptions in Embodiment 1. Details are not described herein again.

Optionally, after step S205, the information exchange method may further include the following step.

S206: The decoding apparatus (for example, the base station) inputs the first feedback information $c_q$ and historical state information $d_{his}$ of the decoding apparatus into the decoder for processing, to obtain third channel information $H_q'$, where the historical state information $d_{his}$ reflects one or more pieces of historical feedback information obtained before the first feedback information $c_q$ is obtained.

Optionally, the decoding apparatus may also develop a storage space for storing one or more pieces of historical state information, so that after feedback information fails to be transmitted, historical state information output by the decoder at a specific time may be for decoding subsequently received feedback information. For example, the decoding apparatus may store, by using the developed storage space, state information output by the decoder each time. For example, in a $t^{th}$ (t is a positive integer) feedback time period (or a $t^{th}$ feedback), state information stored in the decoding apparatus includes $\{d_0, d_1, d_2, ..., d_{t-1}\}$. For another example, the decoding apparatus may store at least k pieces of latest historical state information by using the developed storage space. In this way, storage space can be saved, and complexity of the decoding apparatus can be reduced. For example, in a $t^{th}$ (t is a positive integer) feedback time period (or a $t^{th}$ feedback), an input of the decoder includes state information $d_{t-1}$ obtained last time, and at least k pieces of state information stored in the decoding apparatus in this case include $\{d_{t-1-k}, d_{t-k}, ..., d_{t-2}\}$. When the decoder has finished running, new state information $d_t$ is output. In other words, state information is updated to $d_t$. In this case, the at least k pieces of state information stored in the decoding apparatus are updated to $\{d_{t-k}, d_{t-k+1}, ..., d_{t-1}\}$.

Optionally, a decoding process (for example, step S206) of the decoding apparatus may be an inverse process of an encoding process (for example, step S204) of the encoding apparatus. Specifically, the decoding apparatus may determine the historical state information $d_{his}$ based on the first information. It is assumed that the decoding apparatus sends the first information to the encoding apparatus before the $q^{th}$ feedback time period, where q is a positive integer greater than t and less than or equal to t+k. For example, the historical state information $d_{his}$ of the decoding apparatus may be state information $d_{q-m-1}$ that is input by the decoder at the $(q-m)^{th}$ time, that is, $d_{his}=d_{q-m-1}$. In other words, the historical state information $d_{his}$ is state information, that is, $d_{q-1-m}$, obtained after current state information $d_{q-1}$ is rolled back m times, where q is further greater than m, and m is less than or equal to k. The decoder in this embodiment of this application may be a second AI model. Then, the decoding apparatus may input the first feedback information $c_q$ and the historical state information $d_{his}$ that are received in the $q^{th}$ feedback time period into the decoder for processing, to obtain the third channel information $H_q$'. Optionally, after sending the first information, the decoding apparatus may also input the first feedback information $c_q$ and the state information $d_{q-m-1}$ that are received in the $q^{th}$ feedback time period into the decoder for processing, without an operation or a step of determining the historical state information $d_{his}$.

For example, the historical state information $d_{his}$ reflects one or more pieces of historical feedback information obtained before the first feedback information $c_q$ is obtained. For example, the historical state information $d_{his}$ reflects historical feedback information that is before the $(q-m)^{th}$ feedback. Optionally, after the historical state information $d_{his}$ and the first feedback information $c_q$ are input into the decoder for processing, new state information $d_q$ (that is, third state information) is further output. The new state information $d_q$ (that is, the third state information) may reflect one or more pieces of historical feedback information including the first feedback information $c_q$. For example, the new state information $d_q$ (that is, the third state information) reflects the first feedback information $H_q$ and the historical feedback information that is before the $(q-m)^{th}$ feedback.

For example, as shown in FIG. 9a, k is equal to 1, m is also equal to 1, t is equal to 3, and q=t+1=4. If the second feedback information $c_3$ fails to be transmitted, the historical state information of the decoding apparatus is $d_{his}=d_{q-m-1}=d_{t-1}=d_2$. In this case, for the $4^{th}$ feedback, an input of the decoder includes $d_{his}=d_2$ and the first feedback information $c_4$, and an output of the decoder is new state information $d_4$ (that is, the third state information) and third channel information $H_4$'. The third channel information $H_4$' may be understood as channel information restored based on the first feedback information $c_4$.

For another example, as shown in FIG. 9b, k is equal to 3, m is equal to 2, t is equal to 2, and q=t+2=4. If the second feedback information $c_2$ fails to be transmitted, the historical state information of the decoding apparatus is $d_{his}=d_{q-m-1}=d_{t-1}=d_1$. In this case, for the $4^{th}$ feedback, an input of the decoder includes historical state information $d_{his}=d_1$ and the first feedback information $c_4$, and an output of the decoder is new state information $d_4$ (that is, the third state information) and third channel information $H_4$'. The third channel information $H_4$' may be understood as channel information restored based on the first feedback information $c_4$. Optionally, for the $3^{rd}$ feedback, if the feedback information $c_3$ is successfully transmitted, an input of the decoder may include state information $d_1$ output by the decoder for a $1^{st}$ time and feedback information $c_3$, and an output of the decoder is new state information $d_3$ and channel information $H_3$'. However, the state information $d_3$ is not used as a next input of the decoder.

It may be understood that, in an ideal case, the decoder can completely restore the first channel information $H_q$ processed by the encoder. In this case, the third channel information $H_q$' restored by the decoder based on the first feedback information $c_q$ and the historical state information $d_{his}$ is the same as the first channel information $H_q$ input by the encoder, or is the same as channel information predicted by the encoder based on the first channel information $H_q$. However, in actual application, the decoder cannot completely restore the first channel information $H_q$ processed by the encoder. Therefore, in actual application, the third channel information $H_q$' and the first channel information $H_q$ input by the encoder have specific (or subtle) differences, or the third channel information $H_q$' and the channel information predicted by the encoder based on the first channel information $H_q$ have specific (or subtle) differences. In some scenarios, these differences may be ignored.

The decoding apparatus in embodiment of this application indicates the encoder of the encoding apparatus to roll back state information to a specific piece of historical state information $e_{his}$. In this way, for a same feedback, state information input by the encoder is consistent with state information input by the decoder, thereby improving decoding performance of the base station side (or the decoder), reducing a communication performance loss, and improving communication quality.

Embodiment 3

Embodiment 3 of this application mainly describes a case in which an encoding apparatus (for example, UE) periodically stores state information based on an indication of a decoding apparatus (for example, a base station) or according to a predefined rule, so that the encoding apparatus performs state information rollback based on the indication of the decoding apparatus.

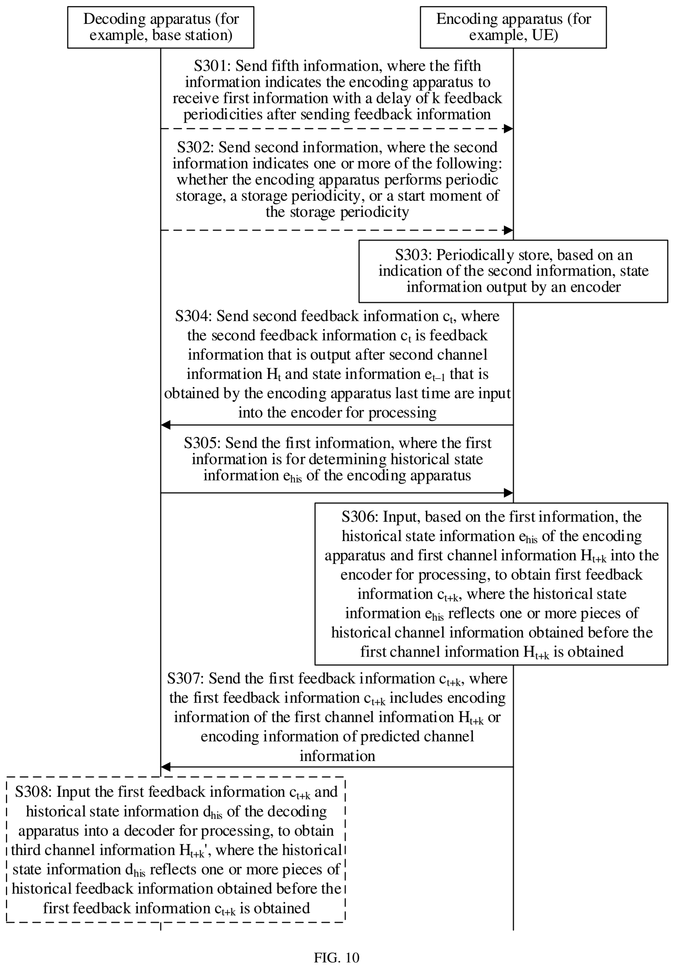

Refer to FIG. 10. FIG. 10 is a third schematic flowchart of an information exchange method according to an embodiment of this application. As shown in FIG. 10, the information exchange method includes but is not limited to the following steps.

S301: A decoding apparatus (for example, a base station) sends fifth information to an encoding apparatus (for example, UE), where the fifth information indicates the encoding apparatus to receive first information with a delay of k feedback periodicities after sending feedback information.

Correspondingly, the encoding apparatus (for example, the UE) receives the fifth information.

Optionally, the fifth information includes a quantity k of delayed feedback periodicities, where k is a positive integer. Alternatively, the fifth information includes a delay (delay), where a unit of the delay is a time unit such as second, microsecond, millisecond, or nanosecond, and $k=\lceil delay/S \rceil$, where S represents time of one feedback periodicity, and $\lceil \rceil$ represents rounding up. In this case, the fifth information may indicate that the encoding apparatus may receive the first information with a delay of k feedback periodicities after sending any feedback information, indicate that the encoding apparatus may receive the first information at latest with a delay of k feedback periodicities after sending any feedback information, or indicate that the encoding apparatus may receive the first information with a delay of k feedback periodicities after a moment of sending any feedback information. For example, when feedback information $c_t$ of a $t^{th}$ (t is a positive integer) feedback time period (or a $t^{th}$ feedback) is not successfully transmitted to the decoding apparatus, the fifth information indicates that the encoding apparatus may receive, at latest with a delay of k feedback periodicities after sending the feedback information $c_t$, the first information delivered by the decoding apparatus. In other words, when the feedback information $c_t$ of the $t^{th}$ feedback time period (or the $t^{th}$ feedback) fails to be transmitted, the fifth information indicates that the encoding apparatus may receive, at latest in a $(t+k)^{th}$ feedback time period after sending the feedback information $c_t$, the first information delivered by the decoding apparatus. For example, k is equal to 1. The fifth information indicates that the encoding apparatus may receive, at latest with a delay of one feedback periodicity after sending the feedback information, the first information delivered by the decoding apparatus. In other words, if feedback information of a previous feedback fails to be transmitted, the encoding apparatus may receive, before a next feedback, the first information delivered by the decoding apparatus, to determine that the previous feedback fails. On the contrary, if the encoding apparatus does not receive the first information before a next feedback, it indicates that a previous feedback succeeds. For another example, k is equal to 2, and the fifth information indicates that the encoding apparatus may receive, at latest with a delay of two feedback periodicities after sending the feedback information, the first information delivered by the decoding apparatus. In other words, if the feedback information $c_t$ of the $t^{th}$ feedback fails to be transmitted, the encoding apparatus may receive, before a $(t+2)^{th}$ feedback, the first information delivered by the decoding apparatus, to determine that the $t^{th}$ feedback fails. On the contrary, if the encoding apparatus does not receive the first information before the $(t+2)^{th}$ feedback, it indicates that the $t^{th}$ feedback succeeds.

In an optional embodiment, the quantity k of delayed feedback periodicities or the delay (delay) may be predefined. In this case, step S301 may not exist. In other words, the information exchange method in this embodiment of this application may not include step S301.

S302: The decoding apparatus (for example, the base station) sends second information to the encoding apparatus (for example, the UE), where the second information indicates one or more of the following: whether the encoding apparatus performs periodic storage, a storage periodicity, or a start moment of the storage periodicity.

Correspondingly, the encoding apparatus (for example, the UE) receives the second information.

S303: The encoding apparatus (for example, the UE) periodically stores, based on an indication of the second information, state information output by an encoder.

It may be understood that, the encoding apparatus may develop a storage space for storing one or more pieces of historical state information, so that after the feedback information fails to be transmitted, the state information input into the encoder may be rolled back to historical state information stored at a specific time. Similarly, the decoding apparatus may also develop a storage space for storing one or more pieces of historical state information, so that after feedback information fails to be transmitted, historical state information output by a decoder at a specific time may be for decoding subsequently received feedback information.

Optionally, the decoding apparatus sends the second information to the encoding apparatus, where the second information may indicate one or more of the following: whether the encoding apparatus performs periodic storage, a storage periodicity, or a start moment of the storage periodicity. When the second information indicates the encoding apparatus to perform periodic storage, a storage periodicity and/or a start moment of the storage periodicity may be predefined, or may be indicated by the decoding apparatus by using the second information. In other words, the second information may further indicate one or more of the following: the storage periodicity or the start moment of the storage periodicity. After receiving the second information, the encoding apparatus may periodically store, based on the indication of the second information, the state information output by the encoder. For example, starting from the start moment of the storage periodicity, the encoding apparatus stores, at an interval of the storage periodicity T, the state information output by the encoder. For example, the start moment of the storage periodicity may be a moment of a $1^{st}$ feedback or the moment of the $1^{st}$ feedback plus an offset, may be a moment of initializing state information $e_0$ or the moment of initializing the state information $e_0$ plus an offset, or may be a moment of a $1^{st}$ time of running of the encoder or the moment of the $1^{st}$ time of running of the encoder plus an offset. The start moment of the storage periodicity is not limited in this embodiment of this application.

The storage periodicity T may be understood as an interval between two times of adjacent storage. A storage operation is performed when a storage periodicity arrives. The storage periodicity T may be an integer multiple of a feedback periodicity S. Details are not further described below. For ease of description, the following uses an example in which the start moment of the storage periodicity is a moment at which the encoder starts to run. When the second information indicates that the encoding apparatus does not perform periodic storage, the encoding apparatus may use the storage manner described in the foregoing Embodiment 2, for example, storing at least k pieces of latest historical state information or storing state information output by the encoder each time, or use another storage manner. This is not limited in this embodiment of this application. This embodiment of this application mainly focuses on periodic storage.

Specifically, that the encoding apparatus periodically stores the state information output by the encoder includes: The encoding apparatus temporarily stores (in an $n^{th}$ storage periodicity) state information $e_{n(T/S)-k}$ obtained in an $(n(T/S)-k)^{th}$ feedback. The encoding apparatus receives, in an $(n(T/S))^{th}$ feedback time period, third information sent by the decoding apparatus. When a value of the third information is a first value, the encoding apparatus stores, in the $(n(T/S))^{th}$ feedback time period, state information stored in an $((n-1)*(T/S))^{th}$ feedback time period. When the value of the third information is a second value, the encoding apparatus stores, in the $(n(T/S))^{th}$ feedback time period, the state information $e_{n(T/S)-k}$ obtained in an $(n(T/S)-k)^{th}$ feedback time period, where n is 1, 2, 3.... The first value is 0, and the second value is 1; or the first value is 1, and the second value is 0. This is not limited in this embodiment of this application. For example, if the $(n(T/S)-k)^{th}$ feedback of the encoding apparatus succeeds, the third information may be set to the second value; and if the $(n(T/S)-k)^{th}$ feedback of the encoding apparatus fails, the third information may be set to the first value.

For example, T is equal to S, that is, T/S=1, and k is equal to 1. It is assumed that the first value is 0, and the second value is 1. In an $n^{th}$ feedback time period (or an $n^{th}$ feedback), an input of the encoder includes state information $e_{t-1}$ obtained last time, and the encoding apparatus may temporarily store the state information $e_{n-1}$ obtained last time. In the $n^{th}$ feedback time period (or the $n^{th}$ feedback), the encoding apparatus further receives the third information sent by the decoding apparatus. If the value of the third information is 0, the encoding apparatus stores, in the $n^{th}$ feedback time period, state information stored in an $(n-1)^{th}$ feedback time period. If the value of the third information is 1, the encoding apparatus stores, in the $n^{th}$ feedback time period, the state information $e_{t-1}$ obtained last time (that is, an $(n-1)^{th}$ feedback).

For another example, T is twice S, that is, T/S=2, and k is equal to 2. It is assumed that the first value is 0, and the second value is 1. In a $(2n-1)^{th}$ feedback time period (or a $(2n-1)^{th}$ feedback), an input of the encoder includes state information $e_{2n-2}$ obtained last time, and the encoding apparatus may temporarily store the state information $e_{2n-2}$. In a $(2n)^{th}$ feedback time period (or a $(2n)^{th}$ feedback), the encoding apparatus receives the third information sent by the decoding apparatus. If the value of the third information is 1, it indicates that feedback information $c_{2n-2}$ sent in a penultimate feedback time period (that is, an $(2n-2)^{th}$ feedback time period) is successfully transmitted, that is, the decoding apparatus has state information $d_{2n-2}$ that matches the state information $e_{2n-2}$ of the encoding apparatus. The encoding apparatus may store the state information $e_{2n-2}$ obtained in the $(2n-2)^{th}$ feedback time period. If the value of the third information is 0, it indicates that the feedback information $c_{2n-2}$ sent in the penultimate feedback time period (that is, the $(2n-2)^{th}$ feedback time period) fails to be transmitted. In this case, the encoding apparatus stores, in the $(2n)^{th}$ feedback time period (or the $(2n)^{th}$ feedback), state information stored by the encoding apparatus in a $(2(n-1))^{th}$ feedback time period, and may delete the temporarily stored state information $e_{2n-2}$.

Optionally, the encoding apparatus and the decoding apparatus may use a same storage manner. When the second information indicates the encoding apparatus to perform periodic storage, the decoding apparatus may also periodically store state information output by the decoder. Storage periodicities of the decoding apparatus and the encoding apparatus are the same, and are both T, and the storage periodicity T is an integer multiple of the feedback periodicity S. Start moments of the storage periodicities of the decoding apparatus and the encoding apparatus are also consistent. For example, the start moment of the storage periodicity of the encoding apparatus is when the encoder starts to run, and correspondingly, the start moment of the storage periodicity of the decoding apparatus is when the decoder starts to run. Alternatively, the start time of the storage periodicity of the encoding apparatus is a moment of a $1^{st}$ feedback or the moment of the $1^{st}$ feedback plus an offset. Correspondingly, the start time of the storage periodicity of the decoding apparatus is a moment of a $1^{st}$ time of receiving feedback information or the moment of the $1^{st}$ time of receiving the feedback information plus an offset. Alternatively, the start moment of the storage periodicity of the encoding apparatus is a moment of initializing state information $e_0$ or the moment of initializing the state information $e_0$ plus an offset. Correspondingly, the start moment of the storage periodicity of the decoding apparatus is a moment of initializing state information $d_0$ or the moment of initializing the state information $d_0$ plus an offset. Examples are not listed one by one herein.

For example, starting from the start moment of the storage periodicity of the decoding apparatus, the decoding apparatus stores, at an interval of the storage periodicity T, state information output by the decoder. For example, when the decoding apparatus receives an $(n(T/S)-k)^{th}$ piece of feedback information (or an $(n(T/S)-k)^{th}$ feedback), the decoding apparatus sets the third information to the second value and sends the third information to the encoding apparatus, and the decoding apparatus may store state information, that is, $d_{n(T/S)-k}$, output by the decoder at an $(n(T/S)-k)^{th}$ time, where n is 1, 2, 3.... Certainly, if the decoding apparatus does not receive the $(n(T/S)-k)^{th}$ piece of feedback information, the decoding apparatus sets the third information to the first value and sends the third information to the encoding apparatus, and the decoding apparatus stores state information stored in the $((n-1)*(T/S))^{th}$ feedback time period.

In an optional embodiment, the following may also be predefined: Both the encoding apparatus and the decoding apparatus perform periodic storage, a storage periodicity T, and a start moment of the storage periodicity. In this case, step S302 may not exist. In other words, the information exchange method in this embodiment of this application may not include step S302, and step S303 may be replaced with: The encoding apparatus (for example, the UE) periodically stores, based on a predefined storage periodicity T and a start moment of the storage periodicity, state information output by the encoder. Similarly, the decoding apparatus may also periodically store, based on the predefined storage periodicity T and the start moment of the storage periodicity, state information output by the decoder.

It may be understood that, if both step S302 and step S301 exist, an execution sequence of step S301 and step S302 may not be limited. For example, step S302 is performed before step S301, step S302 is performed after step S301, or step S301 and step S302 are performed simultaneously. This is not limited in this embodiment of this application.

S304: The encoding apparatus (for example, the UE) sends second feedback information $c_t$ to the decoding apparatus (for example, the base station), where the second feedback information $c_t$ is feedback information that is output after second channel information $H_t$ and the state information $e_{t-1}$ obtained by the encoding apparatus last time are input into the encoder for processing.

Optionally, for an implementation of step S304 in this embodiment of this application, refer to the implementation of step S202 in Embodiment 2. Details are not described herein again.

S305: The decoding apparatus (for example, the base station) sends the first information to the encoding apparatus (for example, the UE), where the first information is for determining historical state information $e_{his}$ of the encoding apparatus.

Correspondingly, the encoding apparatus (for example, the UE) receives the first information, and determines that the historical state information $e_{his}$ is state information stored in a previous storage periodicity.

S306: The encoding apparatus (for example, the UE) inputs, based on the first information, the historical state information $e_{his}$ of the encoding apparatus and first channel information $H_{t+k}$ into the encoder for processing, to obtain first feedback information $c_{t+k}$, where the historical state information $e_{his}$ reflects one or more pieces of historical channel information obtained before the first channel information $H_{t+k}$ is obtained.

Optionally, after the encoding apparatus sends the second feedback information $c_t$ to the decoding apparatus, if the decoding apparatus receives (or demodulates) the second feedback information $c_t$ on a time-frequency resource of the second feedback information $c_t$, it indicates that the second feedback information ct is successfully transmitted. In this case, the decoding apparatus may not send the first information, and may input the second feedback information $c_t$ and state information $d_{t-1}$ obtained by the decoding apparatus last time into the decoder for processing, to obtain channel information Ht'.

If the decoding apparatus does not receive (or does not demodulate) the second feedback information $c_t$ on the time-frequency resource of the second feedback information $c_t$, it indicates that the second feedback information $c_t$ fails to be transmitted. In this case, the decoding apparatus may send the first information to the encoding apparatus. Certainly, if the second feedback information $c_t$ fails to be transmitted, it can be learned from the foregoing step S301 that the encoding apparatus can receive, at latest with a delay of k feedback periodicities, the first information delivered by the decoding apparatus. Therefore, the decoding apparatus needs to send the first information to the encoding apparatus before a $(t+k)^{th}$ feedback time period, so that the encoding apparatus can receive the first information in the $(t+k)^{th}$ feedback time period (or after a $(t+k-1)^{th}$ feedback time period). The first information may be for determining the historical state information $e_{his}$ of the encoding apparatus, or the first information may be for determining state information that is input into the encoder after the first information is received. The first information may be further for notifying that the second feedback information $c_t$ fails to be transmitted, the first information may further indicate a mismatch between a transmitting end and a receiving end, or the like. In some scenarios, even if the second feedback information $c_t$ is successfully transmitted, the decoding apparatus may send the first information to the encoding apparatus, so that the encoding apparatus rolls back state information. In other words, the state information rollback may be controllable by the decoding apparatus. The decoding apparatus may also send the first information if the decoding apparatus expects to enable the encoding apparatus to perform state information rollback, but is not limited to sending the first information only when the feedback information fails to be transmitted.

It is assumed that the decoding apparatus sends the first information to the encoding apparatus before the $(t+k)^{th}$ feedback time period. Correspondingly, the encoding apparatus receives the first information in the $(t+k)^{th}$ feedback time period. Optionally, after receiving the first information sent by the decoding apparatus, the encoding apparatus may perform channel measurement based on a received reference signal, to obtain first channel information $H_q$, and may input state information stored in a previous storage periodicity and the first channel information $H_q$ into the encoder for processing, without an operation or a step of determining the historical state information $e_{his}$.

Optionally, after receiving the first information, the encoding apparatus may determine the historical state information $e_{his}$ based on the first information. For example, the encoding apparatus determines, based on the received first information, that the historical state information $e_{his}$ is state information stored in a previous storage periodicity.

For example, the $(t+k)^{th}$ feedback time period or the $(t+k)^{th}$ feedback is just a time node of periodic storage of the encoding apparatus, that is, t+k=n(T/S). In this case, after receiving the first information in the $(n(T/S))^{th}$ feedback time period, the encoding apparatus may determine that the historical state information $e_{his}$ is the state information stored by the encoding apparatus in the $((n-1)*(T/S))^{th}$ feedback time period. For another example, the $(t+k)^{th}$ feedback time period or the $(t+k)^{th}$ feedback is not a time node for periodic storage of the encoding apparatus, that is, t+k is not equal to n(T/S). In this case, after receiving the first information in the $(t+k)^{th}$ feedback time period, the encoding apparatus may determine that the historical state information $e_{his}$ is state information stored by the encoding apparatus in a previous storage periodicity of the $(t+k)^{th}$ feedback time period.

The encoding apparatus may perform channel measurement based on a received reference signal, to obtain the first channel information $H_{t+k}$, and then input the historical state information $e_{his}$ and the first channel information $H_{t+k}$ into the encoder for processing, to obtain the first feedback information $c_{t+k}$. The historical state information $e_{his}$ reflects one or more pieces of historical channel information obtained before the first channel information $H_{t+k}$ is obtained. Optionally, after the historical state information $e_{his}$ and the first channel information $H_{t+k}$ are input into the encoder for processing, new state information $e_{t+k}$ (that is, first state information) is further output. The new state information $e_{t+k}$ (that is, the first state information) may reflect one or more pieces of historical channel information including the first channel information $H_{t+k}$.

For example, if k is equal to 1, it indicates that after the encoding apparatus performs this time of feedback, the encoding apparatus may determine, at latest before a next feedback, whether the previous feedback succeeds. It is assumed that T is equal to S, that is, T/S=1. In an $n^{th}$ (n is 1, 2, 3...) feedback time period (or an $n^{th}$ feedback), if the encoding apparatus does not receive the first information yet, the encoding apparatus may input state information $e_{n-1}$ obtained at a previous time (that is, an $(n-1)^{th}$ feedback) and channel information $H_n$ into the encoder for processing, to obtain feedback information $c_n$ and send the feedback information. If the encoding apparatus receives the first information in the $n^{th}$ feedback time period (or the $n^{th}$ feedback), the encoding apparatus may determine that the historical state information $e_{his}$ is state information stored by the encoding apparatus in an $(n-1)^{th}$ feedback time period (or the $(n-1)^{th}$ feedback). It is assumed that T is twice S, that is, T/S=2. In an $(2n)^{th}$ (n is 1, 2, 3...) feedback time period (or a $(2n)^{th}$ feedback), if the encoding apparatus does not receive the first information yet, the encoding apparatus may input state information $e_{2n-1}$ obtained at a previous time (that is, a $(2n-1)^{th}$ feedback) and channel information $H_{2n}$ into the encoder for processing, to obtain feedback information $c_{2n}$ and send the feedback information. If the encoding apparatus receives the first information in the $(2n)^{th}$ feedback time period (or the $(2n)^{th}$ feedback), the encoding apparatus may determine that the historical state information $e_{his}$ is state information stored by the encoding apparatus in a $(2(n-1))^{th}$ feedback time period (or a $(2(n-1))^{th}$ feedback).

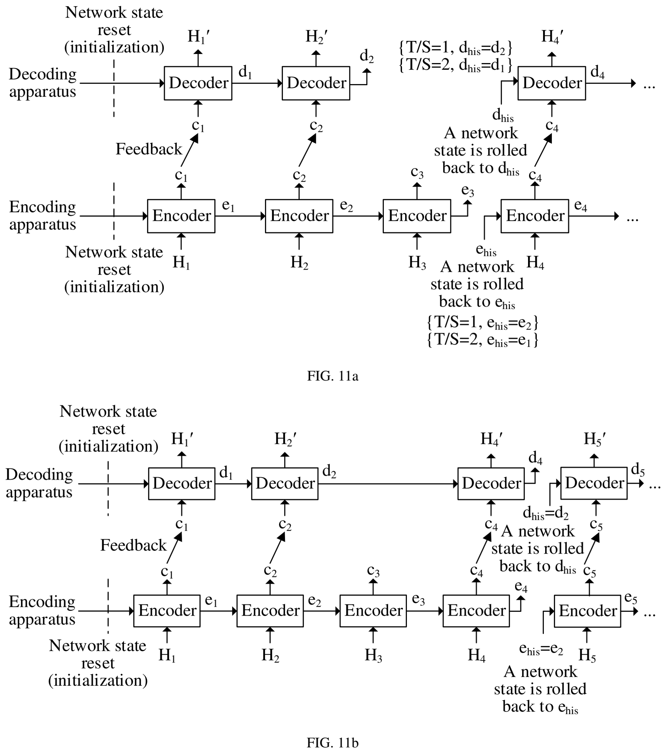

Refer to FIG. 11a. FIG. 11a is a third schematic flowchart of processing of an encoding apparatus and a decoding apparatus according to an embodiment of this application. As shown in FIG. 11a, k is equal to 1, t is equal to 3, second feedback information $c_3$ fails to be transmitted, and the decoding apparatus notifies, by using the first information before a $4^{th}$ feedback, the encoding apparatus that the second feedback information $c_3$ fails to be transmitted. If T/S=1, when n is equal to 4, that is, in a $4^{th}$ feedback time period (or the $4^{th}$ feedback), after receiving the first information, the encoding apparatus may determine that the historical state information $e_{his}$ is state information stored by the encoding apparatus in a $3^{rd}$ feedback time period (or a $3^{rd}$ feedback). If the value of the third information received by the encoding apparatus in the $3^{rd}$ feedback time period is the second value, the state information stored by the encoding apparatus in the $3^{rd}$ feedback time period (or the $3^{rd}$ feedback) is $e_2$. In this case, the historical state information $e_{his}$ is equal to $e_2$. If the value of the third information received by the encoding apparatus in the $3^{rd}$ feedback time period is the first value, it indicates that feedback information $c_2$ also fails to be transmitted, and the state information stored by the encoding apparatus in the $3^{rd}$ feedback time period (or the $3^{rd}$ feedback) is state information stored by the encoding apparatus in a $2^{nd}$ feedback time period. The state information stored by the encoding apparatus in the $2^{nd}$ feedback time period depends on the value of the third information received by the encoding apparatus in the $2^{nd}$ feedback time period.

If T/S=2, when n is equal to 2, that is, in a $4^{th}$ feedback time period (or a $4^{th}$ feedback), after receiving the first information, the encoding apparatus may determine that the historical state information $e_{his}$ is state information stored by the encoding apparatus in a $2^{nd}$ feedback time period (or a $2^{nd}$ feedback). If the value of the third information received by the encoding apparatus in the $2^{nd}$ feedback time period is the second value, the state information stored by the encoding apparatus in the $2^{nd}$ feedback time period (or the $2^{nd}$ feedback) is $e_1$, that is, the historical state information $e_{his}$ is equal to $e_1$. If the value of the third information received by the encoding apparatus in the $2^{nd}$ feedback time period is the first value, the state information stored by the encoding apparatus in the $2^{nd}$ feedback time period (or the $2^{nd}$ feedback) is initial state information $e_0$ of the encoding apparatus.

Therefore, if the second feedback information $c_3$ fails to be transmitted, in a $4^{th}$ feedback, the encoder no longer uses state information $e_3$ obtained last time (that is, in the $3^{rd}$ feedback) as an input, but rolls back state information to the historical state information $e_{his}$.

Refer to FIG. 11b. FIG. 11b is a fourth schematic flowchart of processing of an encoding apparatus and a decoding apparatus according to an embodiment of this application. As shown in FIG. 11b, k is equal to 2, t is equal to 3, the second feedback information $c_3$ fails to be transmitted, and the decoding apparatus notifies, by using the first information before a $5^{th}$ feedback, the encoding apparatus that the second feedback information $c_3$ fails to be transmitted. If T/S=1, when n is equal to 4, that is, in a $5^{th}$ feedback time period (or the $5^{th}$ feedback), after receiving the first information, the encoding apparatus may determine that the historical state information $e_{his}$ is state information stored by the encoding apparatus in a $4^{th}$ feedback time period (or a $4^{th}$ feedback). If the value of the third information received by the encoding apparatus in the $4^{th}$ feedback time period is the second value, the state information stored by the encoding apparatus in the

$4^{th}$ feedback time period (or the $4^{th}$ feedback) is $e_2$, that is, the historical state information $e_{his}$ is equal to $e_2$. If the value of the third information received by the encoding apparatus in the $4^{th}$ feedback time period is the first value, it indicates that feedback information $c_2$ also fails to be transmitted, and the state information stored by the encoding apparatus in the $4^{th}$ feedback time period (or the $4^{th}$ feedback) is state information stored by the encoding apparatus in a $3^{rd}$ feedback time period. The state information stored by the encoding apparatus in the $4^{th}$ feedback time period depends on the value of the third information received by the encoding apparatus in the $3^{rd}$ feedback time period.

If T/S=2, when n is equal to 2, that is, in a $4^{th}$ feedback time period (or a $4^{th}$ feedback), if the value of the third information received by the encoding apparatus is the second value, state information stored by the encoding apparatus in the $4^{th}$ feedback time period (or the $4^{th}$ feedback) is $e_2$. In a $5^{th}$ feedback time period (or a $5^{th}$ feedback), the encoding apparatus receives the first information, and may determine that the historical state information $e_{his}$ is state information stored by the encoding apparatus in a previous storage periodicity of the $5^{th}$ feedback time period (that is, the state information stored in the $4^{th}$ feedback time period), that is, the historical state information $e_{his}$ is $e_2$. If the value of the third information received by the encoding apparatus in the $4^{th}$ feedback time period is the first value, it indicates that feedback information $c_2$ also fails to be transmitted, and the state information stored by the encoding apparatus in the $4^{th}$ feedback time period (or the $4^{th}$ feedback) is state information stored by the encoding apparatus in a $3^{rd}$ feedback time period.

Therefore, if the second feedback information $c_3$ fails to be transmitted, in a $5^{th}$ feedback, the encoder no longer uses state information $e_4$ obtained last time (that is, the $4^{th}$ feedback) as an input, but rolls back state information to the historical state information $e_{his}$.

In some possible implementations, the third information and the first information may be same information, or may certainly be different information. When the third information is different from the first information, the third information and the first information may be carried in one piece of signaling, or may be carried in different pieces of signaling. When the third information and the first information are same information, functions of the two pieces of information may be combined. In other words, one piece of information not only indicates the encoding apparatus to store state information, but also is for determining the historical state information of the encoding apparatus. Details are not described herein. In addition, when the third information and the first information are same information, the fifth information (that is, step S301) may not exist, or may certainly exist. When the fifth information exists, regardless whether a feedback succeeds, a piece of information may be received with a delay of k feedback periodicities (the information has a function of both the third information and the first information).

S307: The encoding apparatus (for example, the UE) sends the first feedback information $c_{t+k}$ to the decoding apparatus (for example, the base station), where the first feedback information $c_{t+k}$ includes encoding information of the first channel information $H_{t+k}$ or encoding information of predicted channel information.

Correspondingly, the decoding apparatus (for example, the base station) receives the first feedback information $c_{t+k}$.

Optionally, for an implementation of step S307 in this embodiment of this application, refer to the implementation of step S205 in Embodiment 2. Details are not described herein again.

Optionally, after step S307, the information exchange method may further include the following step.

S308: The decoding apparatus (for example, the base station) inputs the first feedback information $c_{t+k}$ and historical state information $d_{his}$ of the decoding apparatus into the decoder for processing, to obtain third channel information $H_{t+k}'$, where the historical state information $d_{his}$ reflects one or more pieces of historical feedback information obtained before the first feedback information $c_{t+k}$ is obtained.

Optionally, a decoding process (for example, step S308) of the decoding apparatus may be an inverse process of an encoding process (for example, step S306) of the encoding apparatus. Specifically, if the second feedback information $c_t$ fails to be transmitted, for a $(t+k)^{th}$ feedback, the decoding apparatus may determine that the historical state information $d_{his}$ is state information stored in a previous storage periodicity. Then, the decoding apparatus may input the first feedback information $c_{t+k}$ and the historical state information $d_{his}$ into the decoder for processing, to obtain the third channel information $H_{t+k}'$. The historical state information $d_{his}$ reflects one or more pieces of historical feedback information obtained before the first feedback information $c_{t+k}$ is obtained. Optionally, after the historical state information $d_{his}$ and the first feedback information $c_{t+k}$ are input into the decoder for processing, new state information $d_{t+k}$ (that is, third state information) is further output. The new state information $d_{t+k}$ (that is, the third state information) may reflect one or more pieces of historical feedback information including the first feedback information $c_{t+k}$. Optionally, if the second feedback information $c_t$ fails to be transmitted, the decoding apparatus may input the first feedback information $c_{t+k}$ and state information stored by the decoding apparatus in a storage periodicity previous to current time into the decoder for processing, without an operation or a step of determining the historical state information $d_{his}$.

For example, as shown in FIG. 11a, k is equal to 1, and t is equal to 3. The second feedback information $c_3$ fails to be transmitted. If T/S=1, for a $4^{th}$ feedback, the decoding apparatus determines that the historical state information $d_{his}$ is state information stored by the decoding apparatus in a $3^{rd}$ feedback. If a $2^{nd}$ feedback succeeds, the state information stored by the decoding apparatus in the $3^{rd}$ feedback is $d_2$, that is, the historical state information $d_{his}$ is equal to $d_2$. If T/S=2, for a $4^{th}$ feedback, the decoding apparatus determines that the historical state information $d_{his}$ is state information stored by the decoding apparatus in a 2nd feedback. If a 1st feedback succeeds, the state information stored by the decoding apparatus in the 2nd feedback is $d_1$, that is, the historical state information $d_{his}$ is equal to $d_1$.

For another example, as shown in FIG. 11b, k is equal to 2, and t is equal to 3. The second feedback information $c_3$ fails to be transmitted. If T/S=1, for a 5th feedback, the decoding apparatus determines that the historical state information $d_{his}$ is state information stored by the decoding apparatus in a 4th feedback. If a 2nd feedback succeeds, the state information stored by the decoding apparatus in the 4th feedback is $d_2$. In this case, the historical state information $d_{his}$ is equal to $d_2$. If T/S=2, for a 5th feedback, the decoding apparatus determines that the historical state information $d_{his}$ is state information (that is, state information stored in a 4th feedback) stored by the decoding apparatus in a previous storage periodicity of the 5th feedback. If a 2nd feedback succeeds, the state information stored by the decoding apparatus in the previous storage periodicity of the 5th feedback is $d_2$. In this case, the historical state information $d_{his}$ is equal to $d_2$.

It may be understood that, in an ideal case, the decoder can completely restore the first channel information $H_{t+k}$ processed by the encoder. In this case, the third channel information $H_{t+k}'$ restored by the decoder based on the first feedback information $c_{t+k}$ and the historical state information $d_{his}$ is the same as the first channel information $H_{t+k}$ input by the encoder, or is the same as channel information predicted by the encoder based on the first channel information $H_{t+k}$. However, in actual application, the decoder cannot completely restore the first channel information $H_{t+k}$ processed by the encoder. Therefore, in actual application, the third channel information $H_{t+k}'$ and the first channel information $H_{t+k}$ input by the encoder have specific (or subtle) differences, or the third channel information $H_{t+k}'$ and the channel information predicted by the encoder based on the first channel information $H_{t+k}$ have specific (or subtle) differences. In some scenarios, these differences may be ignored.

The encoding apparatus in this embodiment of this application periodically stores state information based on an indication of the decoding apparatus or according to a predefined rule, so that running complexity of the encoding apparatus can be reduced. In addition, the decoding apparatus also periodically stores state information, so that the encoding apparatus and the decoding apparatus perform state information rollback. In addition, for a same feedback, state information input by the encoder is consistent with state information input by the decoder, thereby improving decoding performance of a base station side (or the decoder), reducing a communication performance loss, and improving communication quality.

Embodiment 4

Embodiment 4 of this application mainly describes a case in which an encoding apparatus (for example, UE) always uses stored historical state information $e_{his}$ as an input of an encoder, and similarly, a decoding apparatus (for example, a base station) always uses stored historical state information $d_{his}$ as an input of a decoder. In this way, the encoding apparatus does not use mismatched state information as the input of the encoder when feedback information of the encoding apparatus is not successfully transmitted to the decoding apparatus. In addition, the encoding apparatus (for example, the UE) updates the historical state information $e_{his}$ based on an indication of the decoding apparatus (for example, the base station), so that the historical state information $e_{his}$ includes recent historical channel information, to implement mining of a channel time-domain correlation.

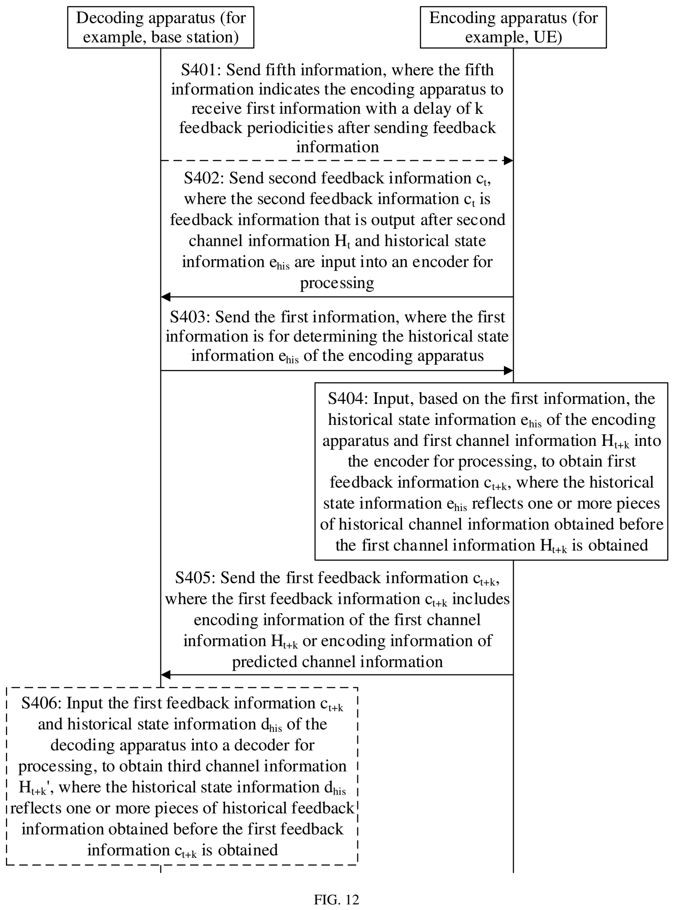

Refer to FIG. 12. FIG. 12 is a fourth schematic flowchart of an information exchange method according to an embodiment of this application. As shown in FIG. 12, the information exchange method includes but is not limited to the following steps.

S401: A decoding apparatus (for example, a base station) sends fifth information to an encoding apparatus (for example, UE), where the fifth information indicates the encoding apparatus to receive first information with a delay of k feedback periodicities after sending feedback information, where k is equal to 1.

Correspondingly, the encoding apparatus (for example, the UE) receives the fifth information.

Optionally, the fifth information includes a quantity k of delayed feedback periodicities, where k is a positive integer. Alternatively, the fifth information includes a delay (delay), where a unit of the delay is a time unit such as second, microsecond, millisecond, or nanosecond, and $\mathrm{k}=\lceil delay/S \rceil$, where S represents time of one feedback periodicity, and $\lceil \ \rceil$ represents rounding up. In this case, the fifth information may indicate that the encoding apparatus may receive the first information with a delay of k feedback periodicities after sending any feedback information, indicate that the encoding apparatus may receive the first information at latest with a delay of k feedback periodicities after sending any feedback information, or indicate that the encoding apparatus may receive the first information with a delay of k feedback periodicities after a moment of sending any feedback information. For example, if a tth feedback succeeds, the fifth information indicates that the encoding apparatus may receive, at latest with a delay of k feedback periodicities after sending the feedback information $c_t$, the first information delivered by the decoding apparatus. In other words, the fifth information indicates that the encoding apparatus may receive, at latest in a (t+k)th feedback time period after sending the feedback information $c_t$, the first information delivered by the decoding apparatus. For example, k is equal to 1. The fifth information indicates that the encoding apparatus may receive, at latest with a delay of one feedback periodicity after sending the feedback information, the first information delivered by the decoding apparatus. In other words, if a previous feedback succeeds, the encoding apparatus may receive, before a next feedback, the first information delivered by the decoding apparatus, to determine that the previous feedback succeeds. On the contrary, if the encoding apparatus does not receive the first information before the next feedback, it indicates that the previous feedback fails.

In an optional embodiment, the quantity k of delayed feedback periodicities or the delay (delay) may be predefined. In this case, step S401 may not exist. In other words, the information exchange method in this embodiment of this application may not include step S401.

S402: The encoding apparatus (for example, the UE) sends second feedback information $c_t$ to the decoding apparatus (for example, the base station), where the second feedback information $c_t$ is feedback information that is output after second channel information $H_t$ and historical state information $e_{his}$ are input into an encoder for processing.

Optionally, the encoding apparatus may perform channel measurement based on a received reference signal, to obtain channel information, where the channel information is denoted as the second channel information $H_t$ for ease of description. Then, the encoding apparatus may input the second channel information $H_t$ and the historical state information $e_{his}$ into the encoder for processing, to obtain the feedback information, where the feedback information is denoted as the second feedback information $c_t$ for ease of description. The encoding apparatus may send the second feedback information $c_t$ to the decoding apparatus when a feedback time period arrives. For example, the encoding apparatus may perform operations such as quantization and modulation on the second feedback information $c_t$ and then send the second feedback information $c_t$. Optionally, the encoder further outputs new state information $e_t$ based on the second channel information $H_t$ and the historical state information $e_{his}$ that are input. The historical state information $e_{his}$ is historical state information output by the encoder during a specific time of running; and in a next feedback, whether to replace the historical state information $e_{his}$ with the new state information $e_t$ is indicated by the decoding apparatus. The historical state information $e_{his}$ may reflect one or more pieces of historical channel information obtained before the second channel information $H_t$ is obtained, and the new state information $e_t$ may reflect one or more pieces of historical channel information including the second channel information $H_t$. Herein, t is a positive integer, $H_t$ may be understood as a $t^{th}$ piece of channel information, $c_t$ may be understood as a $t^{th}$ piece of feedback information, and $e_t$ may be understood as state information output by the encoder in a $t^{th}$ feedback time period (or a $t^{th}$ feedback).

For example, if first k pieces of feedback information (that is, sent in a $(t-k)^{th}$ feedback time period) of the second feedback information $c_t$ are successfully transmitted, the decoding apparatus sends the first information to the encoding apparatus. After receiving the first information in the $t^{th}$ feedback time period (or the $t^{th}$ feedback), the encoding apparatus updates the historical state information $e_{his}$ to state information $e_{t-k}$ output by the encoder in the $(t-k)^{th}$ feedback time period (or the $(t-k)^{th}$ feedback). That is, $e_{his}=e_{t-k}$. In other words, the second feedback information $c_t$ is obtained by inputting the second channel information $H_t$ and the state information $e_{t-k}$ into the encoder for processing.

S403: The decoding apparatus (for example, the base station) sends the first information to the encoding apparatus (for example, the UE), where the first information is for determining the historical state information $e_{his}$ of the encoding apparatus.

Correspondingly, the encoding apparatus (for example, the UE) receives the first information.

S404: The encoding apparatus (for example, the UE) inputs, based on the first information, the historical state information $e_{his}$ of the encoding apparatus and first channel information $H_{t+k}$ into the encoder for processing, to obtain first feedback information $c_{t+k}$, where the historical state information $e_{his}$ reflects one or more pieces of historical channel information obtained before the first channel information $H_{t+k}$ is obtained.

Optionally, after the encoding apparatus sends the second feedback information $c_t$ to the decoding apparatus, if the decoding apparatus receives (or demodulates) the second feedback information $c_t$ on a time-frequency resource of the second feedback information $c_t$, it indicates that the second feedback information $c_t$ is successfully transmitted. In this case, the decoding apparatus may send the first information to the encoding apparatus. The first information may be for determining the historical state information $e_{his}$ of the encoding apparatus, or the first information may be for determining state information that is input into the encoder after the first information is received. The encoding apparatus receives the first information in the $(t+k)^{th}$ feedback time period (or after a $(t+k-1)^{th}$ feedback time period). After receiving the first information, the encoding apparatus may update the historical state information $e_{his}$ to the state information $e_t$ output by the encoder in the $t^{th}$ feedback time period (or the $t^{th}$ feedback). It may be understood that, when k is equal to 1, after receiving the first information in a $(t+1)^{th}$ feedback time period, the encoding apparatus updates the historical state information $e_{his}$ to state information $e_t$ (or state information $e_t$ obtained by the encoding apparatus last time) output by the encoder in a feedback time period (that is, the $t^{th}$ feedback) previous to current time (that is, the $(t+1)^{th}$ feedback time period).

Optionally, after the encoding apparatus sends the second feedback information $c_t$ to the decoding apparatus, if the decoding apparatus does not receive (or does not demodulate) the second feedback information $c_t$ on the time-frequency resource of the second feedback information $c_t$, it indicates that the second feedback information $c_t$ fails to be transmitted, and the decoding apparatus may not send the first information. In this case, the historical state information $e_{his}$ of the encoding apparatus is not updated in the $(t+k)^{th}$ feedback time period (or the $t^{th}$ feedback).

The encoding apparatus may perform channel measurement based on a received reference signal, to obtain the first channel information $H_{1+k}$, and then may input the historical state information $e_{his}$ and the first channel information $H_{t+k}$ into the encoder for processing, to obtain the first feedback information $c_{t+k}$. The historical state information $e_{his}$ reflects one or more pieces of historical channel information obtained before the first channel information $H_{t+k}$ is obtained. Optionally, after the historical state information $e_{his}$ and the first channel information $H_{t+k}$ are input into the encoder for processing, new state information $e_{t+k}$ (that is, first state information) is further output. The new state information $e_{t+k}$ (that is, the first state information) may reflect one or more pieces of historical channel information including the first channel information $H_{t+k}$.

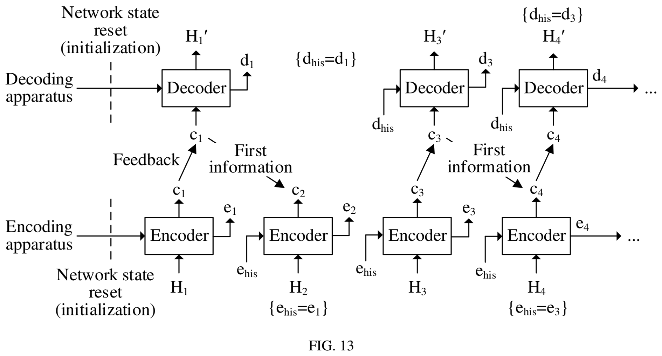

For example, k is equal to 1. Refer to FIG. 13. FIG. 13 is a fifth schematic flowchart of processing of an encoding apparatus and a decoding apparatus according to an embodiment of this application. As shown in FIG. 13, an input of the encoder includes the historical state information $e_{his}$, and an input of a decoder includes the historical state information $d_{his}$. When t is equal to 1, and feedback information $c_1$ is successfully transmitted, the encoding apparatus receives the first information in a $2^{nd}$ feedback, updates the historical state information $e_{his}$ to $e_1$, inputs the historical state information $e_{his}$ (=$e_1$) and channel information $H_2$ into the encoder for processing, and outputs feedback information $c_2$ and new state information $e_2$. The feedback information $c_2$ fails to be transmitted, and the encoding apparatus does not receive the first information in a $3^{rd}$ feedback. In this case, the historical state information $e_{his}$ is not updated and is still $e_1$. In other words, in the $3^{rd}$ feedback, the encoding apparatus inputs the historical state information $e_{his}$ (=$e_1$) and channel information $H_3$ into the encoder for processing, and outputs feedback information $c_3$ and new state information $e_3$. When the feedback information $c_3$ is successfully transmitted, the encoding apparatus receives the first information in a $4^{th}$ feedback, updates the historical state information $e_{his}$ to $e_3$, inputs the historical state information $e_{his}$ (=$e_3$) and channel information $H_4$ into the encoder for processing, and outputs feedback information $c_4$ and new state information $e_4$.

S405: The encoding apparatus (for example, the UE) sends the first feedback information $c_{t+k}$ to the decoding apparatus (for example, the base station), where the first feedback information $c_{t+k}$ includes encoding information of the first channel information $H_{t+k}$ or encoding information of predicted channel information.

Correspondingly, the decoding apparatus (for example, the base station) receives the first feedback information $c_{t+k}$.

Optionally, for an implementation of step S405 in this embodiment of this application, refer to the implementation of step S205 in Embodiment 2. Details are not described herein again.

Optionally, after step S405, the information exchange method further includes the following step.

S406: The decoding apparatus (for example, the base station) inputs the first feedback information $c_{t+k}$ and historical state information $d_{his}$ of the decoding apparatus into the decoder for processing, to obtain third channel information $H_{t+k}'$, where the historical state information $d_{his}$ reflects one or more pieces of historical feedback information obtained before the first feedback information $c_{t+k}$ is obtained.

Optionally, a decoding process (for example, step S406) of the decoding apparatus may be an inverse process of an encoding process (for example, step S404) of the encoding apparatus. Specifically, if the second feedback information $c_t$ is successfully transmitted, for a $(t+k)^{th}$ feedback, the decoding apparatus may update the historical state information $d_{his}$ to state information $d_t$ output by the decoder in the $t^{th}$ feedback time period (or the $t^{th}$ feedback). It may be understood that, when k is equal to 1, for a $(t+1)^{th}$ feedback, the decoding apparatus may update the historical state information $d_{his}$ to the state information $d_t$ output by the decoder last time (or state information $d_t$ obtained by the decoding apparatus last time). If the second feedback information $c_t$ fails to be transmitted, for the $(t+k)^{th}$ feedback, the decoding apparatus does not update the historical state information $d_{his}$. After receiving the first feedback information $c_{t+k}$, the decoding apparatus may input the historical state information $d_{his}$ and the received first feedback information $c_{t+k}$ into the decoder for processing, and output the third channel information $H_{t+k}'$. The historical state information $d_{his}$ reflects one or more pieces of historical feedback information obtained before the first feedback information $c_{t+k}$ is obtained. Optionally, after the historical state information $d_{his}$ and the first feedback information $c_{t+k}$ are input into the decoder for processing, new state information $d_{t+k}$ (that is, third state information) is further output. The new state information $d_{t+k}$ (that is, the third state information) may reflect one or more pieces of historical feedback information including the first feedback information $c_{t+k}$.

For example, as shown in FIG. 13, k is equal to 1, the input of the encoder includes the historical state information $e_{his}$, and the input of the decoder includes the historical state information $d_{his}$. When t is equal to 1, the feedback information $c_1$ is successfully transmitted, and the decoding apparatus sends the first information. In this case, in the $2^{nd}$ feedback, the decoding apparatus updates the historical state information $d_{his}$ to $d_1$. Because the feedback information $c_2$ fails to be transmitted, the decoding apparatus does not send the first information. Therefore, for the $3^{rd}$ feedback, the historical state information $d_{his}$ of the decoding apparatus is not updated, and is still $d_1$. In other words, for the $3^{rd}$ feedback, the decoding apparatus inputs the historical state information $d_{his}$ (=$d_1$) and the feedback information $c_3$ into the decoder for processing, and outputs channel information $H_3'$ and new state information $d_3$. When the feedback information $c_3$ is successfully transmitted, the decoding apparatus sends the first information. For the $4^{th}$ feedback, the decoding apparatus updates the historical state information $d_{his}$ to $d_3$, inputs the historical state information $d_{his}$ (=$d_3$) and the feedback information $c_4$ into the decoder for processing, and outputs channel information $H_4'$ and new state information $d_4$.

It may be understood that, in an ideal case, the decoder can completely restore the first channel information $H_{t+k}$

processed by the encoder. In this case, the third channel information $H_{t+k}$' restored by the decoder based on the first feedback information $c_{t+k}$ and the historical state information $d_{his}$ is the same as the first channel information $H_{t+k}$ input by the encoder, or is the same as channel information predicted by the encoder based on the first channel information $H_{t+k}$. However, in actual application, the decoder cannot completely restore the first channel information $H_{t+k}$ processed by the encoder. Therefore, in actual application, the third channel information $H_{1+k}$' and the first channel information $H_{t+k}$ input by the encoder have specific (or subtle) differences, or the third channel information $H_{t+k}$' and the channel information predicted by the encoder based on the first channel information $H_{t+k}$ have specific (or subtle) differences. In some scenarios, these differences may be ignored.

The encoding apparatus in this embodiment of this application always uses the stored historical state information $e_{his}$ as the input of the encoder, and the decoding apparatus always uses the stored historical state information $d_{his}$ as the input of the decoder. In this way, the encoding apparatus does not use mismatched state information as the input of the encoder when feedback information of the encoding apparatus is not successfully transmitted to the decoding apparatus. Therefore, state information input by the encoder is consistent with state information input by the decoder, thereby improving decoding performance of the base station side, reducing a communication performance loss, and improving communication quality. In addition, the encoding apparatus updates the historical state information $e_{his}$ based on an indication of the decoding apparatus, so that the historical state information $e_{his}$ includes recent historical channel information, to implement mining of a channel time-domain correlation.

Embodiment 5

Embodiment 5 of this application mainly describes a case in which when k is equal to 1, an encoding apparatus (for example, UE) stores state information at a specific moment based on an indication of a decoding apparatus (for example, a base station), so that the encoding apparatus performs state information rollback based on the indication of the decoding apparatus.

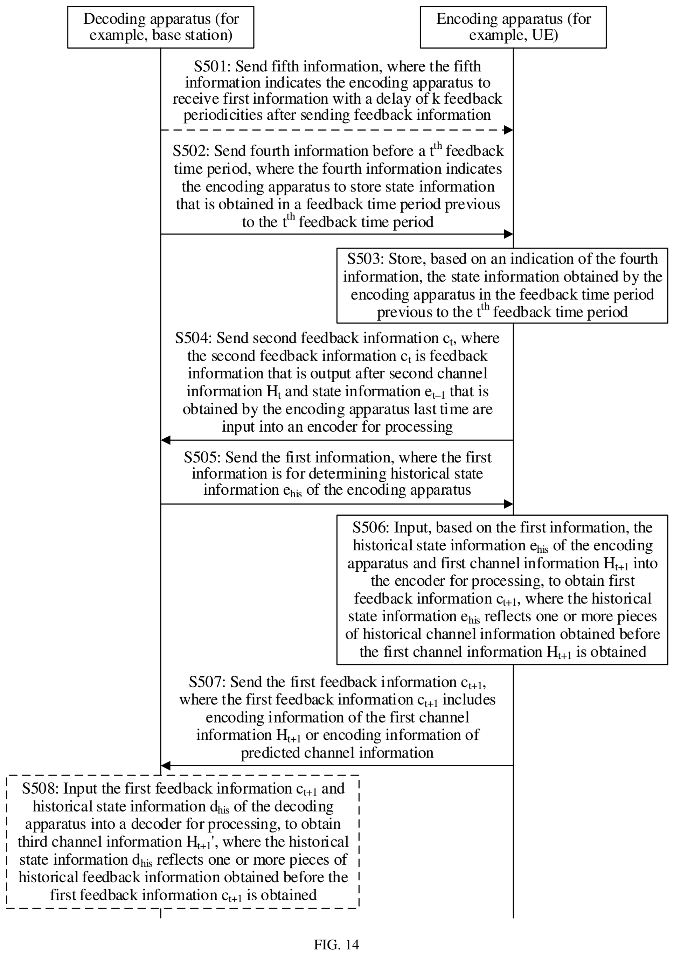

Refer to FIG. 14. FIG. 14 is a fifth schematic flowchart of an information exchange method according to an embodiment of this application. As shown in FIG. 14, the information exchange method includes but is not limited to the following steps.

S501: A decoding apparatus (for example, a base station) sends fifth information to an encoding apparatus (for example, UE), where the fifth information indicates the encoding apparatus to receive first information with a delay of k feedback periodicities after sending feedback information, where k is equal to 1.

Correspondingly, the encoding apparatus (for example, the UE) receives the fifth information.

Optionally, the fifth information includes a quantity k of delayed feedback periodicities, where k is a positive integer. Alternatively, the fifth information includes a delay (delay), where a unit of the delay is a time unit such as second, microsecond, millisecond, or nanosecond, and $k = \lceil delay/S \rceil$, where S represents time of one feedback periodicity, and $\lceil \ \rceil$ represents rounding up. In this case, the fifth information may indicate that the encoding apparatus may receive the first information with a delay of k feedback periodicities after sending any feedback information, indicate that the encoding apparatus may receive the first information at latest with a delay of k feedback periodicities after sending any feedback information, or indicate that the encoding apparatus may receive the first information with a delay of k feedback periodicities after a moment of sending any feedback information. For example, when feedback information $c_t$ of a $t^{th}$ (t is a positive integer) feedback time period (or a $t^{th}$ feedback) is not successfully transmitted to the decoding apparatus, the fifth information indicates that the encoding apparatus may receive, at latest with a delay of k feedback periodicities after sending the feedback information $c_t$, the first information delivered by the decoding apparatus. In other words, when the feedback information $c_t$ of the $t^{th}$ feedback time period (or the $t^{th}$ feedback) fails to be transmitted, the fifth information indicates that the encoding apparatus may receive, at latest in a $(t+k)^{th}$ feedback time period after sending the feedback information $c_t$, the first information delivered by the decoding apparatus. For example, k is equal to 1. The fifth information indicates that the encoding apparatus may receive, at latest with a delay of one feedback periodicity after sending the feedback information, the first information delivered by the decoding apparatus. In other words, if feedback information of a previous feedback fails to be transmitted, the encoding apparatus may receive, before a next feedback, the first information delivered by the decoding apparatus, to determine that the previous feedback fails. On the contrary, if the encoding apparatus does not receive the first information before the next feedback, it indicates that the previous feedback succeeds.

In an optional embodiment, the quantity k of delayed feedback periodicities or the delay (delay) may be predefined. In this case, step S501 may not exist. In other words, the information exchange method in this embodiment of this application may not include step S501.

S502: The decoding apparatus (for example, the base station) sends fourth information to the encoding apparatus (for example, the UE) before the $t^{th}$ feedback time period, where the fourth information indicates the encoding apparatus to store state information obtained in a feedback time period previous to the $t^{th}$ feedback time period, where t is a positive integer.

Correspondingly, the encoding apparatus (for example, the UE) receives the fourth information in the $t^{th}$ feedback time period.

S503: The encoding apparatus (for example, the UE) stores, based on an indication of the fourth information, the state information obtained by the encoding apparatus in the feedback time period previous to the $t^{th}$ feedback time period.

In some scenarios, when the decoding apparatus finds that channel quality does not meet a preset condition, it indicates that the channel quality is poor. The decoding apparatus may send the fourth information to the encoding apparatus before the $t^{th}$ feedback time period (or the $t^{th}$ feedback), to indicate the encoding apparatus to store the state information obtained in the feedback time period (or a feedback previous to the $t^{th}$ feedback) previous to the $t^{th}$ feedback time period. Alternatively, in some scenarios, when a feedback succeeds, the decoding apparatus (for example, the base station) sends the fourth information to the encoding apparatus (for example, the UE) before the $t^{th}$ feedback time period (or the $t^{th}$ feedback), to indicate the encoding apparatus to store the state information obtained in the feedback time period (or the feedback previous to the $t^{th}$ feedback) previous to the $t^{th}$ feedback time period. After receiving the fourth information in the $t^{th}$ feedback time period, the encoding apparatus may store, based on the indication of the fourth information, the state information obtained by the encoding apparatus in the feedback time period (that is, a $(t-1)^{th}$ feedback time period or a $(t-1)^{th}$ feedback) previous to the $t^{th}$ feedback time period. In some possible implementations, the fourth information may also indicate the encoding apparatus to store historical state information that is output by the encoder at a specific time. Certainly, after receiving the fourth information, the encoding apparatus correspondingly stores the historical state information that is output by the encoder at the specific time. For example, the decoding apparatus may perform uplink channel estimation to obtain a received signal-to-noise ratio, and then determine, based on the received signal-to-noise ratio, a probability of successfully receiving feedback information. If the probability of successfully receiving the feedback information is less than a preset threshold, it indicates that the channel quality is poor or a probability of a next feedback failure is high, and the decoding apparatus may send the fourth information to the encoding apparatus. Certainly, in addition to the received signal-to-noise ratio, the channel quality may further be determined in other manners, which are not listed one by one in this embodiment of this application.

For example, if the decoding apparatus finds, after receiving feedback information $c_{t-1}$ of the $(t-1)^{th}$ feedback, that channel quality is poor, the decoding apparatus may send the fourth information to the encoding apparatus before the $t^{th}$ feedback (or the $t^{th}$ feedback time period), so that the encoding apparatus can receive the fourth information in the $t^{th}$ feedback (or the $t^{th}$ feedback time period). After receiving the fourth information, the encoding apparatus may store, based on the indication of the fourth information, state information $e_{t-1}$ obtained by the encoding apparatus last time (that is, the $(t-1)^{th}$ time), for subsequent use.

Optionally, after the decoding apparatus sends the fourth information to the encoding apparatus, the decoding apparatus may also store corresponding state information. For example, the decoding apparatus stores state information obtained by the decoding apparatus in the feedback time period (that is, the $(t-1)^{th}$ feedback time period) previous to the $t^{th}$ feedback time period, or stores historical state information output by the decoder at a specific time. For example, the decoding apparatus sends the fourth information to the encoding apparatus before the $t^{th}$ feedback (or the $t^{th}$ feedback time period), and then stores state information $d_{t-1}$ obtained last time (that is, the $(t-1)^{th}$ time), for subsequent use.

S504: The encoding apparatus (for example, the UE) sends second feedback information $c_t$ to the decoding apparatus (for example, the base station), where the second feedback information $c_t$ is feedback information that is output after second channel information $H_t$ and the state information $e_{t-1}$ obtained by the encoding apparatus last time are input into the encoder for processing.

Optionally, for an implementation of step S504 in this embodiment of this application, refer to the implementation of step S202 in Embodiment 2. Details are not described herein again.

S505: The decoding apparatus (for example, the base station) sends first information to the encoding apparatus (for example, the UE), where the first information is for determining historical state information $e_{his}$ of the encoding apparatus.

Correspondingly, the encoding apparatus (for example, the UE) receives the first information, and determines that the historical state information $e_{his}$ is the state information stored after the fourth information is received.

S506: The encoding apparatus (for example, the UE) inputs, based on the first information, the historical state information $e_{his}$ of the encoding apparatus and first channel information $H_{t+1}$ into the encoder for processing, to obtain first feedback information $c_{t+1}$, where the historical state information $e_{his}$ reflects one or more pieces of historical channel information obtained before the first channel information $H_{t+1}$ is obtained.

Optionally, after the encoding apparatus sends the second feedback information $c_t$ to the decoding apparatus, if the decoding apparatus receives (or demodulates) the second feedback information $c_t$ on a time-frequency resource of the second feedback information $c_t$, it indicates that the second feedback information ct is successfully transmitted. In this case, the decoding apparatus may not send the first information. If the decoding apparatus does not receive (or does not demodulate) the second feedback information $c_t$ on the time-frequency resource of the second feedback information $c_t$, it

indicates that the second feedback information $c_t$ fails to be transmitted. In this case, the decoding apparatus may send the first information to the encoding apparatus. The first information may be for determining the historical state information $e_{his}$ of the encoding apparatus, or the first information may be for determining state information that is input into an encoder after the first information is received. The first information may be further for notifying that the second feedback information $c_t$ fails to be transmitted, the first information may further indicate a mismatch between a transmitting end and a receiving end, or the like. In some scenarios, even if the second feedback information $c_t$ is successfully transmitted, the decoding apparatus may send the first information to the encoding apparatus, so that the encoding apparatus rolls back state information. In other words, the state information rollback may be controllable by the decoding apparatus. The decoding apparatus may also send the first information if the decoding apparatus expects to enable the encoding apparatus to perform state information rollback, but is not limited to sending the first information only when the feedback information fails to be transmitted.

The encoding apparatus receives the first information in the $(t+1)^{th}$ feedback time period (or after the $t^{th}$ feedback time period). Optionally, after receiving the first information, the encoding apparatus determines that the historical state information $e_{his}$ is the state information stored after the encoding apparatus receives the fourth information. The encoding apparatus may perform channel measurement based on a received reference signal, to obtain the first channel information $H_{t+1}$, and then input the historical state information $e_{his}$ and the first channel information $H_{t+1}$ into the encoder for processing, to obtain the first feedback information $c_{t+1}$. The historical state information $e_{his}$ reflects one or more pieces of historical channel information obtained before the first channel information $H_{t+1}$ is obtained. Optionally, after receiving the first information, the encoding apparatus may input the first channel information and the state information that is stored after the encoding apparatus receives the fourth information into the encoder for processing, without an operation or a step of determining that the historical state information $e_{his}$ is the state information stored after the encoding apparatus receives the fourth information.

For example, the historical state information $e_{his}$ reflects historical channel information that is before the $(t-1)^{th}$ feedback. Optionally, after the historical state information $e_{his}$ and the first channel information $H_{t+1}$ are input into the encoder for processing, new state information $e_{t+1}$ (that is, first state information) is further output. The new state information $e_{t+1}$ (that is, the first state information) may reflect one or more pieces of historical channel information including the first channel information $H_{t+1}$. For example, the new state information $e_{t+1}$ (that is, the first state information) reflects the first channel information $H_{t+1}$ and the historical channel information that is before the $(t-1)^{th}$ feedback.

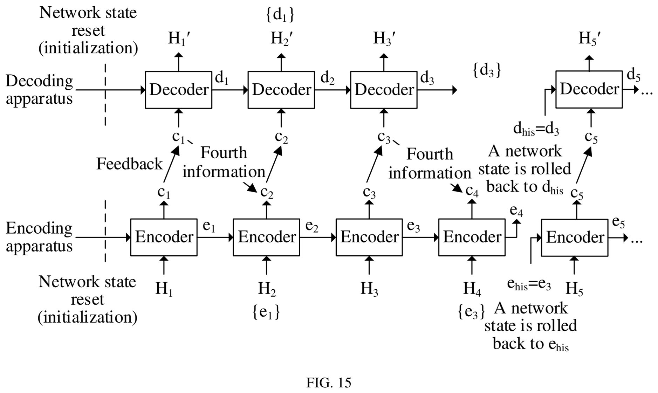

For example, refer to FIG. 15. FIG. 15 is a sixth schematic flowchart of processing of an encoding apparatus and a decoding apparatus according to an embodiment of this application. As shown in FIG. 15, t is equal to 4. If feedback information $c_3$ is successfully transmitted, the decoding apparatus sends the fourth information. After receiving the fourth information, the encoding apparatus stores state information $e_3$ output by the encoder last time (that is, a $3^{rd}$ time). In a $4^{th}$ feedback time period, the encoding apparatus inputs the state information $e_3$ output by the encoder last time and second channel information $H_4$ into the encoder for processing, and outputs second feedback information $c_4$ and new state information $e_4$ (that is, second state information). If the second feedback information $c_4$ fails to be transmitted, the decoding apparatus sends the first information. After receiving the first information, the encoding apparatus determines that a value of the historical state information $e_{his}$ is the state information $e_3$ stored after the fourth information is received last time. In a $5^{th}$ feedback time period, the encoding apparatus inputs the historical state information $e_{his}$ ($=e_3$) and first channel information $H_5$ into the encoder for processing, and outputs first feedback information $c_5$ and new state information $e_5$ (that is, the first state information).

S507: The encoding apparatus (for example, the UE) sends the first feedback information $c_{t+1}$ to the decoding apparatus (for example, the base station), where the first feedback information $c_{t+1}$ includes encoding information of the first channel information $H_{t+1}$ or encoding information of predicted channel information.

Correspondingly, the decoding apparatus (for example, the base station) receives the first feedback information $c_{t+1}$.

Optionally, for an implementation of step S507 in this embodiment of this application, refer to the implementation of step S205 in Embodiment 2. Details are not described herein again.

Optionally, after step S507, the information exchange method may further include the following step.

S508: The decoding apparatus (for example, the base station) inputs the first feedback information $c_{t+1}$ and historical state information $d_{his}$ of the decoding apparatus into the decoder for processing, to obtain third channel information $H_{t+1}'$, where the historical state information $d_{his}$ reflects one or more pieces of historical feedback information obtained before the first feedback information $c_{t+1}$ is obtained.

Optionally, a decoding process (for example, step S508) of the decoding apparatus may be an inverse process of an encoding process (for example, step S506) of the encoding apparatus. Specifically, if the second feedback information $c_t$ fails to be transmitted, the decoding apparatus does not store state information $d_t$ output by the decoder at a $t^{th}$ time. After receiving the first feedback information $c_{t+1}$, the decoding apparatus may determine that the historical state information $d_{his}$ is state information stored after a previous successful transmission (or previous sending of the fourth information), and may input the historical state information $d_{his}$ and the received first feedback information $c_{t+1}$ into the decoder for processing, to obtain third channel information $H_{t+1}'$. Optionally, after receiving the first feedback information $c_{t+1}$, the decoding apparatus may also input the state information stored after the decoding apparatus sends the fourth information and the first feedback information $c_{t+1}$ into the decoder for processing, without an operation or a step of determining the historical state information $d_{his}$.

For example, the historical state information $d_{his}$ reflects one or more pieces of historical feedback information obtained before the first feedback information $c_{t+1}$ is obtained. Optionally, after the historical state information $d_{his}$ and the first feedback information $c_{t+1}$ are input into the decoder for processing, new state information $d_{t+1}$ (that is, third state information) is further output. The new state information $d_{t+1}$ (that is, the third state information) may reflect one or more pieces of historical feedback information including the first feedback information $c_{t+1}$.

For example, as shown in FIG. 15, t is equal to 4, and the feedback information $c_3$ is successfully transmitted. After the decoding apparatus sends the fourth information to the encoding apparatus, the decoding apparatus stores state information $d_3$ output by the decoder at a $3^{rd}$ time. If the second feedback information $c_4$ fails to be transmitted, the decoding apparatus does not store state information $d_4$ output by the decoder at a $4^{th}$ time. For a $5^{th}$ feedback, after receiving the first feedback information $c_5$, the decoding apparatus determines that the historical state information $d_{his}$ is the state information $d_3$ stored after a previous successful transmission (that is, the feedback information $c_3$ is successfully transmitted), then inputs the historical state information $d_{his}$ ($=d_3$) and the first feedback information $c_5$ into the decoder for processing, and outputs third channel information $H_5'$ and new state information $d_5$ (that is, the third state information).

It may be understood that, in an ideal case, the decoder can completely restore the first channel information $H_{t+1}$ processed by the encoder. In this case, the third channel information $H_{t+1}'$ restored by the decoder based on the first feedback information $c_{t+1}$ and the historical state information $d_{his}$ is the same as the first channel information $H_{t+1}$ input by the encoder, or is the same as channel information predicted by the encoder based on the first channel information $H_{t+1}$. However, in actual application, the decoder cannot completely restore the first channel information $H_{t+1}$ processed by the encoder. Therefore, in actual application, the third channel information $H_{t+1}'$ and the first channel information $H_{t+1}$ input by the encoder have specific (or subtle) differences, or the third channel information $H_{t+1}'$ and the channel information predicted by the encoder based on the first channel information $H_{t+1}$ have specific (or subtle) differences. In some scenarios, these differences may be ignored.

The encoding apparatus in this embodiment of this application stores state information that is at a specific moment based on an indication of the decoding apparatus, so that the encoding apparatus can roll back the state information when feedback information fails to be transmitted, and further, running complexity of the encoding apparatus can be reduced. In addition, the encoding apparatus determines the historical state information based on the indication of the decoding apparatus. In this way, for a same feedback, state information input by the encoder can be consistent with state information input by the decoder, thereby improving decoding performance of a base station side (or the decoder), reducing a communication performance loss, and improving communication quality.

Embodiment 6

Embodiment 6 of this application mainly describes a case in which when k is greater than 1, an encoding apparatus (for example, UE) stores state information at a specific moment based on an indication of a decoding apparatus (for example, a base station), so that the encoding apparatus performs state information rollback based on the indication of the decoding apparatus.

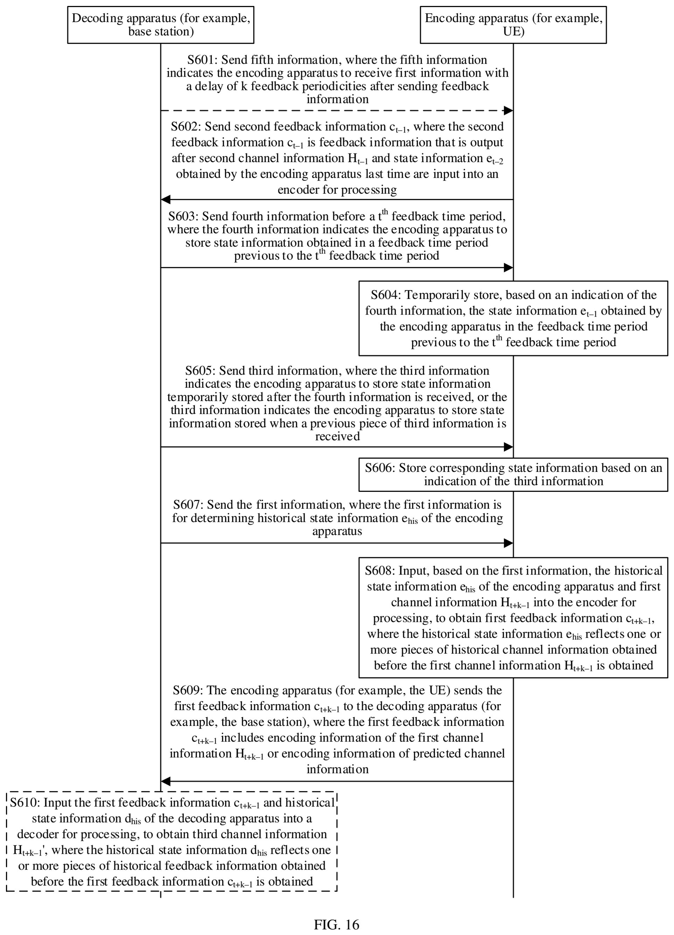

Refer to FIG. 16. FIG. 16 is a sixth schematic flowchart of an information exchange method according to an embodiment of this application. As shown in FIG. 16, the information exchange method includes but is not limited to the following steps.

S601: A decoding apparatus (for example, a base station) sends fifth information to an encoding apparatus (for example, UE), where the fifth information indicates the encoding apparatus to receive first information with a delay of k feedback periodicities after sending feedback information. k is an integer greater than 1.

Optionally, for an implementation of step S601 in this embodiment of this application, refer to the implementation of step S301 in Embodiment 3. Details are not described herein again.

S602: The encoding apparatus (for example, the UE) sends second feedback information $c_{t-1}$ to the decoding apparatus (for example, the base station), where the second feedback information $c_{t-1}$ is feedback information that is output after second channel information $H_{t-1}$ and the state information $e_{t-2}$ obtained by the encoding apparatus last time are input into the encoder for processing.

Optionally, for an implementation of step S602 in this embodiment of this application, refer to the implementation of step S202 in Embodiment 2. Details are not described herein again.

S603: The decoding apparatus (for example, the base station) sends fourth information to the encoding apparatus (for example, the UE) before the $t^{th}$ feedback time period, where the fourth information indicates the encoding apparatus to store state information obtained in a feedback time period previous to the $t^{th}$ feedback time period.

Correspondingly, the encoding apparatus (for example, the UE) receives the fourth information.

S604: The encoding apparatus (for example, the UE) temporarily stores, based on an indication of the fourth information, the state information $e_{t-1}$ obtained by the encoding apparatus in the feedback time period previous to the $t^{th}$ feedback time period.

In some scenarios, when the decoding apparatus finds that channel quality does not meet a preset condition, it indicates that the channel quality is poor. The decoding apparatus may send the fourth information to the encoding apparatus before the $t^{th}$ feedback time period (or the $t^{th}$ feedback), to indicate the encoding apparatus to store the state information obtained in the feedback time period (or a feedback previous to the $t^{th}$ feedback) previous to the $t^{th}$ feedback time period. Alternatively, in some scenarios, when a feedback succeeds, the decoding apparatus (for example, the base station) sends the fourth information to the encoding apparatus (for example, the UE) before the $t^{th}$ feedback time period (or the $t^{th}$ feedback), to indicate the encoding apparatus to store the state information obtained in the feedback time period (or the feedback previous to the $t^{th}$ feedback) previous to the $t^{th}$ feedback time period. After receiving the fourth information in the $t^{th}$ feedback time period, the encoding apparatus may temporarily store, based on the indication of the fourth information, state information $e_{t-1}$ obtained by the encoding apparatus in the feedback time period (that is, a $(t-1)^{th}$ feedback time period or a $(t-1)^{th}$ feedback) previous to the $t^{th}$ feedback time period. For example, the decoding apparatus may perform uplink channel estimation to obtain a received signal-to-noise ratio, and then determine, based on the received signal-to-noise ratio, a probability of successfully receiving feedback information. If the probability of successfully receiving the feedback information is less than a preset threshold, it indicates that the channel quality is poor or a probability of a next feedback failure is high, and the decoding apparatus may send the fourth information to the encoding apparatus. Certainly, in addition to the received signal-to-noise ratio, the channel quality may further be determined in other manners, which are not listed one by one in this embodiment of this application.

For example, after the encoding apparatus sends the second feedback information $c_{t-1}$ to the decoding apparatus, if the decoding apparatus finds that channel quality is poor, the decoding apparatus may send the fourth information to the encoding apparatus before the $t^{th}$ feedback (or the $t^{th}$ feedback time period), so that the encoding apparatus can receive the fourth information in the $t^{th}$ feedback (or the $t^{th}$ feedback time period). After receiving the fourth information, the encoding apparatus may temporarily store, based on the indication of the fourth information, the state information $e_{t-1}$ obtained by the encoding apparatus last time (that is, the $(t-1)^{th}$ time), for subsequent use.

Optionally, in the $t^{th}$ feedback (or the $t^{th}$ feedback time period), the encoding apparatus inputs channel information $H_t$ and the state information $e_{t-1}$ obtained by the encoding apparatus last time into the encoder for processing, and outputs feedback information $c_t$ and new state information $e_t$. The encoding apparatus may further send the feedback information $c_t$ to the decoding apparatus.

S605: The decoding apparatus (for example, the base station) sends third information to the encoding apparatus (for example, the UE), where the third information indicates the encoding apparatus to store the state information temporarily stored after the fourth information is received, or the third information indicates the encoding apparatus to store state information stored when a previous piece of third information is received.

Correspondingly, the encoding apparatus (for example, the UE) receives the third information.

S606: The encoding apparatus (for example, the UE) stores corresponding state information based on an indication of the third information.

Optionally, after the encoding apparatus sends the second feedback information $c_{t-1}$ to the decoding apparatus, in a $(t+k-1)^{th}$ feedback time period, the decoding apparatus may send the third information to the encoding apparatus, and the encoding apparatus stores the corresponding state information based on the indication of the third information. For example, after the encoding apparatus receives the third information in the $(t+k-1)^{th}$ feedback time period, if a value of the third information is a first value, the encoding apparatus stores the state information stored when the previous piece of third information is received, that is, the encoding apparatus stores again the state information stored (not temporarily stored) last time. Optionally, the state information $e_{t-1}$ temporarily stored in step S604 may be further deleted. If the value of the third information is a second value, the encoding apparatus stores the state information temporarily stored after the fourth information is received, that is, stores the state information $e_{t-1}$ temporarily stored after the fourth information is received in the $t^{th}$ feedback time period. The first value is 0, and the second value is 1; or the first value is 1, and the second value is 0. This is not limited in this embodiment of this application. For example, if the second feedback information $c_{t-1}$ is successfully transmitted, the third information is set to the second value; or if the second feedback information $c_{t-1}$ fails to be transmitted, the third information is set to the first value.

For example, k is equal to 2. The encoding apparatus sends the second feedback information $c_{t-1}$ in the $(t-1)^{th}$ feedback time period, the decoding apparatus sends the fourth information to the encoding apparatus before the $t^{th}$ feedback time period, and the encoding apparatus temporarily stores, after receiving the fourth information, the state information $e_{t-1}$ obtained last time. In a $(t+1)^{th}$ feedback time period, the decoding apparatus sends the third information to the encoding apparatus. If the second feedback information $e_{t-1}$ fails to be transmitted, the third information is set to the first value. After receiving the third information, the encoding apparatus stores state information stored (not temporarily stored) last time, and may delete the state information $e_{t-1}$ temporarily stored by the encoding apparatus in the $t^{th}$ feedback time period. If the second feedback information $c_{t-1}$ is successfully transmitted, the third information is set to the second value.

After receiving the third information, the encoding apparatus stores the state information temporarily stored after the fourth information is received, that is, stores the state information $e_{t-1}$.

Optionally, after the decoding apparatus sends the fourth information to the encoding apparatus, the decoding apparatus may also temporarily store state information $d_{t-1}$ obtained last time (that is, the $(t-1)^{th}$ time), for subsequent use. If the second feedback information $c_{t-1}$ is successfully transmitted, in the $(t+k-1)^{th}$ feedback time period, the decoding apparatus may store the temporarily stored state information $d_{t-1}$ after sending the third information (whose value is the second value) to the encoding apparatus. If the second feedback information $c_{t-1}$ fails to be transmitted, in the $(t+k-1)^{th}$ feedback time period, the decoding apparatus stores, after the decoding apparatus sends the third information (whose value is the first value) to the encoding apparatus, state information stored when a previous piece of third information is sent, that is, the decoding apparatus stores again the state information stored (not temporarily stored) last time.

S607: The decoding apparatus (for example, the base station) sends first information to the encoding apparatus (for example, the UE), where the first information is for determining historical state information $e_{his}$ of the encoding apparatus (for example, the UE).

Correspondingly, the encoding apparatus (for example, the UE) receives the first information, and determines that the historical state information $e_{his}$ is the state information stored after the third information is received.

S608: The encoding apparatus (for example, the UE) inputs, based on the first information, the historical state information $e_{his}$ of the encoding apparatus and first channel information $H_{t+k-1}$ into the encoder for processing, to obtain first feedback information $c_{t+k-1}$, where the historical state information $e_{his}$ reflects one or more pieces of historical channel information obtained before the first channel information $H_{t+k-1}$ is obtained.

Optionally, after the encoding apparatus sends the second feedback information $c_{t-1}$ to the decoding apparatus, if the decoding apparatus receives (or demodulates) the second feedback information $c_{t-1}$ on a time-frequency resource of the second feedback information $c_{t-1}$, it indicates that the second feedback information $c_{t-1}$ is successfully transmitted. In this case, the decoding apparatus may not send the first information, and may input the second feedback information $c_{t-1}$ and state information $d_{t-2}$ obtained by the decoding apparatus last time into a decoder for processing, to obtain channel information $H_{t-1}'$. In this case, in the $(t+k-1)^{th}$ feedback time period (or a $(t+k-1)^{th}$ feedback), the encoding apparatus inputs the first channel information $H_{t+k-1}$ and state information $e_{t+k-2}$ obtained by the encoding apparatus last time (that is, at a $(t+k-2)^{th}$ time) into the encoder for processing, to obtain the first feedback information $c_{t+k-1}$ and new state information $e_{t+k-1}$. Correspondingly, for the $(t+k-1)^{th}$ feedback, after receiving the first feedback information $c_{t+k-1}$, the decoding apparatus inputs the received first feedback information $c_{t+k-1}$ and state information $d_{t+k-2}$ obtained by the decoding apparatus last time (that is, at the $(t+k-2)^{th}$ time) into the decoder for processing, to obtain third channel information $H_{t+k-1}'$ and new state information $d_{t+k-1}$.

If the decoding apparatus does not receive (or does not demodulate) the second feedback information $c_{t-1}$ on the time-frequency resource of the second feedback information $c_{t-1}$, it indicates that the second feedback information $c_{t-1}$ fails to be transmitted. In this case, the decoding apparatus may send the first information to the encoding apparatus. Certainly, if the second feedback information $c_{t-1}$ fails to be transmitted, it can be learned from the foregoing step S601 that the encoding apparatus can receive, at latest with the delay of k feedback periodicities, the first information delivered by the decoding apparatus. Therefore, the decoding apparatus needs to send the first information to the encoding apparatus before the $(t+k-1)^{th}$ feedback time period, so that the encoding apparatus can receive the first information in the $(t+k-1)^{th}$ feedback time period (or a $(t+k-1)^{th}$ feedback). The first information may be for determining the historical state information $e_{his}$ of the encoding apparatus, or the first information may be for determining state information that is input into the encoder after the first information is received. The first information may be further for notifying that the second feedback information $c_{t-1}$ fails to be transmitted, the first information may further indicate a mismatch between a transmitting end and a receiving end, or the like. In some scenarios, even if the second feedback information $c_{t-1}$ is successfully transmitted, the decoding apparatus may send the first information to the encoding apparatus, so that the encoding apparatus rolls back state information. In other words, the state information rollback may be controllable by the decoding apparatus. The decoding apparatus may also send the first information if the decoding apparatus expects to enable the encoding apparatus to perform state information rollback, but is not limited to sending the first information only when the feedback information fails to be transmitted.

The encoding apparatus receives the first information in the $(t+k-1)^{th}$ feedback time period (or after a $(t+k-2)^{th}$ feedback time period). After receiving the first information, the encoding apparatus determines that the historical state information $e_{his}$ is the state information stored after the third information is received. The encoding apparatus may perform channel measurement based on a received reference signal, to obtain the first channel information $H_{t+k-1}$, and then input the historical state information $e_{his}$ and the first channel information $H_{t+k-1}$ into the encoder for processing, to obtain the first feedback information $c_{t+k-1}$. The historical state information $e_{his}$ reflects one or more pieces of historical channel information obtained before the first channel information $H_{t+k-1}$ is obtained. Optionally, after the historical state information $e_{his}$ and the first channel information $H_{t+k-1}$ are input into the encoder for processing, new state information $e_{t+k}$ (that is, first state information) is further output. The new state information $e_{t+k}$ (that is, the first state information) may reflect one or more pieces of historical channel information including the first channel information $H_{t+k-1}$.

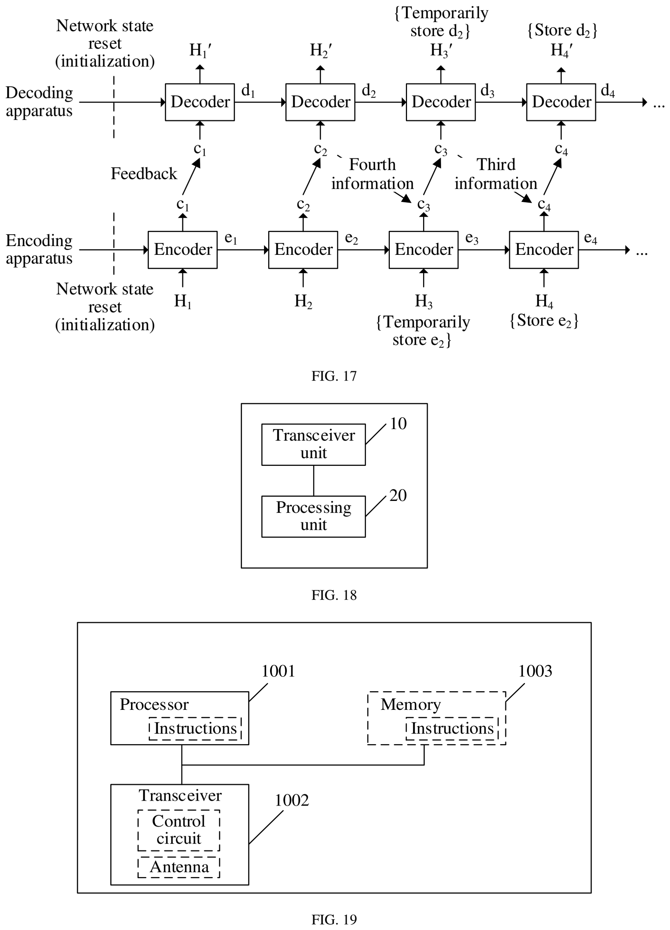

For example, k is equal to 2. Refer to FIG. 17. FIG. 17 is a seventh schematic flowchart of processing of an encoding apparatus and a decoding apparatus according to an embodiment of this application. As shown in FIG. 17, t is equal to 3. The encoding apparatus receives the fourth information in a $3^{rd}$ feedback time period, and the encoding apparatus temporarily stores state information $e_2$ obtained last time. Then, the encoding apparatus inputs channel information $H_3$ and the state information $e_2$ that is obtained by the encoding apparatus in the $3^{rd}$ feedback time period (or a $3^{rd}$ feedback) into the encoder for processing, and outputs feedback information $c_3$ and new state information $e_3$. In a $4^{th}$ feedback time period (or a $4^{th}$ feedback), the encoding apparatus receives the third information. If the value of the third information is the second value, the encoding apparatus stores the state information $e_2$ temporarily stored in the $3^{rd}$ feedback time period. If the value of the third information is the first value, the encoding apparatus deletes the state information $e_2$ temporarily stored in the $3^{rd}$ feedback time period, and stores the state information stored when a previous piece of third information is received. In the $4^{th}$ feedback time period (or the $4^{th}$ feedback), if the encoding apparatus further receives the first information after receiving the third information (which indicates that the second feedback information $c_2$ fails to be transmitted), the encoding apparatus may determine that the historical state information $e_{his}$ is the state information stored after the third information is received. Then, the encoding apparatus inputs the first channel information $H_4$ and the historical state information $e_{his}$ into the encoder for processing, and outputs first feedback information $c_4$ and new state information $e_4$ (that is, the first state information). If the second feedback information $c_2$ is successfully transmitted, the encoding apparatus does not receive the first information in the $4^{th}$ feedback time period (or the $4^{th}$ feedback), and the encoding apparatus may input the first channel information $H_4$ and the state information $e_3$ that is obtained by the encoding apparatus last time into the encoder for processing, and output first feedback information $c_4$ and new state information $e_4$.

In some possible implementations, the third information and the first information may be same information, or may certainly be different information. When the third information is different from the first information, the third information and the first information may be carried in one piece of signaling, or may be carried in different pieces of signaling. When the third information and the first information are same information, functions of the two pieces of information may be combined. In other words, one piece of information not only indicates the encoding apparatus to store state information, but also is for determining the historical state information of the encoding apparatus. Details are not described herein. In addition, when the third information and the first information are same information, the fifth information (that is, step S601) may not exist, or may certainly exist. When the fifth information exists, regardless whether feedback succeeds, a piece of information may be received with a delay of k feedback periodicities (the information has a function of both the third information and the first information).

S609: The encoding apparatus (for example, the UE) sends the first feedback information $c_{t+k-1}$ to the decoding apparatus (for example, the base station), where the first feedback information $c_{t+k-1}$ includes encoding information of the first channel information $H_{1+k-1}$ or encoding information of predicted channel information.

Correspondingly, the decoding apparatus (for example, the base station) receives the first feedback information $c_{t+k-1}$.

Optionally, for an implementation of step S609 in this embodiment of this application, refer to the implementation of step S205 in Embodiment 2. Details are not described herein again.

Optionally, after step S609, the information exchange method further includes the following step.

S610: The decoding apparatus (for example, the base station) inputs the first feedback information $c_{t+k-1}$ and historical state information $d_{his}$ of the decoding apparatus into the decoder for processing, to obtain third channel information $H_{t+x-1}'$, where the historical state information $d_{his}$ reflects one or more pieces of historical feedback information obtained before the first feedback information $c_{t+k-1}$ is obtained.

Optionally, a decoding process (for example, step S610) of the decoding apparatus may be an inverse process of an encoding process (for example, step S608) of the encoding apparatus. Specifically, if the second feedback information $c_{t-1}$ fails to be transmitted, for the $(t+k-1)^{th}$ feedback, the decoding apparatus may determine that the historical state information $d_{his}$ is state information stored after the third information is sent. After receiving the first feedback information $c_{t+k-1}$, the decoding apparatus may input the historical state information $d_{his}$ and the first feedback information $c_{t+k-1}$ into the decoder for processing, to obtain the third channel information $H_{1+k-1}'$. Optionally, after receiving the first feedback information $c_{t+k-1}$, the decoding apparatus may also input the state information stored after the decoding apparatus sends the third information and the first feedback information $c_{t+k-1}$ into the decoder for processing, without an operation or a step of determining the historical state information $d_{his}$.

For example, the historical state information $d_{his}$ reflects one or more pieces of historical feedback information obtained before the first feedback information $c_{t+k-1}$ is obtained. Optionally, after the historical state information $d_{his}$ and the first feedback information $c_{t+k-1}$ are input into the decoder for processing, new state information $d_{t+k-1}$ (that is, third state information) is further output. The new state information $d_{t+k-1}$ (that is, the third state information) may reflect one or more pieces of historical feedback information including the first feedback information $c_{t+k-1}$.

For example, as shown in FIG. 17, k is equal to 2, and t is equal to 3. The decoding apparatus sends the fourth information to the encoding apparatus in the $3^{rd}$ feedback time period, and temporarily stores state information $d_2$ obtained

last time (that is, the 2nd time), for subsequent use. In the 4th feedback time period (or the 4th feedback), the decoding apparatus sends the third information to the encoding apparatus. If the second feedback information $c_2$ is successfully transmitted, the third information is set to the second value, and the state information $d_2$ temporarily stored by the decoding apparatus in the 3rd feedback time period may be stored. If the second feedback information $c_2$ fails to be transmitted, the third information is set to the first value. In this case, the decoding apparatus may delete the state information $d_2$ temporarily stored in the 3rd feedback time period, and store state information stored when a previous piece of third information is sent. In addition, if the second feedback information $c_2$ fails to be transmitted, the decoding apparatus further delivers the first information to the encoding apparatus in the 4th feedback time period (or the 4th feedback). Then, for the 4th feedback, the decoding apparatus determines that the historical state information $d_{his}$ is the state information stored after the third information is sent, inputs the received first feedback information $c_4$ and the historical state information $d_{his}$ into the decoder for processing, and outputs third channel information $H_4'$ and new state information $d_4$ (that is, the third state information).

It may be understood that, in an ideal case, the decoder can completely restore the first channel information $H_{t+k-1}$ processed by the encoder. In this case, the third channel information $H_{t+k-1}'$ restored by the decoder based on the first feedback information $c_{t+k-1}$ and the historical state information $d_{his}$ is the same as the first channel information $H_{t+k-1}$ input by the encoder, or is the same as channel information predicted by the encoder based on the first channel information $H_{t+k-1}$. However, in actual application, the decoder cannot completely restore the first channel information $H_{t+k-1}$ processed by the encoder. Therefore, in actual application, the third channel information $H_{t+k-1}'$ and the first channel information $H_{t+k-1}$ input by the encoder have specific (or subtle) differences, or the third channel information $H_{t+k-1}'$ and the channel information predicted by the encoder based on the first channel information $H_{t+k-1}$ have specific (or subtle) differences. In some scenarios, these differences may be ignored.

The encoding apparatus in this embodiment of this application stores state information that is at a specific moment based on an indication of the decoding apparatus, so that the encoding apparatus can roll back the state information when feedback information fails to be transmitted, and further, running complexity of the encoding apparatus can be reduced. Moreover, the encoding apparatus in this embodiment of this application can temporarily store the state information, so that impact of a delay in sensing and delivering the first information by the decoding apparatus on the state information rollback can be processed. In addition, the encoding apparatus further determines, based on an indication of the decoding apparatus, whether to use historical state information as an input of the encoder. In this way, for a same feedback, state information input by the encoder can be consistent with state information input by the decoder, thereby improving decoding performance of a base station side (or the decoder), reducing a communication performance loss, and improving communication quality.

The foregoing content describes in detail the method provided in this application. To facilitate implementation of the foregoing solutions in embodiments of this application, embodiments of this application further provide a corresponding apparatus or device.

In this application, the encoding apparatus and the decoding apparatus are divided into functional modules based on the foregoing method embodiments. For example, the functional modules may be obtained through division corresponding to various functions, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail an encoding apparatus and a decoding apparatus in embodiments of this application with reference to FIG. 18 to FIG. 20.

Refer to FIG. 18. FIG. 18 is a diagram of a structure of an encoding apparatus or a decoding apparatus according to an embodiment of this application. As shown in FIG. 18, the encoding apparatus or the decoding apparatus may include a transceiver unit 10 and a processing unit 20.

In some embodiments of this application, FIG. 18 is a diagram of a structure of an encoding apparatus. The encoding apparatus may be UE or a chip or a circuit disposed in the UE. The encoding apparatus may be configured to perform the steps, functions, or the like performed by the encoding apparatus in the foregoing method embodiments.

The transceiver unit 10 is configured to receive first information sent by a decoding apparatus, where the first information is for determining historical state information $e_{his}$ of the encoding apparatus. The processing unit 20 is configured to input, based on the first information, the historical state information $e_{his}$ of the encoding apparatus and first channel information into the encoder for processing, to obtain first feedback information, where the historical state information $e_{his}$ reflects one or more pieces of historical channel information obtained before the first channel information is obtained. The transceiver unit 10 is further configured to send the first feedback information to the decoding apparatus, where the first feedback information includes encoding information of the first channel information or encoding information of predicted channel information.

For example, first state information may be obtained by inputting the historical state information $e_{his}$ and the first channel information into the encoder for processing. The first state information may reflect one or more pieces of historical channel information including the first channel information.

For example, the transceiver unit 10 is further configured to send second feedback information to the decoding apparatus, where the second feedback information is feedback information that is output after second channel information and state information $e_{t-1}$ are input into the encoder for processing, and the state information $e_{t-1}$ reflects one or more pieces of historical channel information obtained before the second channel information is obtained.

For example, the transceiver unit 10 is further configured to receive second information sent by the decoding apparatus, where the second information indicates one or more of the following: whether the encoding apparatus performs periodic storage, a storage periodicity, or a start moment of the storage periodicity. The processing unit 20 is further configured to periodically store, based on an indication of the second information received by the transceiver unit 10, state information output by the encoder.

For example, the processing unit 20 is specifically configured to temporarily store state information $e_{n(T/S)-k}$ obtained by the encoding apparatus in an $(n(T/S)-k)^{th}$ feedback time period. The transceiver unit 10 is further configured to receive, in an $(n(T/S))^{th}$ feedback time period, third information sent by the decoding apparatus, where the third information indicates to store state information stored in an $((n-1)*(T/S))^{th}$ feedback time period, or the third information indicates to store the state information $e_{n(T/S)-k}$ obtained in the $(n(T/S)-k)^{th}$ feedback time period. The processing unit 20 is further configured to store corresponding state information based on an indication of the third information received by the transceiver unit 10. For example, the processing unit 20 is specifically configured to: when a value of the third information is a first value, store, in the $(n(T/S))^{th}$ feedback time period, the state information stored in the $((n-1)*(T/S))^{th}$ feedback time period; and when the value of the third information is a second value, store, in the $(n(T/S))^{th}$ feedback time period, the state information $e_{n(T/S)-k}$ obtained in the $(n(T/S)-k)^{th}$ feedback time period.

n, k, S, and T are all positive integers, T represents a storage periodicity, and S represents a feedback periodicity. One storage periodicity T is an integer multiple of one feedback periodicity S, and one feedback periodicity is for describing a sending time interval between two adjacent pieces of feedback information.

For example, the processing unit 20 is further configured to determine that the historical state information $e_{his}$ is state information stored in a previous storage periodicity before the encoding apparatus receives the first information.

For example, the transceiver unit 10 is further configured to receive, in a $t^{th}$ feedback time period, fourth information sent by the decoding apparatus, where the fourth information indicates the encoding apparatus to store state information obtained in a feedback time period previous to the $t^{th}$ feedback time period, where t is a positive integer. The processing unit 20 is further configured to store, based on an indication of the fourth information received by the transceiver unit 10, the state information $e_{t-1}$ obtained by the encoding apparatus in the feedback time period previous to the $t^{th}$ feedback time period. The processing unit 20 is further configured to determine that the historical state information $e_{his}$ is the state information $e_{t-1}$ stored after the encoding apparatus receives the fourth information.

For example, the transceiver unit 10 is further configured to receive, in a $t^{th}$ feedback time period, fourth information sent by the decoding apparatus, where the fourth information indicates the encoding apparatus to store state information obtained in a feedback time period previous to the $t^{th}$ feedback time period, where t is a positive integer. The processing unit 20 is further configured to temporarily store, based on an indication of the fourth information received by the transceiver unit 10, the state information $e_{t-1}$ obtained by the encoding apparatus in the feedback time period previous to the $t^{th}$ feedback time period. The transceiver unit 10 is further configured to receive, in a $(t+k-1)^{th}$ feedback time period, third information sent by the decoding apparatus, where the third information indicates the encoding apparatus to store the state information $e_{t-1}$ temporarily stored after the fourth information is received in the $t^{th}$ feedback time period, or the third information indicates the encoding apparatus to store state information stored when a previous piece of third information is received, where k is a positive integer. The processing unit 20 is further configured to store corresponding state information based on an indication of the third information received by the transceiver unit 10.

For example, the processing unit 20 is further configured to determine that the historical state information $e_{his}$ is the state information stored after the third information is received.

For example, the processing unit 20 is further configured to update the historical state information $e_{his}$ to state information output by the encoder in a feedback time period previous to current time.

For example, the transceiver unit 10 is further configured to receive fifth information sent by the decoding apparatus, where the fifth information indicates the encoding apparatus to receive the first information with a delay of k feedback periodicities after sending feedback information, where k is a positive integer.

In this embodiment of this application, for descriptions of the first information, the second information, the third information, the fourth information, the fifth information, the historical state information $e_{his}$, the feedback information, and the like, refer to the descriptions in the foregoing method embodiments (including FIG. 7, FIG. 8, FIG. 10, FIG. 12, FIG. 14, FIG. 16, or the like). Details are not described herein again.

It may be understood that the specific descriptions of the transceiver unit and the processing unit described in this embodiment of this application are merely examples. For specific functions, performed steps, or the like of the transceiver unit and the processing unit, refer to the foregoing method embodiments. Details are not described herein again.

In some other embodiments of this application, FIG. 18 is a diagram of a structure of a decoding apparatus. The decoding apparatus may be a base station or a chip or a circuit disposed in the base station. The decoding apparatus may be configured to perform the steps, functions, or the like performed by the decoding apparatus in the foregoing method embodiments.

The transceiver unit 10 is configured to send first information to an encoding apparatus, where the first information is for determining historical state information $e_{his}$ of the encoding apparatus. The transceiver unit 10 is further configured to receive first feedback information sent by the encoding apparatus, where the first feedback information is determined based on first channel information and the historical state information $e_{his}$ of the encoding apparatus, where the historical state information $e_{his}$ reflects one or more pieces of historical channel information obtained before the first channel information is obtained, and the first feedback information includes encoding information of the first channel information or encoding information of predicted channel information. The first feedback information and historical state information $d_{his}$ of the decoding apparatus are input together into a decoder for processing, to obtain third channel information, where the historical state information $d_{his}$ reflects one or more pieces of historical feedback information obtained before the first feedback information is obtained.

For example, the processing unit 20 is configured to input the first feedback information and the historical state information $d_{his}$ of the decoding apparatus into the decoder for processing, to obtain the third channel information, where the historical state information $d_{his}$ reflects one or more pieces of historical feedback information obtained before the first feedback information is obtained.

For example, the first feedback information and the historical state information $d_{his}$ of the decoding apparatus are input into the decoder for processing to obtain third state information, where the third state information reflects one or more pieces of historical feedback information including the first feedback information.

For example, the transceiver unit 10 is further configured to send the second information to the encoding apparatus, where the second information indicates one or more of the following: whether the encoding apparatus performs periodic storage, a storage periodicity, or a start moment of the storage periodicity. The processing unit 20 is further configured to periodically store based on the storage periodicity and/or the start moment of the storage periodicity, state information output by the decoder.

For example, the processing unit 20 is specifically configured to temporarily store state information $d_{n(T/S)-k}$ obtained by the decoding apparatus in an $(n(T/S)-k)^{th}$ feedback time period. The transceiver unit 10 is further configured to send third information to the encoding apparatus before an $(n(T/S))^{th}$ feedback time period, where the third information indicates the encoding apparatus to store state information stored in an $((n-1)*(T/S))^{th}$ feedback time period, or the third information indicates the encoding apparatus to store state information $d_{n(T/S)-k}$ obtained in the $(n(T/S)-k)^{th}$ feedback time period. The processing unit 20 is further configured to store, based on the third information, state information stored by the decoding apparatus in the $((n-1)*(T/S))^{th}$ feedback time period, or store the state information $d_{n(T/S)-k}$ obtained by the decoding apparatus in the $(n(T/S)-k)^{th}$ feedback time period.

n, k, S, and T are all positive integers. T represents a storage periodicity, and S represents a feedback periodicity. One storage periodicity T is an integer multiple of one feedback periodicity S, and one feedback periodicity is for describing a sending time interval between two adjacent pieces of feedback information.

For example, the processing unit 20 is further configured to determine that the historical state information $d_{his}$ is state information stored in a previous storage periodicity before the decoding apparatus sends the first information.

For example, the transceiver unit 10 is further configured to send fourth information to the encoding apparatus before the $t^{th}$ feedback time period, where the fourth information indicates the encoding apparatus to store state information obtained in a feedback time period previous to the $t^{th}$ feedback time period, where t is a positive integer. The processing unit 20 is further configured to store state information $d_{t-1}$ obtained by the decoding apparatus in the feedback time period previous to the $t^{th}$ feedback time period. The processing unit 20 is further configured to determine that the historical state information $d_{his}$ is the state information $d_{t-1}$ stored after the decoding apparatus sends the fourth information.

For example, the transceiver unit 10 is further configured to send fourth information to the encoding apparatus before the $t^{th}$ feedback time period, where the fourth information indicates the encoding apparatus to store state information obtained in a feedback time period previous to the $t^{th}$ feedback time period, where t is a positive integer. The processing unit 20 is further configured to temporarily store state information $d_{t-1}$ obtained by the decoding apparatus in the feedback time period previous to the $t^{th}$ feedback time period. The transceiver unit 10 is further configured to send third information to the encoding apparatus before a $(t+k-1)^{th}$ feedback time period, where the third information indicates the encoding apparatus to store state information $e_{t-1}$ temporarily stored after the fourth information is received in the $t^{th}$ feedback time period, or the third information indicates the encoding apparatus to store state information stored when a previous piece of third information is received, where k is a positive integer. The processing unit 20 is further configured to store, based on the third information, the state information $d_{t-1}$ temporarily stored after the decoding apparatus sends the fourth information, or storing state information that is stored when the decoding apparatus sends the previous piece of third information.

For example, the processing unit 20 is further configured to determine that the historical state information $d_{his}$ is the state information stored after the third information is sent.

For example, the processing unit 20 is further configured to update the historical state information $d_{his}$ to state information output by the decoder in a feedback time period previous to current time.

For example, the transceiver unit 10 is further configured to send fifth information to the encoding apparatus, where the fifth information indicates the encoding apparatus to receive the first information with a delay of k feedback periodicities after sending feedback information, where k is a positive integer.

In this embodiment of this application, for descriptions of the first information, the second information, the third information, the fourth information, the fifth information, the historical state information $e_{his}$, the historical state information $d_{his}$, the feedback information, and the like, refer to the descriptions in the foregoing method embodiments (including FIG. 7, FIG. 8, FIG. 10, FIG. 12, FIG. 14, FIG. 16, or the like). Details are not described herein again.

It may be understood that the specific descriptions of the transceiver unit and the processing unit described in this embodiment of this application are merely examples. For specific functions, performed steps, or the like of the transceiver unit and the processing unit, refer to the foregoing method embodiments. Details are not described herein again.

The foregoing describes the encoding apparatus and the decoding apparatus in embodiments of this application. The following describes possible product forms of the encoding apparatus and the decoding apparatus. It should be understood that any form of product that has a function of the encoding apparatus or the decoding apparatus described in FIG. 18 falls within the protection scope of embodiments of this application. It should be further understood that the following descriptions are merely an example, and does not limit a product form of the encoding apparatus and the decoding apparatus in embodiments of this application.

In a possible implementation, in the encoding apparatus or the decoding apparatus shown in FIG. 18, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Still further, after the transceiver receives the information, other processing may need to be performed on the information before the information is input into the processor.

Refer to FIG. 19. FIG. 19 is a diagram of a structure of a communication apparatus according to an embodiment of this application. The communication apparatus may be an encoding apparatus or a decoding apparatus. FIG. 19 shows only main components of the communication apparatus. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1002 may include a receiver and a transmitter. The receiver is configured to perform a receiving function (or operation), and the transmitter is configured to perform a transmitting function (or operation). In addition, the transceiver is configured to communicate with another device/apparatus through a transmission medium.

The processor 1001, the transceiver 1002, and the memory 1003 may be connected through a communication bus.

For example, when the communication apparatus is configured to perform a step, a method, or a function performed by the encoding apparatus, the transceiver 1002 is configured to receive first information sent by a decoding apparatus, where the first information is for determining historical state information $e_{his}$ of the encoding apparatus. The processor 1001 is configured to input, based on the first information, the historical state information $e_{his}$ of the encoding apparatus and first channel information into the encoder for processing, to obtain first feedback information, where the historical state information $e_{his}$ reflects one or more pieces of historical channel information obtained before the first channel information is obtained. The transceiver 1002 is further configured to send the first feedback information to the decoding apparatus where the first feedback information includes encoding information of the first channel information or encoding information of predicted channel information.

For example, when the communication apparatus is configured to perform a step, a method, or a function performed by the decoding apparatus, the transceiver 1002 is configured to send first information to the encoding apparatus, where the first information is for determining historical state information $e_{his}$ of the encoding apparatus. The transceiver 1002 is further configured to receive first feedback information sent by the encoding apparatus, where the first feedback information is determined based on first channel information and the historical state information $e_{his}$ of the encoding apparatus, where the historical state information $e_{his}$ reflects one or more pieces of historical channel information obtained before the first channel information is obtained, and the first feedback information includes encoding information of the first channel information or encoding information of predicted channel information. The first feedback information and historical state information $d_{his}$ of the decoding apparatus are input together into a decoder for processing, to obtain third channel information, where the historical state information $d_{his}$ reflects one or more pieces of historical feedback information obtained before the first feedback information is obtained.

Optionally, the processor 1001 is configured to input the first feedback information and the historical state information $d_{his}$ of the decoding apparatus into the decoder for processing, to obtain the third channel information, where the historical state information $d_{his}$ reflects one or more pieces of historical feedback information obtained before the first feedback information is obtained.

In this embodiment of this application, for descriptions of the first information, the historical state information $e_{his}$, the historical state information $d_{his}$, the feedback information, the encoding apparatus, the decoding apparatus, and the like, refer to the descriptions in the foregoing method embodiments (including FIG. 7, FIG. 8, FIG. 10, FIG. 12, FIG. 14, FIG. 16, or the like). Details are not described herein again. It may be understood that for specific descriptions of the processor and the transceiver, refer to the descriptions of the processing unit and the transceiver unit shown in FIG. 18. Details are not described herein again.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit. The circuit may implement the transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (N-channel Metal-oxide-semiconductor, NMOS), a positive-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components and the like than those in FIG. 19. This is not limited in embodiments of this application. The foregoing methods performed by the processor and the transceiver are merely examples. For specific steps performed by the processor and the transceiver, refer to descriptions in the foregoing method embodiments.

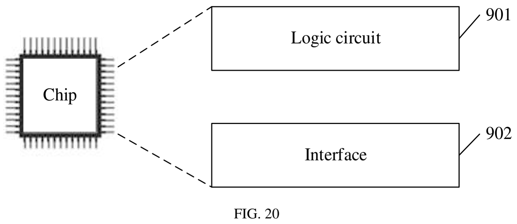

In another possible implementation, in the encoding apparatus or the decoding apparatus shown in FIG. 18, the processing unit 20 may be one or more logic circuits, and the transceiver unit 10 may be an input/output interface that is also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. Refer to FIG. 20. FIG. 20 is another diagram of a structure of a communication apparatus according to an embodiment of this application. The communication apparatus may be an encoding apparatus or a decoding apparatus. As shown in FIG. 20, the communication apparatus shown in FIG. 20 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 20 shows an example in which the communication apparatus is a chip. The chip includes the logic circuit 901 and the interface 902.

In this embodiment of this application, the logic circuit and the interface may be coupled to each other. A specific manner of connection between the logical circuit and the interface is not limited in this embodiment of this application.

For example, when the communication apparatus is configured to perform a method, a function, or a step performed by the encoding apparatus, the interface 902 is configured to receive first information sent by a decoding apparatus, where the first information is for determining historical state information $e_{his}$ of the encoding apparatus. The logic circuit 901 is configured to input, based on the first information, the historical state information $e_{his}$ of the encoding apparatus and first channel information into the encoder for processing, to obtain first feedback information, where the historical state information $e_{his}$ reflects one or more pieces of historical channel information obtained before the first channel information is obtained. The interface 902 is further configured to send the first feedback information to the decoding apparatus where the first feedback information includes encoding information of the first channel information or encoding information of predicted channel information.

For example, when the communication apparatus is configured to perform a step, a method, or a function performed by the decoding apparatus, the interface 902 is configured to send first information to the encoding apparatus, where the first information is for determining historical state information $e_{his}$ of the encoding apparatus. The interface 902 is further configured to receive first feedback information sent by the encoding apparatus, where the first feedback information is determined based on first channel information and the historical state information $e_{his}$ of the encoding apparatus, where the historical state information $e_{his}$ reflects one or more pieces of historical channel information obtained before the first channel information is obtained, and the first feedback information includes encoding information of the first channel information or encoding information of predicted channel information. The first feedback information and historical state information $d_{his}$ of the decoding apparatus are input together into a decoder for processing, to obtain third channel information, where the historical state information $d_{his}$ reflects one or more pieces of historical feedback information obtained before the first feedback information is obtained.

Optionally, the logic circuit 901 is configured to input the first feedback information and the historical state information $d_{his}$ of the decoding apparatus into the decoder for processing, to obtain the third channel information, where the historical state information $d_{his}$ reflects one or more pieces of historical feedback information obtained before the first feedback information is obtained.

In this embodiment of this application, for descriptions of the first information, the historical state information $e_{his}$, the historical state information $d_{his}$, the feedback information, the encoding apparatus, the decoding apparatus, and the like, refer to the descriptions in the foregoing method embodiments (including FIG. 7, FIG. 8, FIG. 10, FIG. 12, FIG. 14, FIG. 16, or the like). Details are not described herein again. It may be understood that for specific descriptions of the logic circuit 901 and the interface 902, refer to the descriptions of the processing unit and the transceiver unit shown in FIG. 18. Details are not described herein again.

It may be understood that the communication apparatus shown in this embodiment of this application may implement the methods provided in embodiments of this application in a form of hardware, or may implement the methods provided in embodiments of this application in a form of software. This is not limited in this embodiment of this application.

For specific implementations of the embodiments shown in FIG. 20, refer to the foregoing embodiments. Details are not described herein again.

An embodiment of this application further provides a wireless communication system. The wireless communication system includes an encoding apparatus and a decoding apparatus. The encoding apparatus and the decoding apparatus may be configured to perform the method in any one of the foregoing embodiments (FIG. 7, FIG. 8, FIG. 10, FIG. 12, FIG. 14, or FIG. 16).

In addition, this application further provides a computer program. The computer program is used to implement operations and/or processing performed by the encoding apparatus in the methods provided in this application.

This application further provides a computer program. The computer program is used to implement operations and/or processing performed by the decoding apparatus in the methods provided in this application.

This application further provides a computer-readable storage medium. The computer-readable storage medium stores computer code. When the computer code is run on a computer, the computer is enabled to perform operations and/or processing performed by the encoding apparatus in the methods provided in this application.

This application further provides a computer-readable storage medium. The computer-readable storage medium stores computer code. When the computer code is run on a computer, the computer is enabled to perform operations and/or processing performed by the decoding apparatus in the methods provided in this application.

This application further provides a computer program product. The computer program product includes computer code or a computer program. When the computer code or the computer program is run on a computer, operations and/or processing performed by the encoding apparatus in the methods provided in this application are/is performed.

This application further provides a computer program product. The computer program product includes computer code or a computer program. When the computer code or the computer program is run on a computer, operations and/or processing performed by the decoding apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information exchange method, comprising:

    receiving, by an encoding apparatus, first information sent by a decoding apparatus, wherein the first information is for determining historical state information $e_{his}$ of the encoding apparatus;
    determining, by the encoding apparatus, first feedback information based on the historical state information $e_{his}$ of the encoding apparatus; and
    sending, by the encoding apparatus, the first feedback information to the decoding apparatus, wherein the first feedback information is for determining third channel information.

2. The method according to claim 1, wherein the third channel information is historical channel information restored by a decoder of the decoding apparatus, or predicted channel information restored by the decoder of the decoding apparatus.

3. The method according to claim 1, wherein determining, by the encoding apparatus, the first feedback information based on the historical state information $e_{his}$ of the encoding apparatus comprises:

determining, by an encoder of the encoding apparatus based on the first information, the historical state information $e_{his}$ of the encoding apparatus and first channel information as the first feedback information, wherein the historical state information $e_{his}$ reflects one or more pieces of historical channel information obtained before the first channel information is obtained, wherein
the first feedback information comprises encoding information of the first channel information or encoding information of predicted channel information.

4. The method according to claim 3, wherein the encoding apparatus inputs, based on the first information, the historical state information $e_{his}$ of the encoding apparatus and the first channel information into the encoder for processing, to obtain first state information, wherein the first state information reflects one or more pieces of historical channel information that comprise the first channel information.

5. The method according to claim 3 or 4, wherein the first channel information is determined based on channel state information CSI.

6. The method according to any one of claims 3 to 5, wherein the encoder is a first artificial intelligence AI model.

7. The method according to any one of claims 1 to 6, wherein before receiving, by the encoding apparatus, the first information sent by the decoding apparatus, the method further comprises:
sending, by the encoding apparatus, second feedback information to the decoding apparatus, wherein the second feedback information is feedback information that is output after second channel information and state information $e_{t-1}$ are input into the encoder for processing, and the state information $e_{t-1}$ reflects one or more pieces of historical channel information obtained before the second channel information is obtained.

8. The method according to claim 7, wherein the first feedback information is a $k^{th}$ piece of feedback information after the second feedback information, wherein k is a positive integer.

9. The method according to any one of claims 1 to 8, wherein before receiving, by the encoding apparatus, the first information sent by the decoding apparatus, the method further comprises:

receiving, by the encoding apparatus, second information sent by the decoding apparatus, wherein the second information indicates one or more of the following: whether the encoding apparatus performs periodic storage, a storage periodicity, or a start moment of the storage periodicity; and
periodically storing, by the encoding apparatus based on an indication of the second information, state information output by the encoder.

10. The method according to claim 9, wherein periodically storing, by the encoding apparatus based on the indication of the second information, the state information output by the encoder comprises:

temporarily storing, by the encoding apparatus, state information $e_{n(T/S)-k}$ obtained by the encoding apparatus in an $(n(T/S)-k)^{th}$ feedback time period, wherein n, k, S, and T are all positive integers, T represents a storage periodicity, S represents a feedback periodicity, one storage periodicity T is an integer multiple of one feedback periodicity S, and one feedback periodicity is for describing a sending time interval between two adjacent pieces of feedback information;
receiving, by the encoding apparatus in an $(n(T/S))^{th}$ feedback time period, third information sent by the decoding apparatus, wherein the third information indicates the encoding apparatus to store state information stored in an $((n-1)*(T/S))^{th}$ feedback time period, or the third information indicates the encoding apparatus to store the state information $e_{n(T/S)-k}$ obtained in the $(n(T/S)-k)^{th}$ feedback time period; and
storing, by the encoding apparatus, corresponding state information based on an indication of the third information.

11. The method according to claim 9, wherein after receiving, by the encoding apparatus, the first information sent by the decoding apparatus, the method further comprises:
determining, by the encoding apparatus, that the historical state information $e_{his}$ is state information stored in a previous storage periodicity before the encoding apparatus receives the first information.

12. The method according to any one of claims 1 to 8, wherein before receiving, by the encoding apparatus, the first information sent by the decoding apparatus, the method further comprises:

receiving, by the encoding apparatus, fourth information sent by the decoding apparatus, wherein the fourth information indicates the encoding apparatus to store state information obtained in a feedback time period previous to a $t^{th}$ feedback time period, wherein t is a positive integer; and
storing, by the encoding apparatus based on an indication of the fourth information, the state information $e_{t-1}$ obtained by the encoding apparatus in the feedback time period previous to the $t^{th}$ feedback time period; and
after receiving, by the encoding apparatus, the first information sent by the decoding apparatus, the method further comprises:
determining, by the encoding apparatus, that the historical state information $e_{his}$ is the state information $e_{t-1}$ stored after the encoding apparatus receives the fourth information.

13. The method according to any one of claims 1 to 8, wherein before receiving, by the encoding apparatus, the first information sent by the decoding apparatus, the method further comprises:

receiving, by the encoding apparatus, fourth information sent by the decoding apparatus, wherein the fourth information indicates the encoding apparatus to store state information obtained in a feedback time period previous to a $t^{th}$ feedback time period, wherein t is a positive integer;
temporarily storing, by the encoding apparatus based on an indication of the fourth information, the state information $e_{t-1}$ obtained by the encoding apparatus in the feedback time period previous to the $t^{th}$ feedback time period;
receiving, by the encoding apparatus in a $(t+k-1)^{th}$ feedback time period, third information sent by the decoding apparatus, wherein the third information indicates the encoding apparatus to store the state information $e_{t-1}$ temporarily stored after the fourth information is received in the $t^{th}$ feedback time period, or the third information indicates the encoding apparatus to store state information stored when a previous piece of third information is received, wherein k is a positive integer; and
storing, by the encoding apparatus, corresponding state information based on an indication of the third information.

14. The method according to claim 13, wherein after receiving, by the encoding apparatus, the first information sent by the decoding apparatus, the method further comprises:
determining, by the encoding apparatus, that the historical state information $e_{his}$ is state information stored after the third information is received.

15. The method according to any one of claims 1 to 6, wherein after receiving, by the encoding apparatus, the first information sent by the decoding apparatus, the method further comprises:
updating, by the encoding apparatus, the historical state information $e_{his}$ to state information output by the encoder in a feedback time period previous to current time.

16. The method according to any one of claims 1 to 8, wherein the first information comprises or indicates a step size m of state information rollback, wherein m is a positive integer; and
the historical state information $e_{his}$ is the same as state information $e_{q-m-1}$ input by the encoder at a $(q-m)^{th}$ time, and state information input by the encoder at a $q^{th}$ time is the historical state information $e_{his}$, wherein q is a positive integer greater than m.

17. The method according to any one of claims 1 to 16, wherein before receiving, by the encoding apparatus, the first information sent by the decoding apparatus, the method further comprises:
receiving, by the encoding apparatus, fifth information sent by the decoding apparatus, wherein the fifth information indicates the encoding apparatus to receive the first information with a delay of k feedback periodicities after sending feedback information, wherein k is a positive integer.

18. The method according to claim 17, wherein k is greater than or equal to the step size m of the state information rollback.

19. An information exchange method, comprising:

sending, by a decoding apparatus, first information to an encoding apparatus, wherein the first information is for determining historical state information $e_{his}$ of the encoding apparatus; and

receiving, by the decoding apparatus, first feedback information sent by the encoding apparatus, wherein the first feedback information is determined based on the historical state information $e_{his}$ of the encoding apparatus, wherein

the first feedback information is for determining third channel information.

20. The method according to claim 19, wherein that the first feedback information is for determining the third channel information comprises:

determining, by a decoder of the decoding apparatus, the third channel information based on the first feedback information and historical state information $d_{his}$ of the decoding apparatus, wherein the historical state information $d_{his}$ reflects one or more pieces of historical feedback information obtained before the first feedback information is obtained.

21. The method according to claim 19 or 20, wherein the third channel information is historical channel information restored by the decoder of the decoding apparatus, or predicted channel information restored by the decoder of the decoding apparatus.

22. The method according to claim 19 or 20, wherein that the first feedback information is determined based on the historical state information $e_{his}$ of the encoding apparatus comprises:

the first feedback information is determined based on first channel information and the historical state information $e_{his}$ of the encoding apparatus, wherein the historical state information $e_{his}$ reflects one or more pieces of historical channel information obtained before the first channel information is obtained, and the first feedback information comprises encoding information of the first channel information or encoding information of predicted channel information.

23. The method according to any one of claims 19 to 22, wherein the first feedback information and the historical state information $d_{his}$ of the decoding apparatus are input into the decoder for processing to obtain third state information, wherein the third state information reflects one or more pieces of historical feedback information comprising the first feedback information.

24. The method according to claim 22, wherein the first channel information is determined based on channel state information CSI.

25. The method according to claim 20, wherein the decoder is a second AI model.

26. The method according to any one of claims 19 to 25, wherein before sending, by the decoding apparatus, the first information to the encoding apparatus, the method further comprises:

sending, by the decoding apparatus, second information to the encoding apparatus, wherein the second information indicates one or more of the following: whether the encoding apparatus performs periodic storage, a storage periodicity, or a start moment of the storage periodicity; and
periodically storing, by the decoding apparatus based on the storage periodicity and/or the start moment of the storage periodicity, state information output by the decoder.

27. The method according to claim 26, wherein periodically storing, by the decoding apparatus based on the storage periodicity and/or the start moment of the storage periodicity, the state information output by the decoder comprises:

temporarily storing, by the decoding apparatus, state information $d_{n(T/S)-k}$ obtained by the decoding apparatus in an $(n(T/S)-k)^{th}$ feedback time period, wherein n, k, S, and T are all positive integers, T represents a storage periodicity, S represents a feedback periodicity, one storage periodicity T is an integer multiple of one feedback periodicity S, and one feedback periodicity is for describing a sending time interval between two adjacent pieces of feedback information;
sending, by the decoding apparatus, third information to the encoding apparatus before an $(n(T/S))^{th}$ feedback time period, wherein the third information indicates the encoding apparatus to store state information stored in an $((n-1)*(T/S))^{th}$ feedback time period, or the third information indicates the encoding apparatus to store state information $d_{n(T/S)-k}$ obtained in the $(n(T/S)-k)^{th}$ feedback time period; and
storing, by the decoding apparatus based on the third information, state information stored by the decoding apparatus in the $((n-1)*(T/S))^{th}$ feedback time period, or storing the state information $d_{n(T/S)-k}$ obtained by the decoding apparatus in the $(n(T/S)-k)^{th}$ feedback time period.

28. The method according to claim 27, wherein after sending, by the decoding apparatus, the first information to the encoding apparatus, the method further comprises:
determining, by the decoding apparatus, that the historical state information $d_{his}$ is state information stored in a previous storage periodicity before the decoding apparatus sends the first information.

29. The method according to any one of claims 19 to 25, wherein before sending, by the decoding apparatus, the first information to the encoding apparatus, the method further comprises:

> sending, by the decoding apparatus, fourth information to the encoding apparatus, wherein the fourth information indicates the encoding apparatus to store state information obtained in a feedback time period previous to a $t^{th}$ feedback time period, wherein t is a positive integer; and
> storing, by the decoding apparatus, state information $d_{t-1}$ obtained by the decoding apparatus in the feedback time period previous to the $t^{th}$ feedback time period; and
> after sending, by the decoding apparatus, the first information to the encoding apparatus, the method further comprises:
> determining, by the decoding apparatus, that the historical state information $d_{his}$ is the state information $d_{t-1}$ stored after the decoding apparatus sends the fourth information.

30. The method according to any one of claims 19 to 25, wherein before sending, by the decoding apparatus, the first information to the encoding apparatus, the method further comprises:

> sending, by the decoding apparatus, fourth information to the encoding apparatus, wherein the fourth information indicates the encoding apparatus to store state information obtained in a feedback time period previous to a $t^{th}$ feedback time period, wherein t is a positive integer;
> temporarily storing, by the decoding apparatus, state information $d_{t-1}$ obtained by the decoding apparatus in the feedback time period previous to the $t^{th}$ feedback time period;
> sending, by the decoding apparatus, third information to the encoding apparatus before a $(t+k-1)^{th}$ feedback time period, wherein the third information indicates the encoding apparatus to store state information $e_{t-1}$ temporarily stored after the fourth information is received in the $t^{th}$ feedback time period, or the third information indicates the encoding apparatus to store state information stored when a previous piece of third information is received, wherein k is a positive integer; and
> storing, by the decoding apparatus based on the third information, the state information $d_{t-1}$ temporarily stored after the decoding apparatus sends the fourth information, or storing state information that is stored when the decoding apparatus sends the previous piece of third information.

31. The method according to claim 30, wherein after sending, by the decoding apparatus, the first information to the encoding apparatus, the method further comprises:
determining, by the decoding apparatus, that the historical state information $d_{his}$ is state information stored after the third information is sent.

32. The method according to any one of claims 19 to 25, wherein after sending, by the decoding apparatus, the first information to the encoding apparatus, the method further comprises:
updating, by the decoding apparatus, the historical state information $d_{his}$ to state information output by the decoder in a feedback time period previous to current time.

33. The method according to any one of claims 19 to 25, wherein the first information comprises or indicates a step size m of state information rollback, wherein m is a positive integer; and
the historical state information $d_{his}$ is the same as state information $d_{q-m-1}$ input by the decoder at a $(q-m)^{th}$ time, and state information input by the decoder at a $q^{th}$ time is the historical state information $d_{his}$, wherein q is a positive integer greater than m.

34. The method according to any one of claims 19 to 33, wherein before sending, by the decoding apparatus, the first information to the encoding apparatus, the method further comprises:
sending, by the decoding apparatus, fifth information to the encoding apparatus, wherein the fifth information indicates the encoding apparatus to receive the first information with a delay of k feedback periodicities after sending feedback information, wherein k is a positive integer.

35. The method according to claim 34, wherein k is greater than or equal to the step size m of the state information rollback.

36. An encoding apparatus, comprising a module or unit configured to perform the method according to any one of claims 1 to 18.

37. A decoding apparatus, comprising a module or unit configured to perform the method according to any one of claims 19 to 35.

38. An encoding apparatus, comprising:

   one or more processors, wherein the one or more processors are coupled to one or more memories; and
   the one or more memories are configured to store a computer program, and the one or more processors are configured to execute the computer program stored in the one or more memories, to enable the encoding apparatus to perform the method according to any one of claims 1 to 18.

39. A decoding apparatus, comprising:

   one or more processors, wherein the one or more processors are coupled to one or more memories; and
   the one or more memories are configured to store a computer program, and the one or more processors are configured to execute the computer program stored in the one or more memories, to enable the decoding apparatus to perform the method according to any one of claims 19 to 35.

40. A wireless communication system, comprising:
   an encoding apparatus configured to perform the method according to any one of claims 1 to 18, and a decoding apparatus configured to perform the method according to any one of claims 19 to 35.

41. A readable storage medium, configured to store a program, wherein the program is executed by one or more processors, to enable an apparatus comprising the one or more processors to perform the method according to any one of claims 1 to 35.

42. A computer program product, wherein when the computer program product is executed, the method according to any one of claims 1 to 35 is performed.

FIG. 1

FIG. 2

Weight
value

Layer

Neuron

Input
layer

Output
layer

Hidden
layer

FIG. 3

$W_0X_0$

$W_1X_1$

$W_nX_n$

Neuron

$$y = f(\sum_{i=0}^{n} w_i x_i + b)$$

y

FIG. 4

Network state reset
(initialization)

$H_1'$        $H_2'$        $H_3'$        $H_4'$

BS —— | Decoder | $d_1$ | Decoder | $d_2$ | Decoder | $d_3$ | Decoder | $d_4$ ...

$c_1$        $c_2$        $c_3$        $c_4$

Feedback

$c_1$        $c_2$        $c_3$        $c_4$

UE —— | Encoder | $e_1$ | Encoder | $e_2$ | Encoder | $e_3$ | Encoder | $e_4$ ...

Network state reset
(initialization)   $H_1$        $H_2$        $H_3$        $H_4$

FIG. 5

FIG. 6

FIG. 7

| Decoding apparatus (for example, base station) | Encoding apparatus (for example, UE) |
|---|---|

S201: Send fifth information, where the fifth information indicates the encoding apparatus to receive first information with a delay of k feedback periodicities after sending feedback information

S202: Send second feedback information $c_t$, where the second feedback information $c_t$ is feedback information that is output after second channel information $H_t$ and state information $e_{t-1}$ that is obtained by the encoding apparatus last time are input into an encoder for processing

S203: Send the first information, where the first information includes or indicates a step size m of state information rollback, and the first information is for determining historical state information $e_{his}$ of the encoding apparatus

S204: Input, based on the first information, the historical state information $e_{his}$ of the encoding apparatus and first channel information $H_q$ into the encoder for processing, to obtain first feedback information $c_q$, where the historical state information $e_{his}$ reflects one or more pieces of historical channel information obtained before the first channel information $H_q$ is obtained

S205: Send the first feedback information $c_q$, where the first feedback information $c_q$ includes encoding information of the first channel information $H_q$ or encoding information of predicted channel information

S206: Input the first feedback information $c_q$ and historical state information $d_{his}$ of the decoding apparatus into a decoder for processing, to obtain third channel information $H_q'$, where the historical state information $d_{his}$ reflects one or more pieces of historical feedback information obtained before the first feedback information $c_q$ is obtained

FIG. 8

FIG. 9a

FIG. 9b

| Decoding apparatus (for example, base station) | Encoding apparatus (for example, UE) |
|---|---|

S301: Send fifth information, where the fifth information indicates the encoding apparatus to receive first information with a delay of k feedback periodicities after sending feedback information

S302: Send second information, where the second information indicates one or more of the following: whether the encoding apparatus performs periodic storage, a storage periodicity, or a start moment of the storage periodicity

S303: Periodically store, based on an indication of the second information, state information output by an encoder

S304: Send second feedback information $c_t$, where the second feedback information $c_t$ is feedback information that is output after second channel information $H_t$ and state information $e_{t-1}$ that is obtained by the encoding apparatus last time are input into the encoder for processing

S305: Send the first information, where the first information is for determining historical state information $e_{his}$ of the encoding apparatus

S306: Input, based on the first information, the historical state information $e_{his}$ of the encoding apparatus and first channel information $H_{t+k}$ into the encoder for processing, to obtain first feedback information $c_{t+k}$, where the historical state information $e_{his}$ reflects one or more pieces of historical channel information obtained before the first channel information $H_{t+k}$ is obtained

S307: Send the first feedback information $c_{t+k}$, where the first feedback information $c_{t+k}$ includes encoding information of the first channel information $H_{t+k}$ or encoding information of predicted channel information

S308: Input the first feedback information $c_{t+k}$ and historical state information $d_{his}$ of the decoding apparatus into a decoder for processing, to obtain third channel information $H_{t+k}'$, where the historical state information $d_{his}$ reflects one or more pieces of historical feedback information obtained before the first feedback information $c_{t+k}$ is obtained

FIG. 10

FIG. 11a

FIG. 11b

| Decoding apparatus (for example, base station) | Encoding apparatus (for example, UE) |
|---|---|

S401: Send fifth information, where the fifth information indicates the encoding apparatus to receive first information with a delay of k feedback periodicities after sending feedback information

S402: Send second feedback information $c_t$, where the second feedback information $c_t$ is feedback information that is output after second channel information $H_t$ and historical state information $e_{his}$ are input into an encoder for processing

S403: Send the first information, where the first information is for determining the historical state information $e_{his}$ of the encoding apparatus

S404: Input, based on the first information, the historical state information $e_{his}$ of the encoding apparatus and first channel information $H_{t+k}$ into the encoder for processing, to obtain first feedback information $c_{t+k}$, where the historical state information $e_{his}$ reflects one or more pieces of historical channel information obtained before the first channel information $H_{t+k}$ is obtained

S405: Send the first feedback information $c_{t+k}$, where the first feedback information $c_{t+k}$ includes encoding information of the first channel information $H_{t+k}$ or encoding information of predicted channel information

S406: Input the first feedback information $c_{t+k}$ and historical state information $d_{his}$ of the decoding apparatus into a decoder for processing, to obtain third channel information $H_{t+k}'$, where the historical state information $d_{his}$ reflects one or more pieces of historical feedback information obtained before the first feedback information $c_{t+k}$ is obtained

FIG. 12

Network state
reset
(initialization)

H₁′

Decoding
apparatus

Decoder

d₁

{d_his=d₁}

H₃′

Decoder

d₃

{d_his=d₃}
H₄′

Decoder

d₄

...

d_his

d_his

c₁

Feedback

First
information

c₃

First
information

c₄

c₁

c₂

c₃

c₄

Encoding
apparatus

Encoder

e₁

Encoder

e₂

Encoder

e₃

Encoder

e₄

...

e_his

e_his

e_his

Network state
reset
(initialization)

H₁

H₂
{e_his=e₁}

H₃

H₄
{e_his=e₃}

FIG. 13

| Decoding apparatus (for example, base station) | | Encoding apparatus (for example, UE) |
|---|---|---|

S501: Send fifth information, where the fifth information indicates the encoding apparatus to receive first information with a delay of k feedback periodicities after sending feedback information

S502: Send fourth information before a $t^{th}$ feedback time period, where the fourth information indicates the encoding apparatus to store state information that is obtained in a feedback time period previous to the $t^{th}$ feedback time period

S503: Store, based on an indication of the fourth information, the state information obtained by the encoding apparatus in the feedback time period previous to the $t^{th}$ feedback time period

S504: Send second feedback information $c_t$, where the second feedback information $c_t$ is feedback information that is output after second channel information $H_t$ and state information $e_{t-1}$ that is obtained by the encoding apparatus last time are input into an encoder for processing

S505: Send the first information, where the first information is for determining historical state information $e_{his}$ of the encoding apparatus

S506: Input, based on the first information, the historical state information $e_{his}$ of the encoding apparatus and first channel information $H_{t+1}$ into the encoder for processing, to obtain first feedback information $c_{t+1}$, where the historical state information $e_{his}$ reflects one or more pieces of historical channel information obtained before the first channel information $H_{t+1}$ is obtained

S507: Send the first feedback information $c_{t+1}$, where the first feedback information $c_{t+1}$ includes encoding information of the first channel information $H_{t+1}$ or encoding information of predicted channel information

S508: Input the first feedback information $c_{t+1}$ and historical state information $d_{his}$ of the decoding apparatus into a decoder for processing, to obtain third channel information $H_{t+1}'$, where the historical state information $d_{his}$ reflects one or more pieces of historical feedback information obtained before the first feedback information $c_{t+1}$ is obtained

FIG. 14

Network state
reset
(initialization)

$\{d_1\}$

$H_1'$        $H_2'$        $H_3'$        $H_5'$

Decoding
apparatus

Decoder  $d_1$  Decoder  $d_2$  Decoder  $d_3$        Decoder  $d_5$  ...

$\{d_3\}$

$c_1$        $c_2$        $c_3$        $d_{his}=d_3$  $c_5$

Feedback    Fourth
information    Fourth
information    A network
state is rolled
back to $d_{his}$

$c_1$        $c_2$        $c_3$        $c_4$        $c_5$

Encoding
apparatus

Encoder  $e_1$  Encoder  $e_2$  Encoder  $e_3$  Encoder  $e_4$  Encoder  $e_5$  ...

Network state
reset
(initialization)

$H_1$        $H_2$        $H_3$        $H_4$  $e_{his}=e_3$  $H_5$

$\{e_1\}$        $\{e_3\}$ A network
state is rolled
back to $e_{his}$

FIG. 15

64

| Decoding apparatus (for example, base station) | Encoding apparatus (for example, UE) |
|---|---|

S601: Send fifth information, where the fifth information indicates the encoding apparatus to receive first information with a delay of k feedback periodicities after sending feedback information

S602: Send second feedback information $c_{t-1}$, where the second feedback information $c_{t-1}$ is feedback information that is output after second channel information $H_{t-1}$ and state information $e_{t-2}$ obtained by the encoding apparatus last time are input into an encoder for processing

S603: Send fourth information before a $t^{th}$ feedback time period, where the fourth information indicates the encoding apparatus to store state information obtained in a feedback time period previous to the $t^{th}$ feedback time period

S604: Temporarily store, based on an indication of the fourth information, the state information $e_{t-1}$ obtained by the encoding apparatus in the feedback time period previous to the $t^{th}$ feedback time period

S605: Send third information, where the third information indicates the encoding apparatus to store state information temporarily stored after the fourth information is received, or the third information indicates the encoding apparatus to store state information stored when a previous piece of third information is received

S606: Store corresponding state information based on an indication of the third information

S607: Send the first information, where the first information is for determining historical state information $e_{his}$ of the encoding apparatus

S608: Input, based on the first information, the historical state information $e_{his}$ of the encoding apparatus and first channel information $H_{t+k-1}$ into the encoder for processing, to obtain first feedback information $c_{t+k-1}$, where the historical state information $e_{his}$ reflects one or more pieces of historical channel information obtained before the first channel information $H_{t+k-1}$ is obtained

S609: The encoding apparatus (for example, the UE) sends the first feedback information $c_{t+k-1}$ to the decoding apparatus (for example, the base station), where the first feedback information $c_{t+k-1}$ includes encoding information of the first channel information $H_{t+k-1}$ or encoding information of predicted channel information

S610: Input the first feedback information $c_{t+k-1}$ and historical state information $d_{his}$ of the decoding apparatus into a decoder for processing, to obtain third channel information $H_{t+k-1}'$, where the historical state information $d_{his}$ reflects one or more pieces of historical feedback information obtained before the first feedback information $c_{t+k-1}$ is obtained

FIG. 16

FIG. 17

FIG. 18

FIG. 19

FIG. 20

## INTERNATIONAL SEARCH REPORT

| International application No. |
|---|
| **PCT/CN2024/075449** |

**A.    CLASSIFICATION OF SUBJECT MATTER**

H04L 1/00(2006.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, CNKI: 历史, 状态, 反馈, 信道状态, 预测, 编码, 人工智能, 恢复, 解码, AI, CSI, channel, state, information, feedback, historical, predict, encode

**C.    DOCUMENTS CONSIDERED TO BE RELEVANT**

| Category* | Citation of document, with indication, where appropriate, of the relevant passages | Relevant to claim No. |
|---|---|---|
| X | CN 102447502 A (NEC (CHINA) CO., LTD.) 09 May 2012 (2012-05-09) description, paragraphs 49-86 | 1-42 |
| A | CN 112054831 A (HUAWEI TECHNOLOGIES CO., LTD.) 08 December 2020 (2020-12-08) entire document | 1-42 |
| A | CN 115668796 A (QUALCOMM INC.) 31 January 2023 (2023-01-31) entire document | 1-42 |
| A | WO 2013034202 A1 (TELEFONAKTIEBOLAGET L M ERICSSON (PUBL)) 14 March 2013 (2013-03-14) entire document | 1-42 |
| A | WO 2023283785 A1 (GUANGDONG OPPO MOBILE TELECOMMUNICATIONS CORP., LTD.) 19 January 2023 (2023-01-19) entire document | 1-42 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **18 April 2024** | **24 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 102447502 | A | 09 May 2012 | US | 2012082198 | A1 | 05 April 2012 |
| | | | | JP | 2012080522 | A | 19 April 2012 |
| CN | 112054831 | A | 08 December 2020 | | None | | |
| CN | 115668796 | A | 31 January 2023 | WO | 2021221963 | A1 | 04 November 2021 |
| | | | | US | 2021345399 | A1 | 04 November 2021 |
| | | | | EP | 4144025 | A1 | 08 March 2023 |
| WO | 2013034202 | A1 | 14 March 2013 | EP | 2754256 | A1 | 16 July 2014 |
| WO | 2023283785 | A1 | 19 January 2023 | CN | 116982300 | A | 31 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310128738